# EUROPEAN PATENT SPECIFICATION

(11) **EP 1 358 392 B1**
(45) Date of publication and mention of the grant of the patent: **22.02.2012**
(21) Application number: 01961763.8
(22) Date of filing: 27.07.2001
(51) Int. Cl.: B62K 19/02, B62K 19/16, E01F 9/011, E04C 3/08, E04C 3/28, E04C 3/36, E04H 12/02, E04H 12/10, B29C 53/58, B29C 53/82, A45F 3/04

(54) **ISO-TRUSS STRUCTURE**
ISO-TRÄGERSTRUKTUR
STRUCTURE A TREILLIS ISOMETRIQUE

(30) Priority: 28.07.2000 US 221445 P
(43) Date of publication of application: 05.11.2003
(73) Proprietor: Hall, David R., Provo UT 84604 (US)
(72) Inventor: JENSEN, David, W., Mapleton, UT 84664 (US); FRANCOM, Larry, R., Helper, UT 84528 (US)
(74) Representative: Walker, Ross Thomson
(86) International application number: PCT/US2001/023636
(87) International publication number: WO 2002/010535

(56) References cited:
- GB-A- 2 164 674
- US-A- 31 777
- US-A- 1 465 307
- US-A- 1 798 064
- US-A- 1 798 064
- US-A- 3 062 336
- US-A- 3 496 687
- US-A- 3 798 864
- US-A- 4 077 828
- US-A- 4 137 354
- US-A- 4 253 284
- US-A- 4 475 323
- US-A- 4 475 323
- US-A- 5 003 736
- US-A- 5 197 254
- US-A- 5 846 364
- US-A- 5 921 048

## Description

### BACKGROUND OF THE INVENTION

### 1. The Field of the Invention.

The present invention relates generally to a three-dimensional structural member which is strong and light-weight. More particularly, the present invention relates to a structural member having a plurality of helical components wrapped about an axis, each having straight segments connected end-to-end in a helical configuration.

### 2. The Background Art.

The pursuit of structurally efficient structures in the civil, mechanical, aerospace and sports arenas is an ongoing quest. An efficient truss structure is one that has a high strength to weight ratio and/or a high stiffness to weight ratio. An efficient truss structure can also be described as one that is relatively inexpensive, easy to fabricate and assemble, and does not waste material.

Trusses are typically stationary, fully constrained structures designed to support loads. They consist of straight members connected at joints at the end of each member. The members are two-force members with forces directed along the member. Two-force members can only produce axial forces such as tension and compression forces in the member. Trusses are often used in the construction of bridges and buildings. Trusses are designed to carry loads which act in the plane of the truss. Therefore, trusses are often treated, and analyzed, as two-dimensional structures. The simplest two-dimensional truss consists of three members joined at their ends to form a triangle. By consecutively adding two members to the simple structure and a new joint, larger structures may be obtained.

The simplest three-dimensional truss consists of six members joined at their ends to form a tetrahedron. By consecutively adding three members to the tetrahedron and a new joint, larger structures may be obtained. This three dimensional structure is known as a space truss.

Frames, as opposed to trusses, are also typically stationary, fully constrained structures, but have at least one multi-force member with a force that is not directed along the member. Machines are structures containing moving parts and are designed to transmit and modify forces. Machines, like frames, contain at least one multi-force member. A multi-force member can produce not only tension and compression forces, but shear and bending as well.

Traditional structural designs have been limited to one or two-dimensional analyses resisting a single load type. For example, I-beams are optimized to resist bending and tubes are optimized to resist torsion. Limiting the design analysis to two dimensions simplifiers the design process but neglects combined loading. Three-dimensional analysis is difficult because of the difficulty in conceptualizing and calculating three-dimensional loads and structures. In reality, many structures must be able to resist multiple loadings. Computers are now being utilized to model more complex structures.

US5921048 discloses a three-dimensional iso-truss structure having helical components arranged to form triangles when viewed along a longitudinal axis. US 5846364 discloses a structural member according to the preamble of claim 1.

### SUMMARY OF THE INVENTION

It has been recognized that it would be advantageous to develop a structural member with enhanced performance characteristics, such a strength, reduced weight, etc.

The invention provides a three-dimensional structure or structural member according to claim 1. The structural member includes: 1) at least two, spaced apart, helical components, and 2) at least one reverse helical component attached to the two helical components. The helical and reverse helical, components have a common longitudinal axis, but opposing angular orientations about the axis.

In addition, each helical and reverse helical component advantageously includes at least four elongate, straight segments rigidly connected end-to-end in a helical configuration forming a single, substantially complete rotation about the axis. Thus, the helical and reverse helical components form a first square-shaped cross section. In one aspect, the structure includes four helical components and four reverse helical components.

In addition, the iso-truss structure includes 1) rotated helical components, and 2) rotated reverse helical components, similar to, but rotated with, respect to, the helical and reverse helical components above, Thus, the rotated helical and rotated reverse helical components form a second square-shaped cross section, rotated with respect to the first. In one aspect, the structure includes four rotated helical components and four rotated reverse helical components, for a total of sixteen helical components.

The various helical components intersect at external nodes and internal nodes. In one aspect, the components form eight internal and eight external nodes. Longitudinal or axial components may extend parallel to the axis and intersect the internal and/or external nodes. In one aspect, the structure includes eight external nodes. It has been found that such an eight node structure has unexpected structural or performance characteristics.

In accordance with one aspect of the present invention, the structure can further include an end plate attached at an end of the helical components to attach the helical components to another object. In one aspect, the helical components may be formed of continuous strands of fiber, which may be wound around the end plate. The end plate can include a perimeter with a plurality of indentations to receive the strands of fiber.

In accordance with another aspect of the present invention, the structure can further include a connector member attached to the helical components and segments to attach other objects to the helical components and segments. The connector member can include a triangular cross-sectional shape extending through triangular openings formed by the components.

In accordance with another aspect of the present invention, the helical and reverse helical components may form an angle therebetween greater than approximately 60 degrees. It has been found that such angles have unexpected structural or performance characteristics.

In accordance with another aspect of the present invention, the helical and reverse helical members can be axially and/or laterally flexible, but torsionally stiff. The structure may bend between a first, straight position in which the axes are substantially straight; and a second, arcuate position in which the axes are substantially arcuate. In addition, the structure may compress and/or expand longitudinally. In either case, the structure may store energy, and thus be utilized as a spring member.

In accordance with another aspect of the present invention, the structure may be arcuate, and the components may be formed about an arcuate axis. Thus, the arcuate structure may form more complex shapes than a singular, linear structure, and may be better suited for certain applications.

In accordance with another aspect of the present invention, the structure may taper. The segments of each helical component may sequentially reduce in length along the axes such that the structural member tapers. Thus, the tapering structure may form more complex shapes than a singular, linear structure, and may be better suited for certain applications.

In accordance with another aspect of the present invention, the iso-truss structure may be utilized to hold signs, utility lines, or lights. The iso-truss structure further may be utilized for bicycle frames, aircraft and marine structures, etc.

A method for forming an iso-truss structure in accordance with claim 24 of the present invention includes wrapping a fiber around a mandrel in order to create the two helical components and the reverse helical component. A matrix or resin can be added to the fiber and cured. The mandrel may be removed from the structure.

The mandrel may include a plurality of heads disposed thereon to receive and hold fiber. The mandrel may be a collapsible or dissolvable mandrel.

Additional features and advantages of the invention will be set forth in the detailed description which follows, taken in conjunction with the accompanying drawings, which together illustrate by way of example, the features of the invention.

### BRIEF DESCRIPTION OF THE DRAWINGS

FIG. 1 is a perspective view of an iso-truss structure in accordance with the present invention;
FIG. 2 is a side view of the iso-truss structure of FIG. 1;
FIG. 3 is a partial perspective view of the iso-truss structure of FIG. 1;
FIG. 4 is an end view of the iso-truss structure of FIG. 1;
FIGs. 5a-5t are partial perspective views of the iso-truss structure of FIG. 1 showing helical components of the present invention;
FIG. 6 is a perspective view of another iso-truss structure in accordance with the present invention;
FIG. 7 is a side view of the iso-truss structure of FIG. 6;
FIG. 8 is an end view of the iso-truss structure of FIG. 6;
FIGs. 9a and 9b are graphs demonstrating performance of iso-truss structures in accordance with the present invention;
FIG. 10a is an end view of the iso-truss structure of FIG. 1;
FIG. 10b is a side view of the iso-truss structure of FIG. 1;
FIG. 10c is an end view of another iso-truss structure of FIG. 6;
FIG. 10d is a side view of another iso-truss structure of FIG. 6;
FIG. 10e is an end view of another iso-truss structure;
FIG. 10f is a side view of another iso-truss structure of FIG. 10e;
FIG. 11a is an end view of a prior art iso-truss structure;
FIG. 11b is a side view of the iso-truss structure of FIG. 11a;
FIG. 11c is an end view of a prior art iso-truss structure;
FIG. 11d is a side view of the iso-truss structure of FIG. 11c;
FIG. 11e is an end view of a prior art iso-truss structure;
FIG. 11f is a side view of the iso-truss structure of FIG. 11e;
FIG. 12a is a perspective view of an end plate in accordance with the present invention;
FIG. 12b is an end view of the end plate of FIG. 10a;
FIG. 13 is an end view of an angled plate of the present invention;
FIG. 14a is a top view of another end plate;
FIG. 14b is a cross-sectional side view of the end plate of FIG. 14a;
FIG. 14c is a partial cross-sectional view of the end plate of FIG. 14a;
FIG. 15 is a side view of another end plate in accordance with the present invention secured to an iso-truss structure;
FIG. 16 is a top view of the end plate of FIG. 15;
FIG. 17a is a perspective view of an end connection in accordance with the present invention;
FIG. 17b is a top view of the end connection of FIG. 17a with an iso-truss structure;
FIG. 18a is a perspective view of an end connection in accordance with the present invention;
FIG. 18b is a bottom view of the end connection of FIG. 18a with an iso-truss structure;
FIG. 19a is a perspective view of an end connection in accordance with the present invention;
FIG. 19b is a bottom view of the end connection of FIG. 19a with an iso-truss structure;
FIG. 20a is a perspective view of an end connection in accordance with the present invention with an iso-truss structure;
FIG. 20b is a side view of the end connection of FIG. 20a;
FIG. 21a is a perspective view of an end connection in accordance with the present invention with an iso-truss structure;

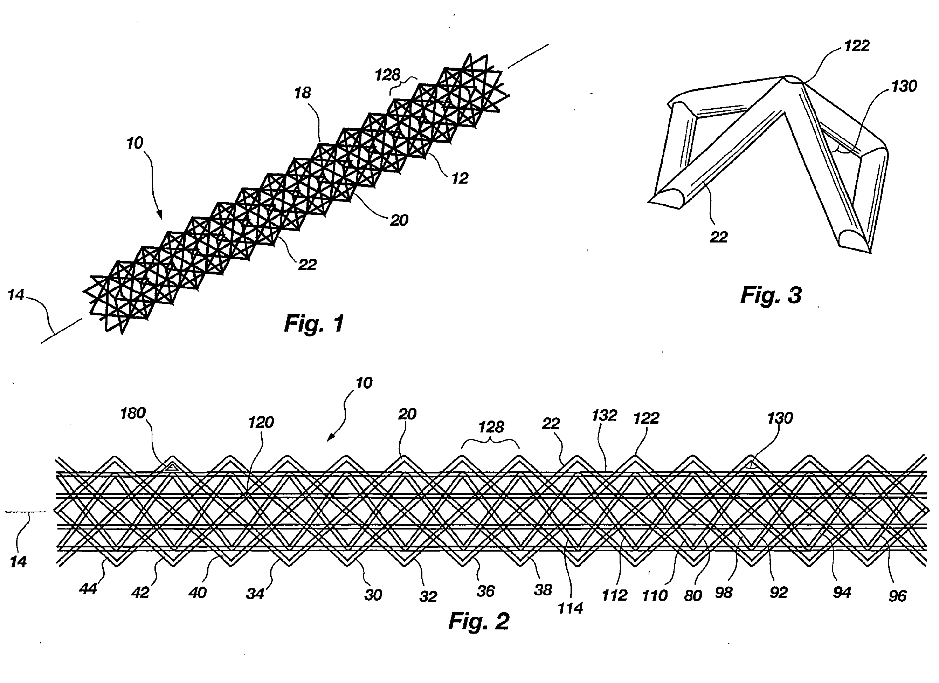

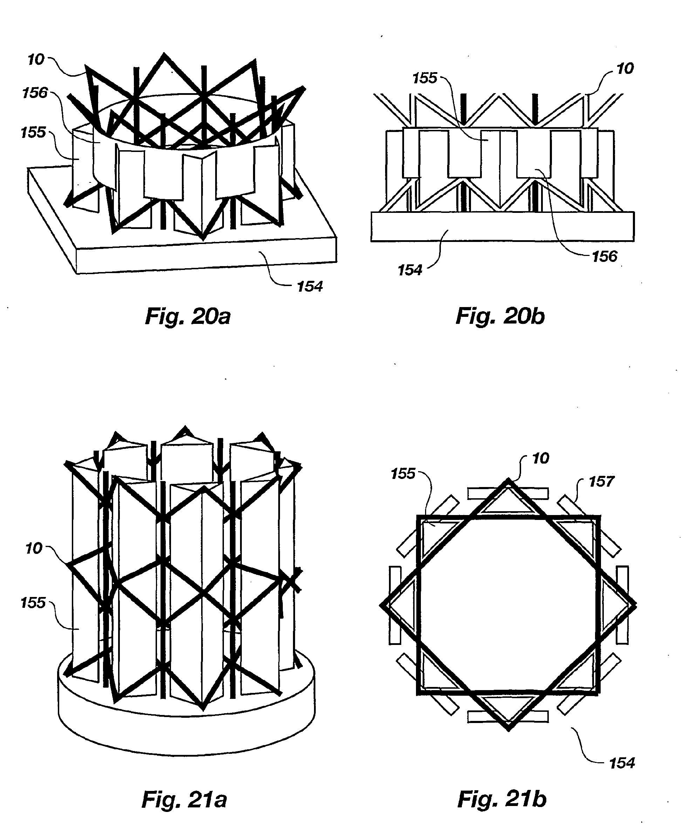

FIG. 2 1 b is a top view of the end connection of FIG. 21a;

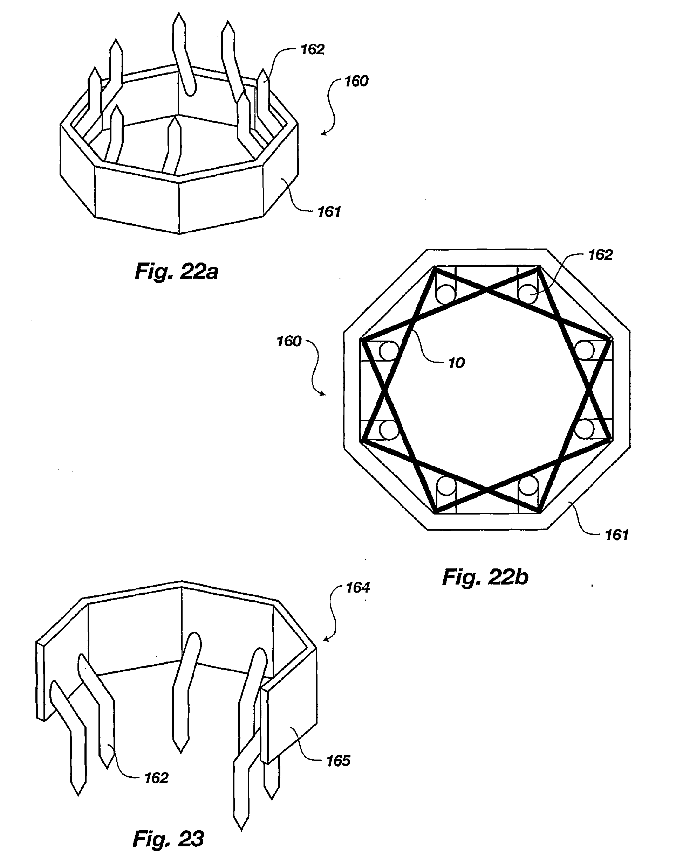

FIG. 22a is a perspective view of an end connection in accordance with the present invention;
FIG. 22b is a top view of the end connection of FIG. 22a;
FIG. 23 is a perspective view of a connection in accordance with the present invention;

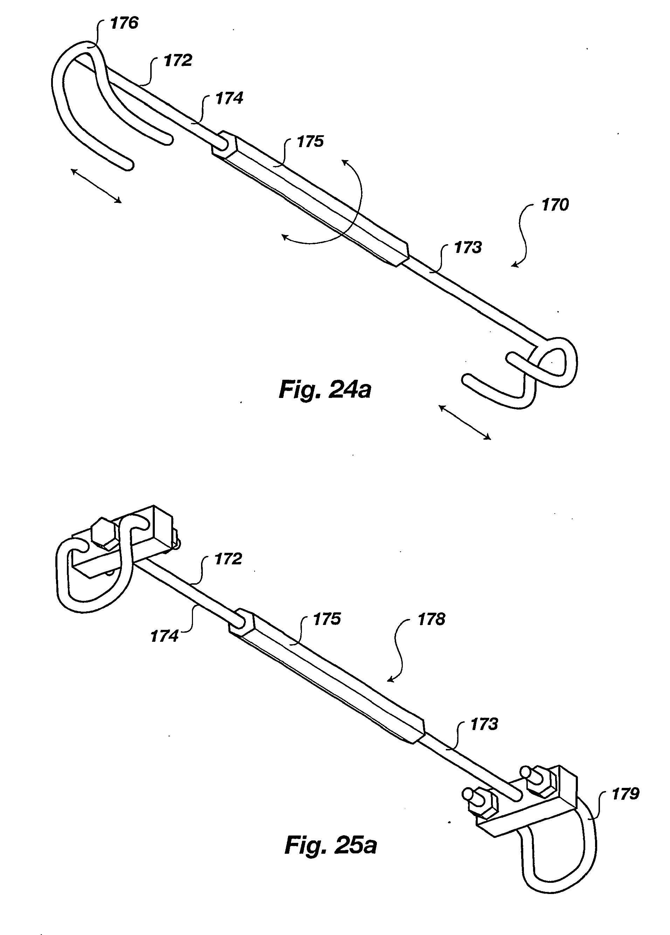

FIG. 24a is a perspective view of a connection in accordance with the present invention;

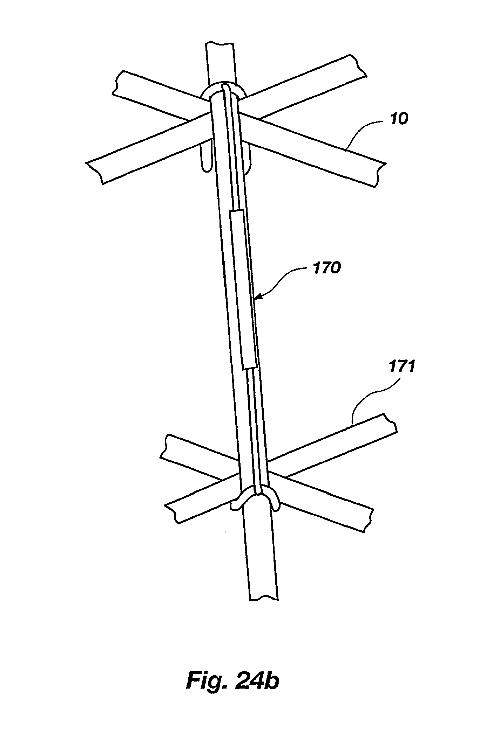

FIG. 24b is a partial perspective view of the connection of FIG. 24a attaching two iso-truss structures;
FIG. 25a is a perspective view of another connection in accordance with the present invention;

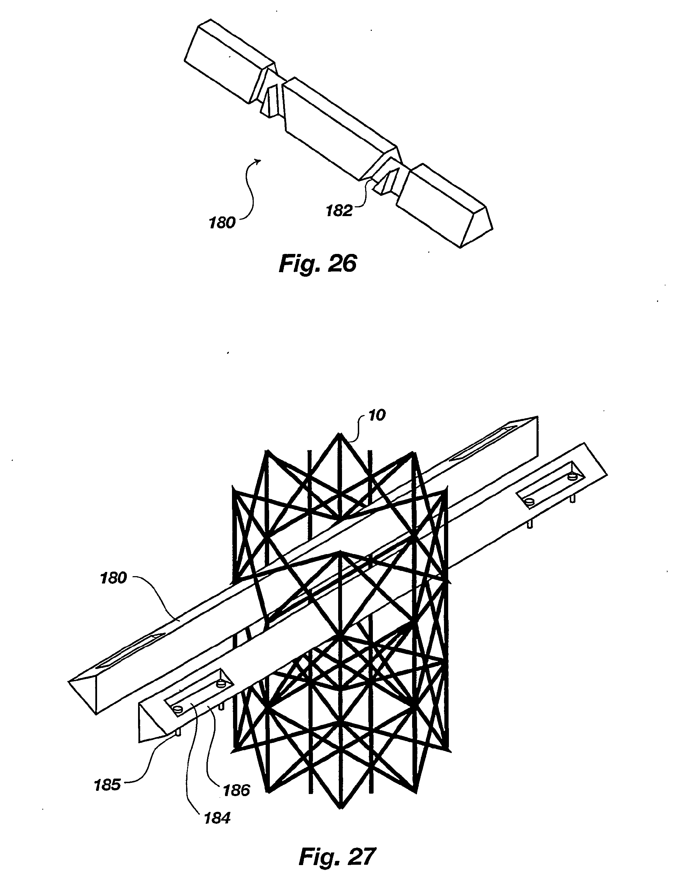

FIG. 26 is a perspective view of an attachment member in accordance with the present invention;
FIG. 27 is a perspective view of an iso-truss structure with an attachment member of FIG. 26;

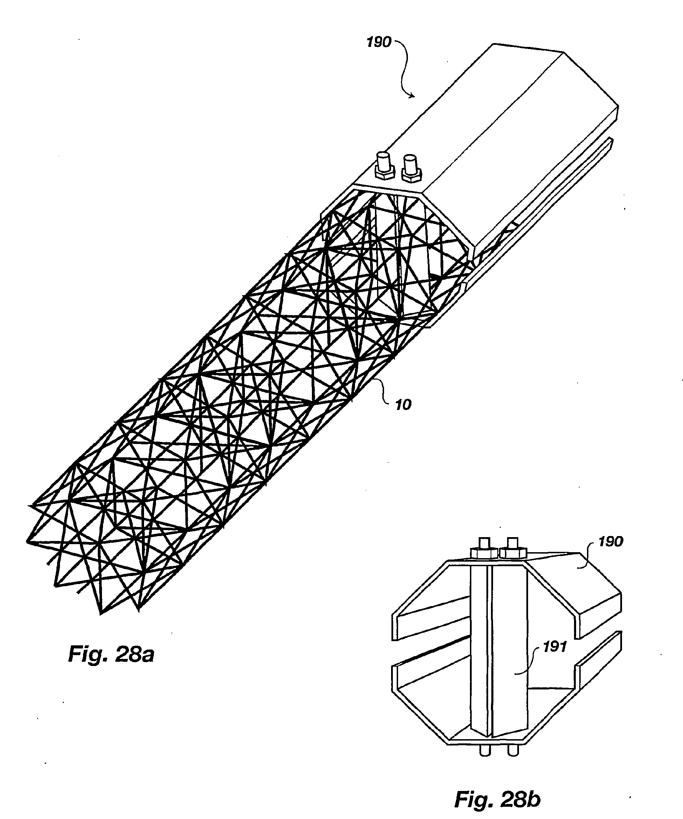

FIG. 28a is a perspective view of an iso-truss structure with an exterior shell in accordance with the present invention;
FIG. 28b is a perspective view of the exterior shell of FIG. 28a;

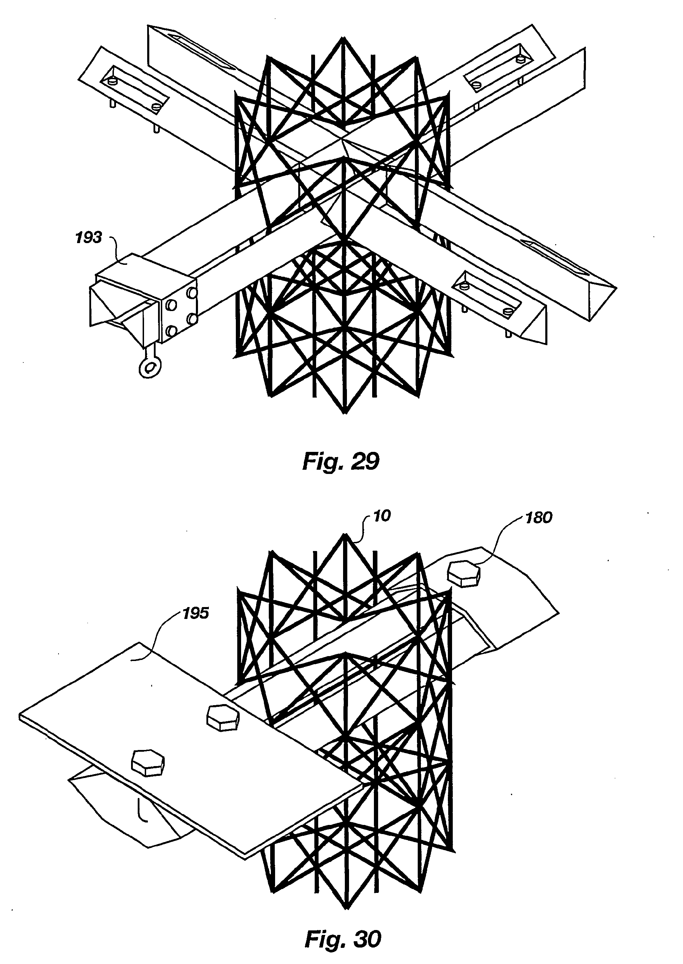

FIG. 29 is a perspective view of the attachment member of FIG. 26;
FIG. 30 is a perspective view of an iso-truss structure with attachment members supporting platforms;

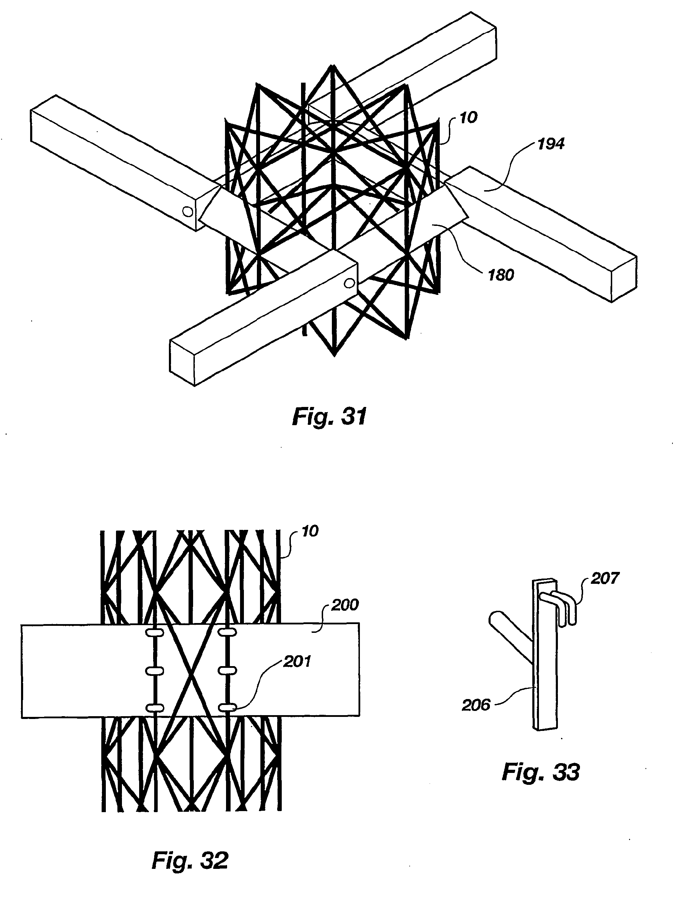

FIG. 31 is a perspective view of an iso-truss structure with another configuration of attachment members;
FIG. 32 is a side view of a flat member attached to an iso-truss structure in accordance with the present invention;
FIG. 33 is a perspective view of flat members attached to an iso-truss structure in accordance with the present invention;

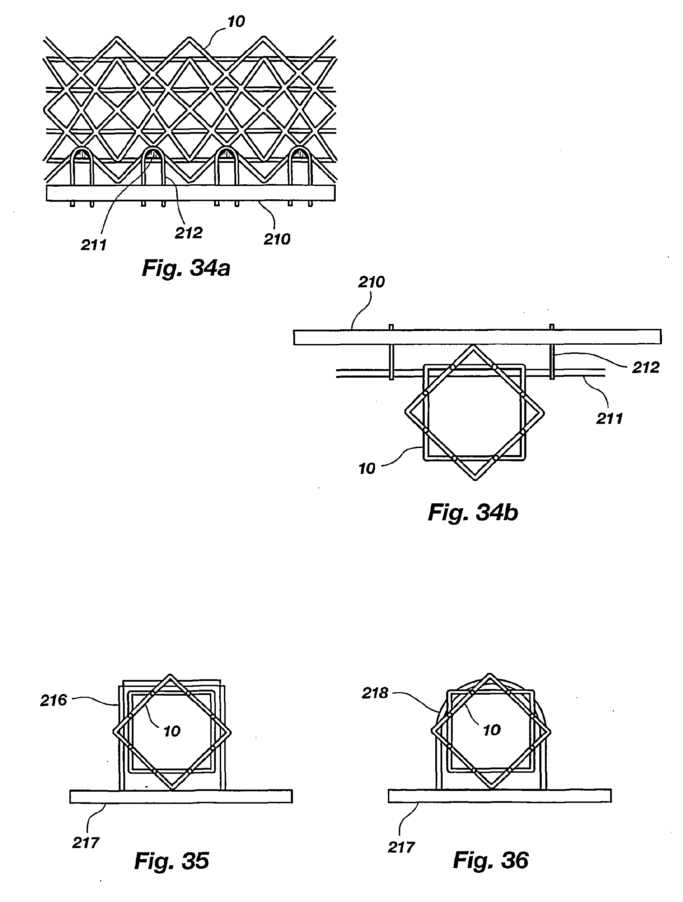

FIG. 34a is a side view of a flat member attached to an iso-truss structure in accordance with the present invention;
FIG. 34b is an end view of the flat member of FIG. 34a;
FIG. 35 is an end view of an attachment of a flat member to an iso-truss structure in accordance with the present invention;
FIG. 36 is an end view of an attachment of a flat member to an iso-truss structure in accordance with the present invention;

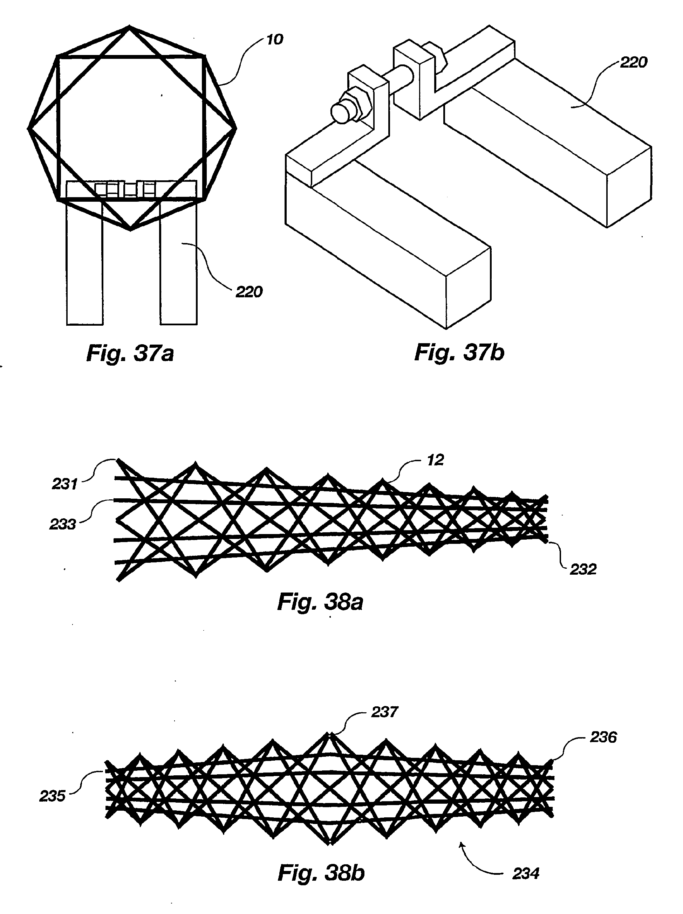

FIG. 37a is a top view of an attachment to an iso-truss structure in accordance with the present invention;
FIG. 37b is a perspective view of the attachment of FIG. 37a;
FIG. 38a is a side view of a tapering iso-truss structure of the present invention;
FIG. 38b is a side view of another tapering iso-truss structure of the present invention;

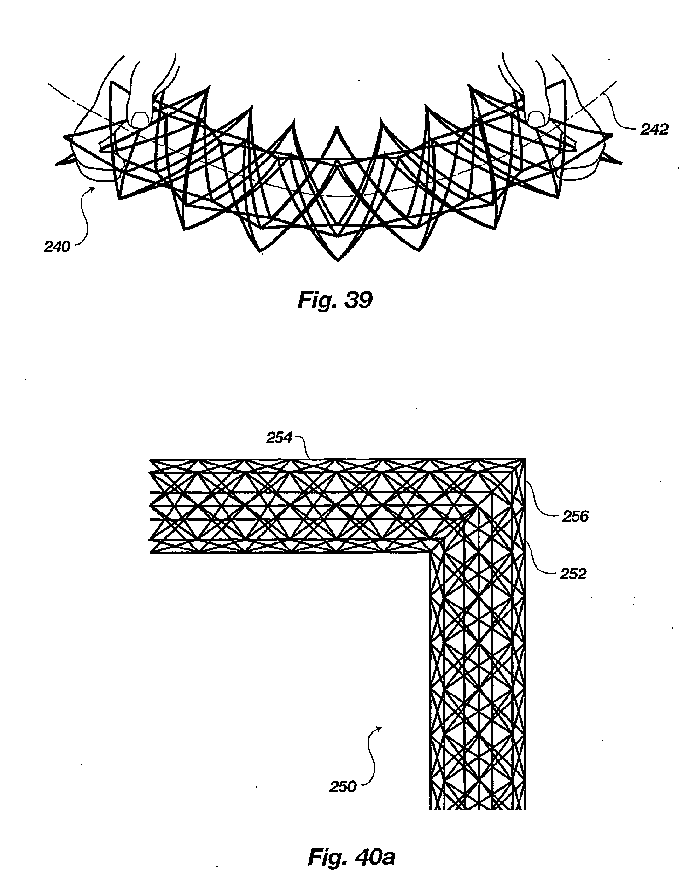

FIG. 39 is a side view of a flexible iso-truss structure of the present invention shown in a curved configuration;
FIG. 40a is a side view of an angled iso-truss structure in accordance with the present invention;

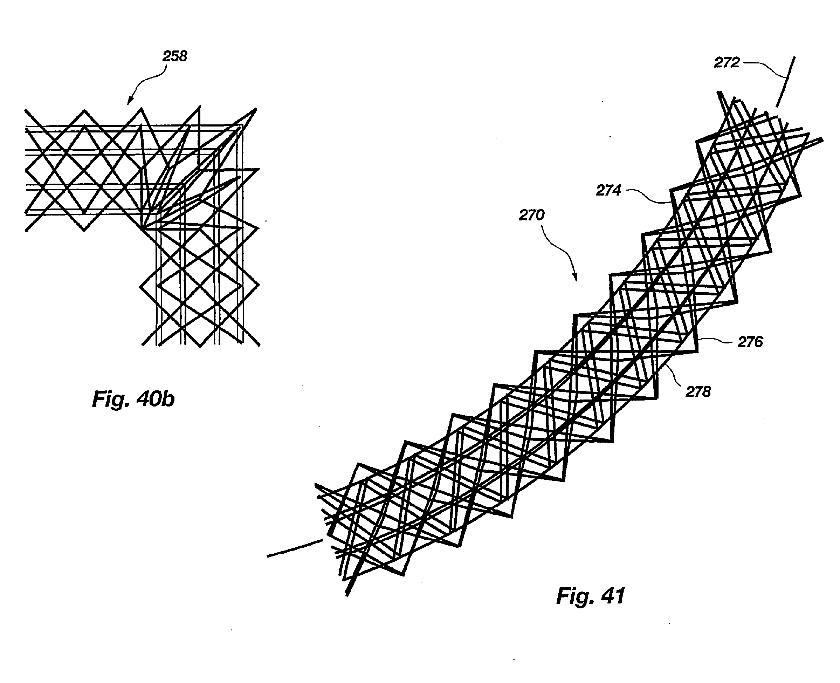

FIG. 40b is a side view of another angled iso-truss structure in accordance with the present invention;
FIG. 41 is a side view of a curved iso-truss structure in accordance with the present invention;

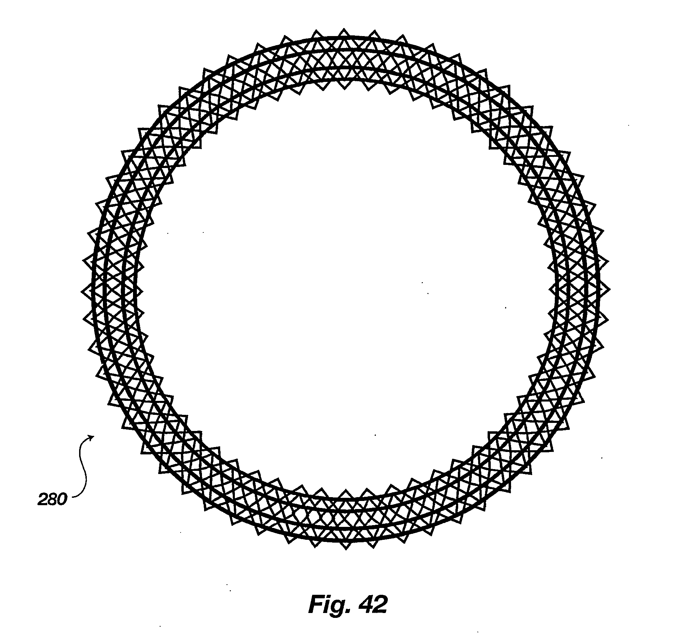

FIG. 42 is a side view of a circular iso-truss structure in accordance with the present invention;

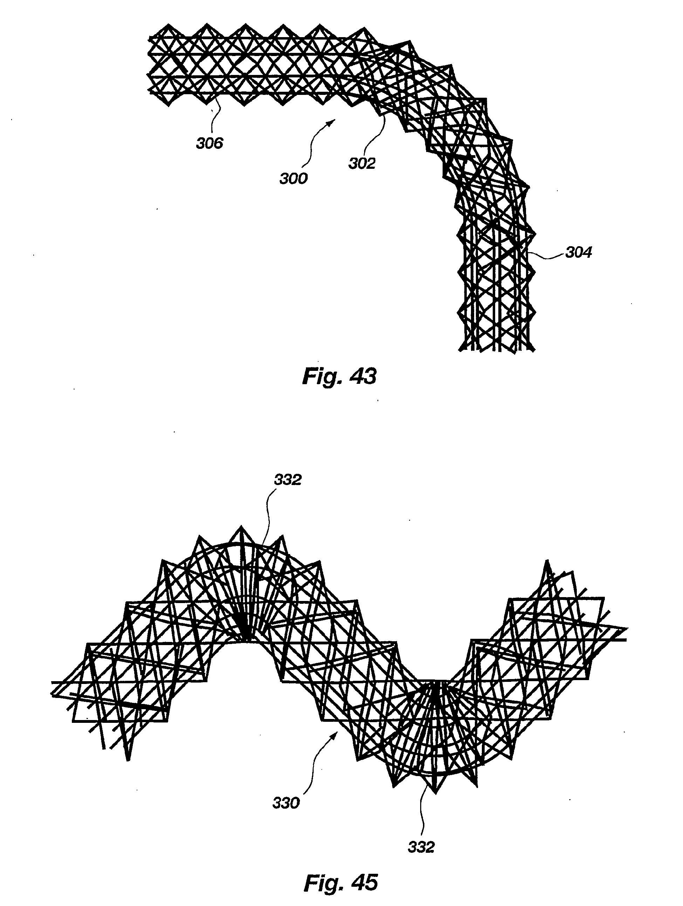

FIG. 43 is a side view of a curved angular iso-truss structure in accordance with the present invention;

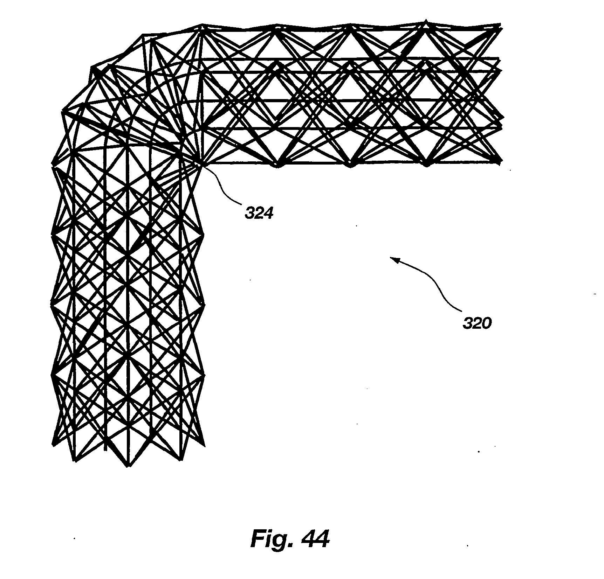

FIG. 44 is a side view of another curved angular iso-truss structure in accordance with the present invention;
FIG. 45 is a side view of another iso-truss structure in accordance with the present invention;

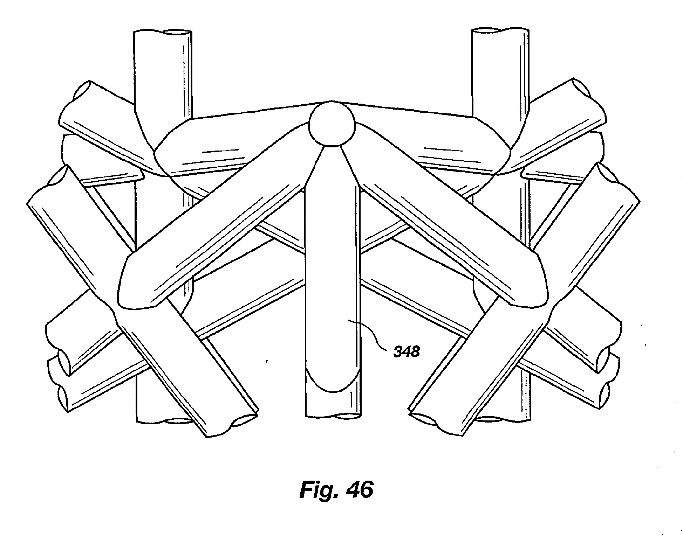

FIG. 46 is a detailed perspective view of a braided sock in accordance with the present invention;

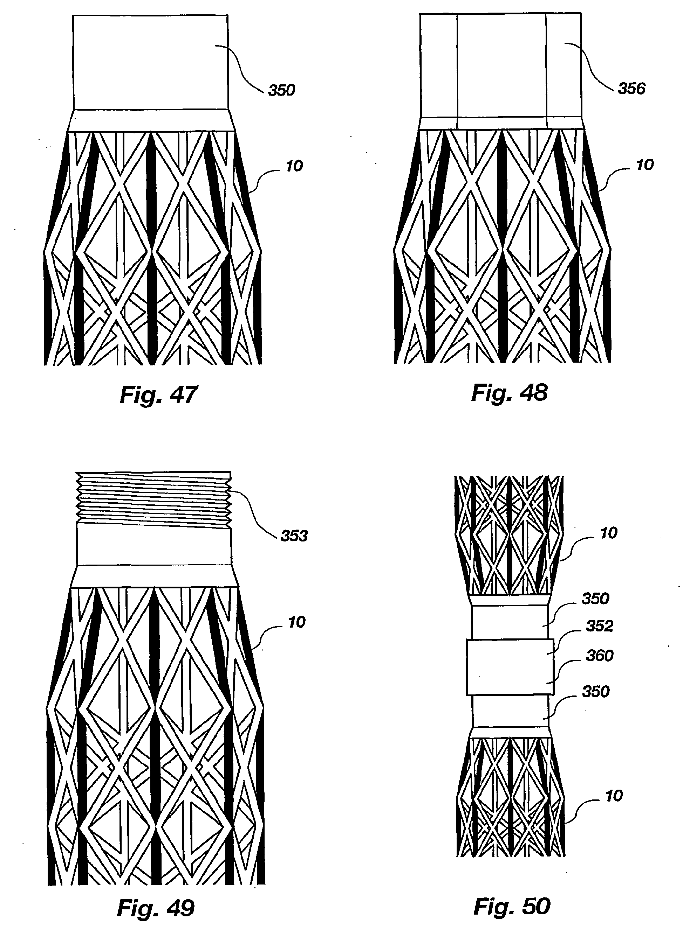

FIG. 47 is a side view of an integral connector in accordance with the present invention;
FIG. 48 is a side view of another integral connector in accordance with the present invention;
FIG. 49 is a side view of another integral connector in accordance with the present invention;

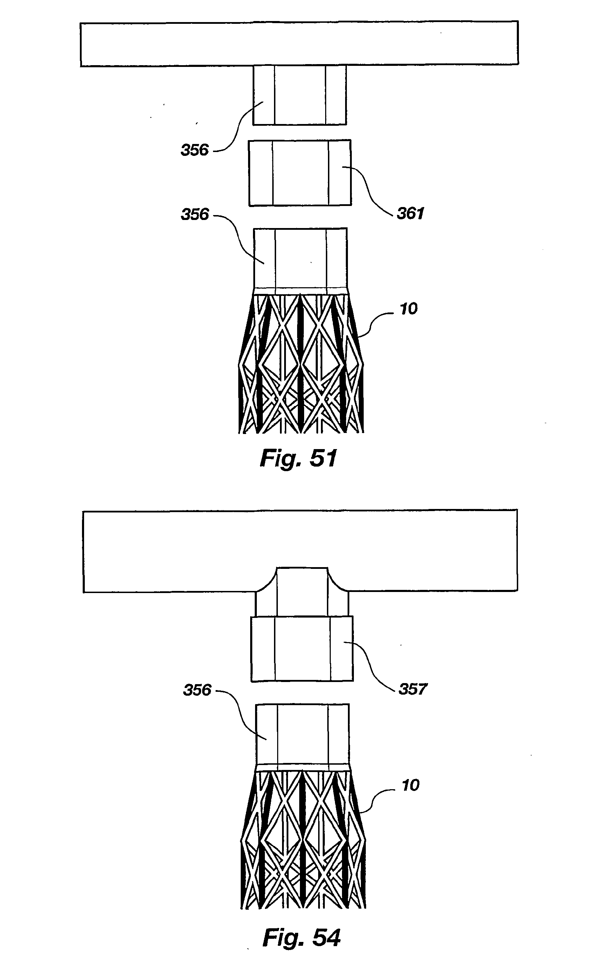

FIGs. 50 and 51 are side views of a union connector in accordance with the present invention;

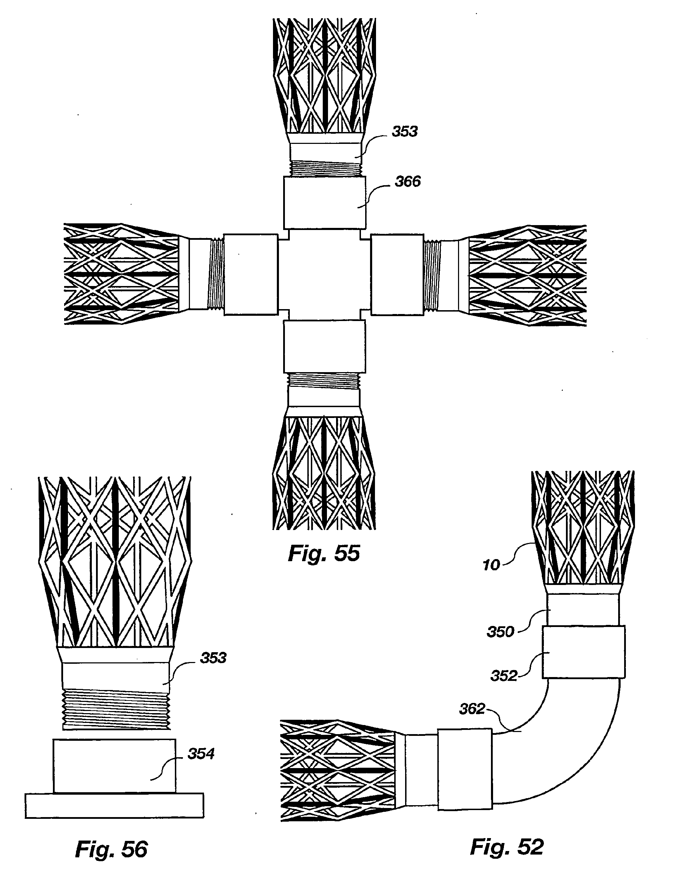

FIG. 52 is a side view of an elbow connector in accordance with the present invention;

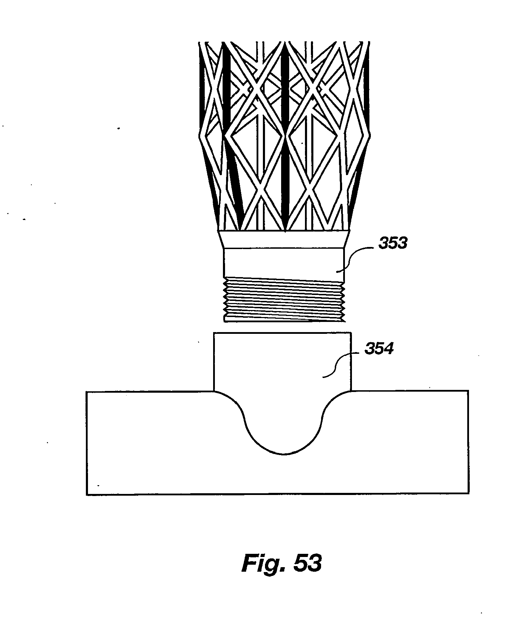

FIGs. 53 and 54 are side views of a tee connector in accordance with the present invention;
FIG. 55 is a side view of a cross connector in accordance with the present invention;
FIG. 56 is a side view of another connector in accordance with the present invention;

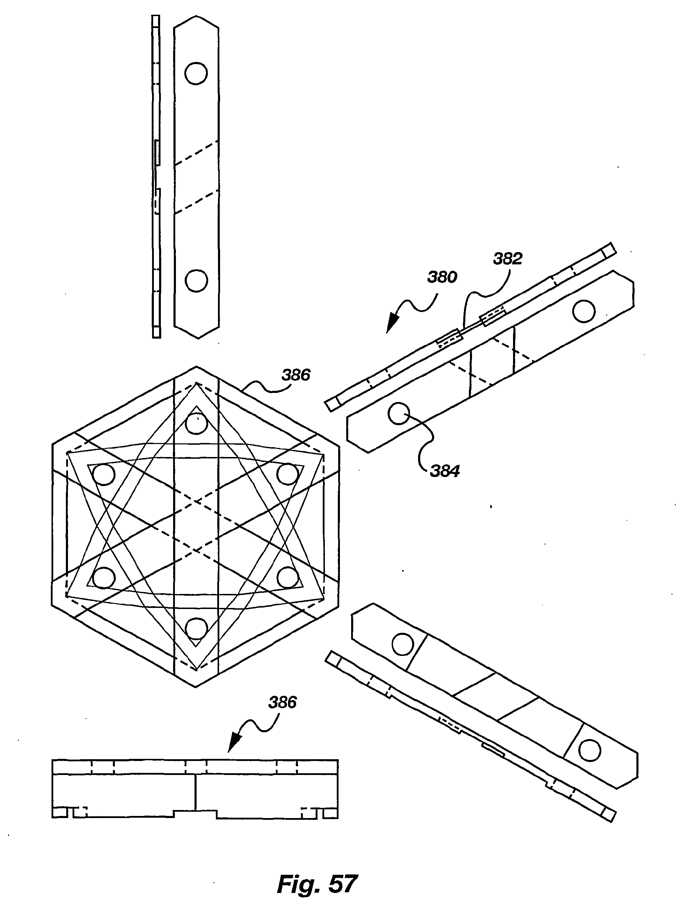

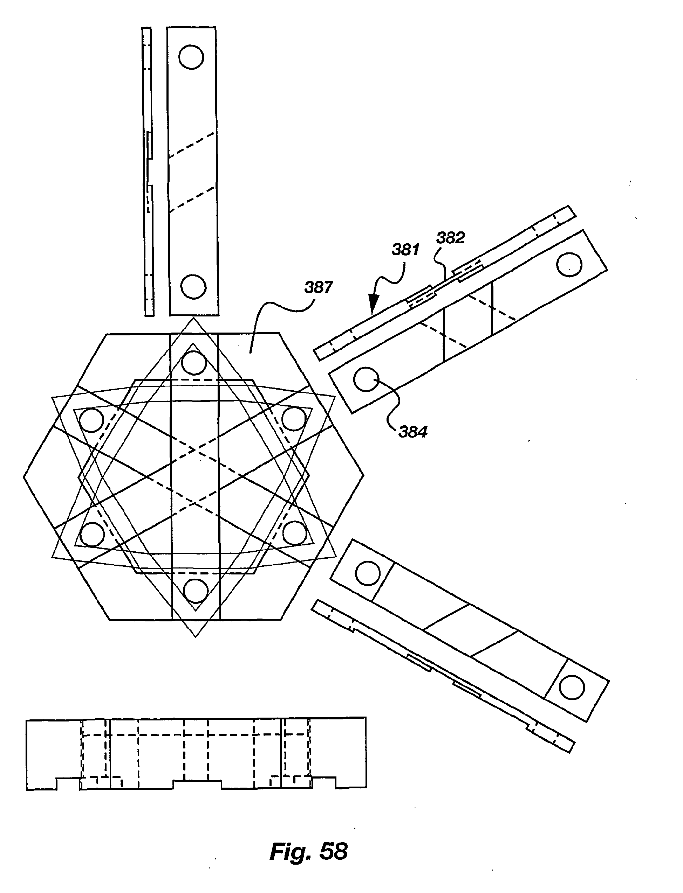

FIGs. 57 and 58 are schematic exploded views of other attachments in accordance with the present invention;

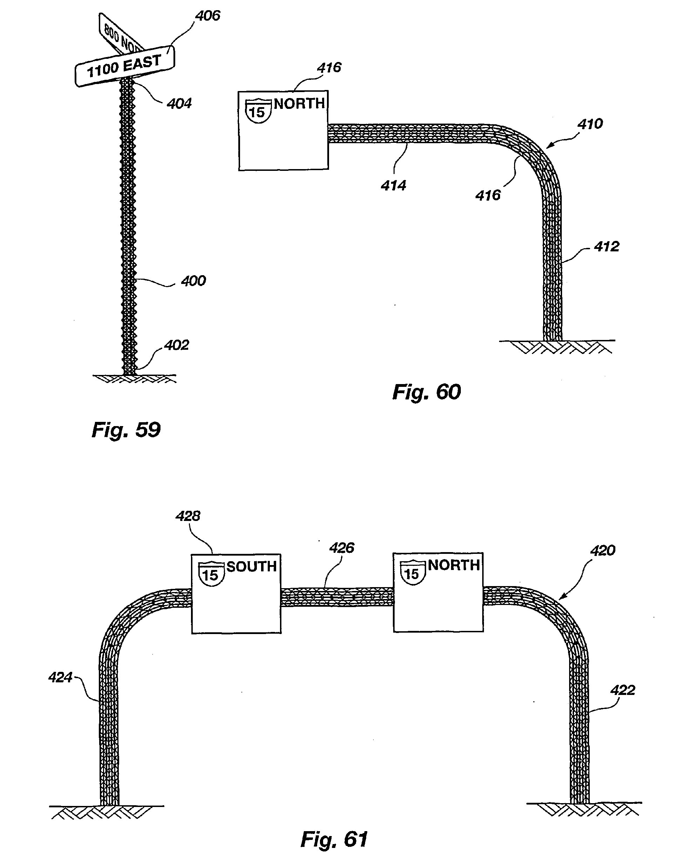

FIG. 59 is a side view of a sign utilizing an iso-truss structure in accordance with the present invention;
FIG. 60 is a side view of another sign utilizing an iso-truss structure in accordance with the present invention;
FIG. 61 is a side view of another sign utilizing an iso-truss structure in accordance with the present invention;

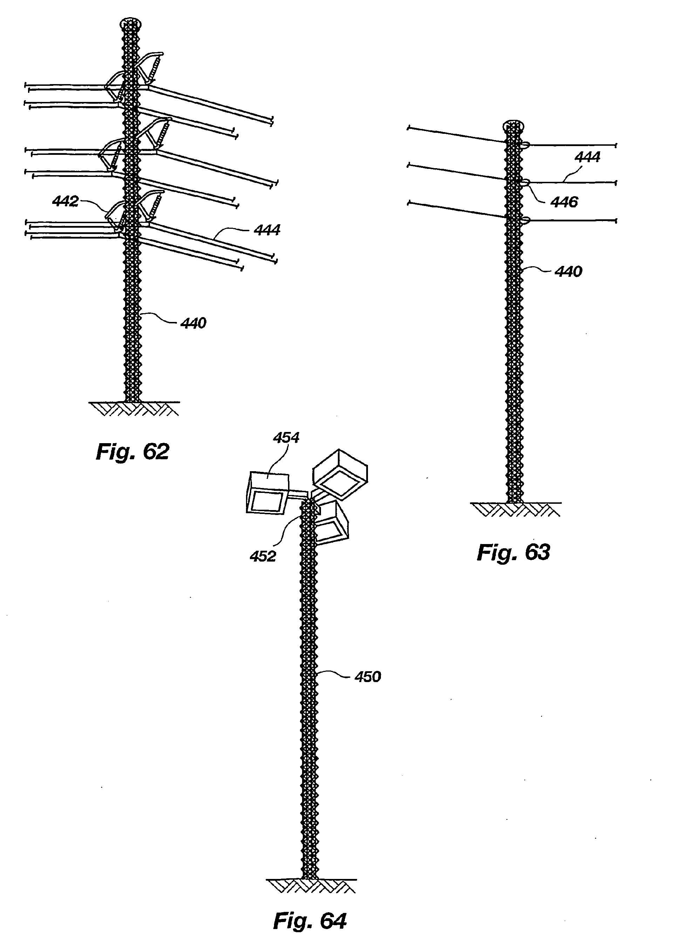

FIGs. 62 and 63 are side views of utility poles utilizing an iso-truss structure in accordance with the present invention;
FIG. 64 is a side view of a light pole utilizing an iso-truss structure in accordance with the present invention;

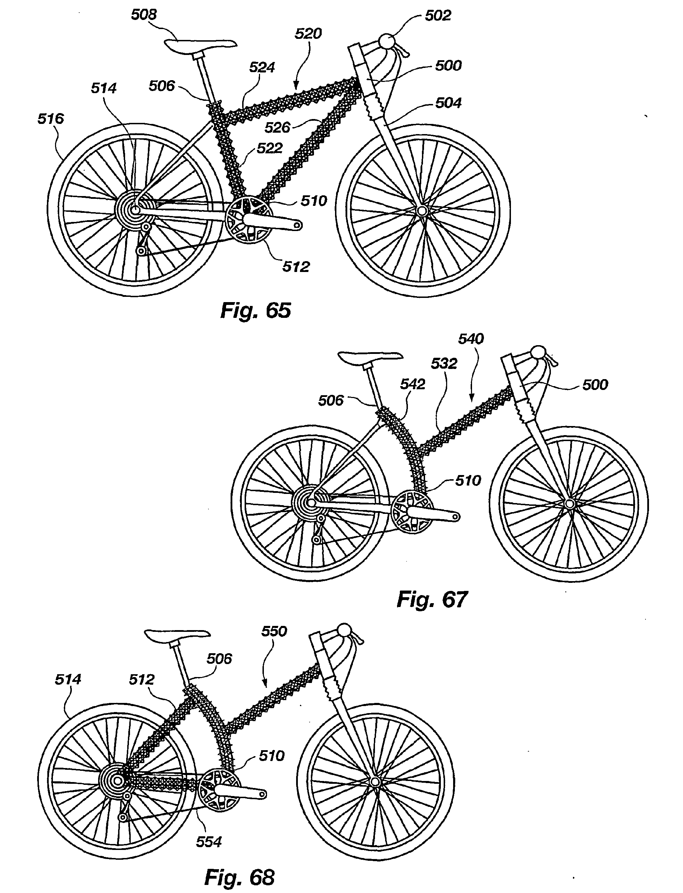

FIGs. 65-74 are side views of bicycles with frames utilizing iso-truss structures in accordance with the present invention;

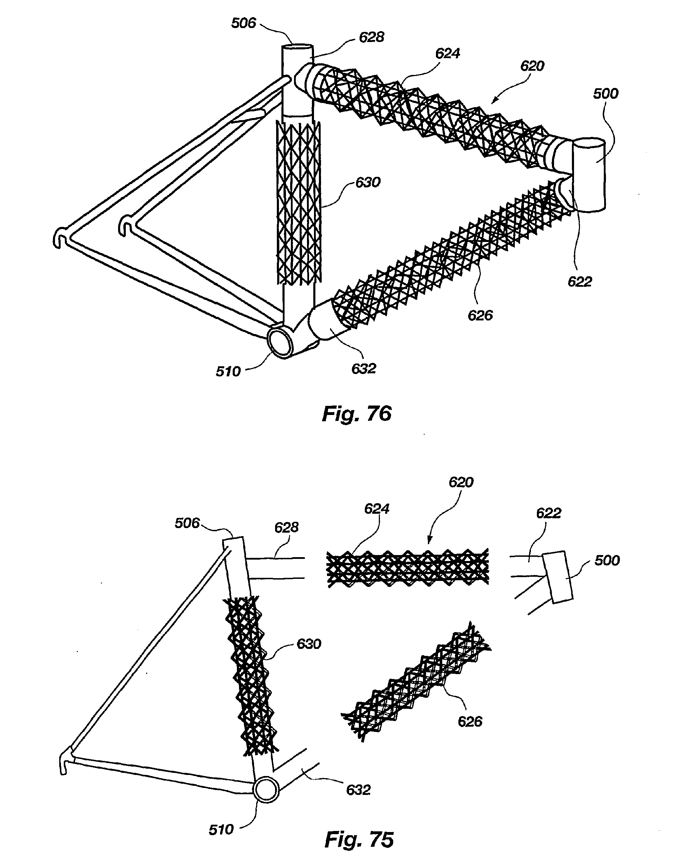

FIG. 75 is an exploded view of a bicycle frame utilizing iso-truss structures in accordance with the present invention;

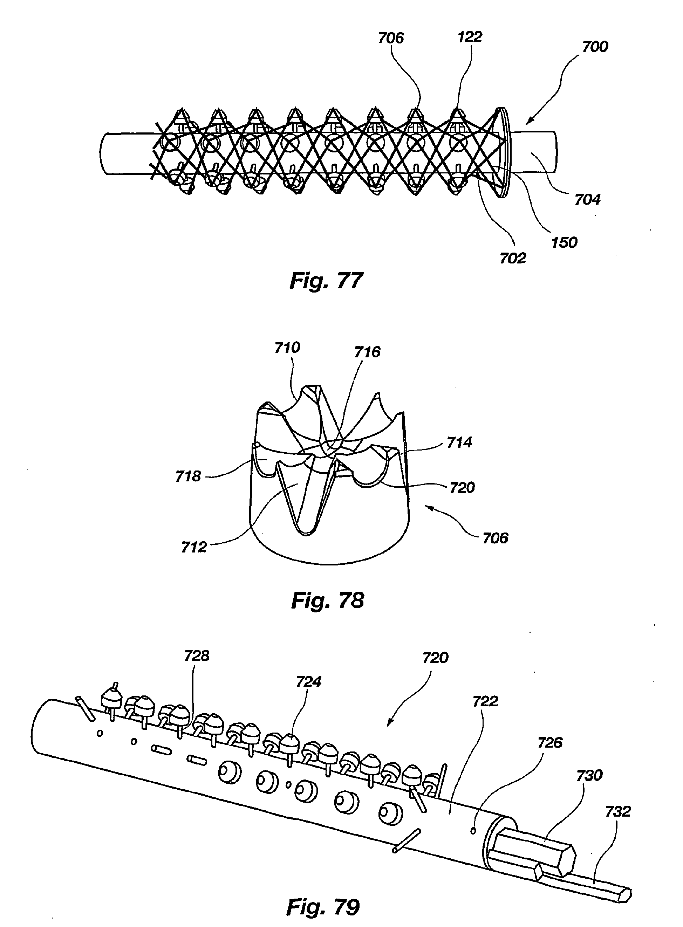

FIG. 76 is a perspective view of the bicycle frame of FIG. 78;
FIG. 77 is a side view of a mandrel for forming an iso-truss structure in accordance with the present invention;
FIG. 78 is a perspective view of a head for a mandrel for forming an iso-truss structure in accordance with the present invention;
FIG. 79 is a perspective view of a collapsible mandrel for forming an iso-truss structure in accordance with the present invention;

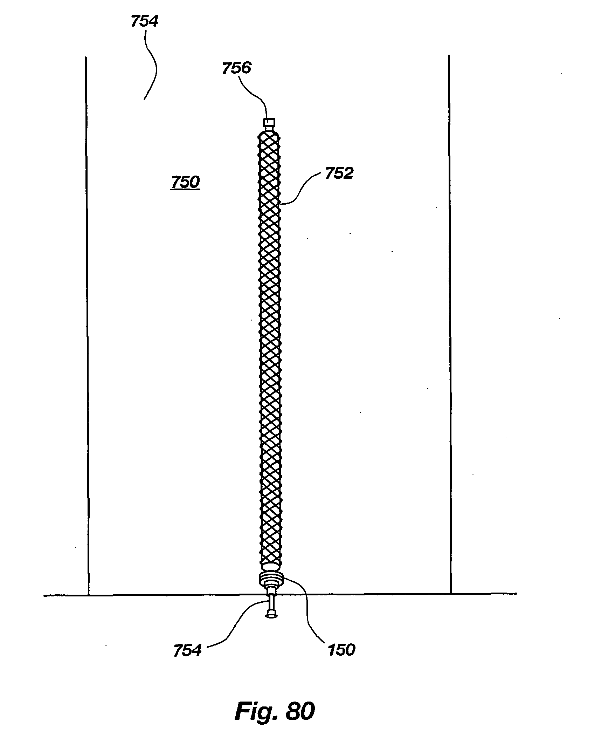

FIG. 80 is a support member utilizing an iso-truss structure in accordance with the present invention;

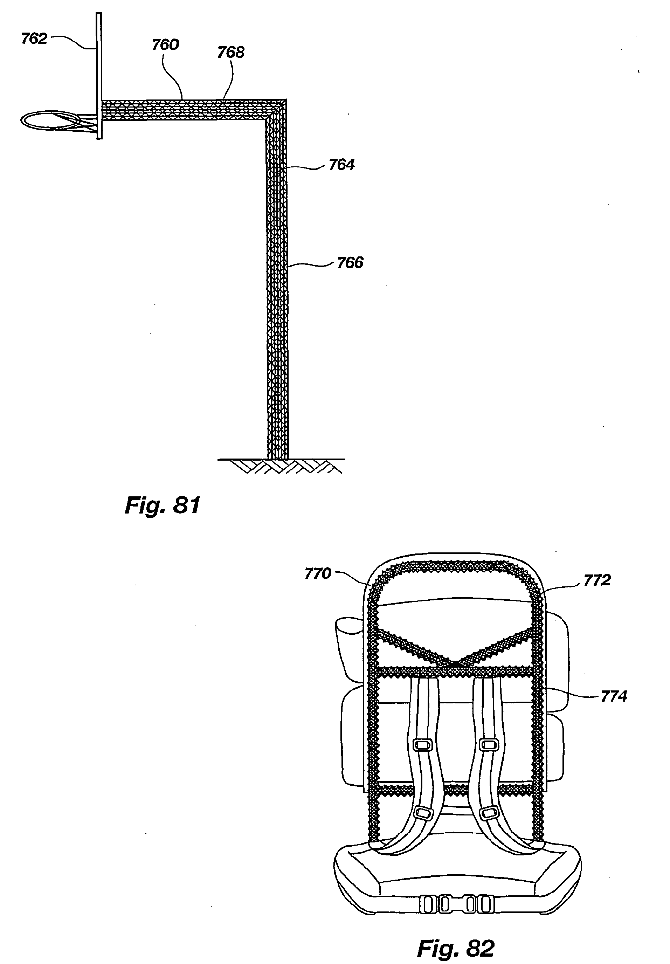

FIG. 81 is a side view of a basketball support utilizing an iso-truss structure in accordance with the present invention;
FIG. 82 is a side view of a backpack utilizing an iso-truss structure in accordance with the present invention;

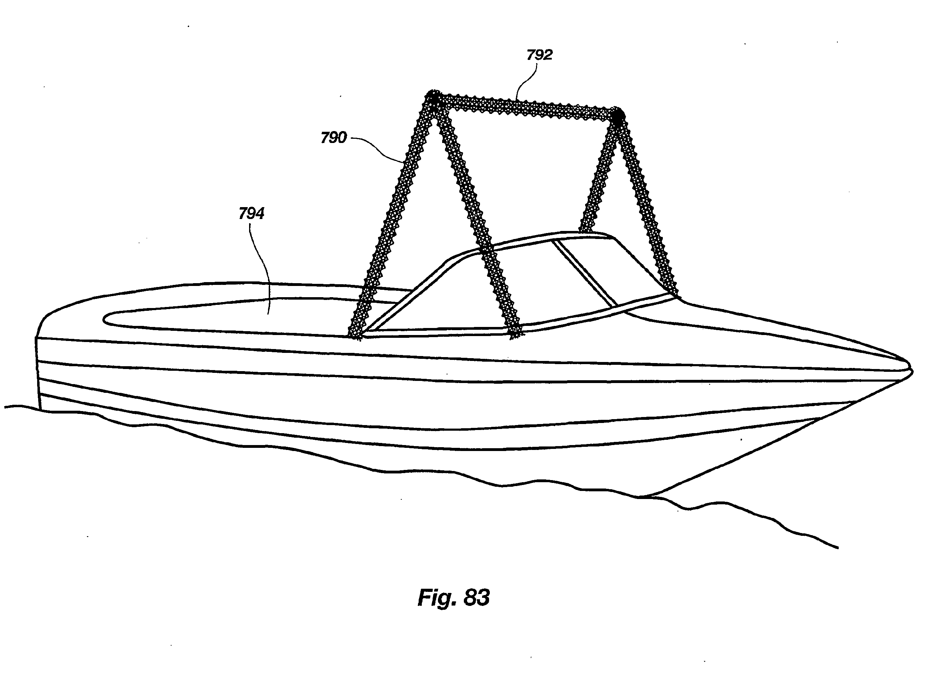

FIG. 83 is a perspective view of a boat with a mast or support utilizing an iso-truss structure in accordance with the present invention;

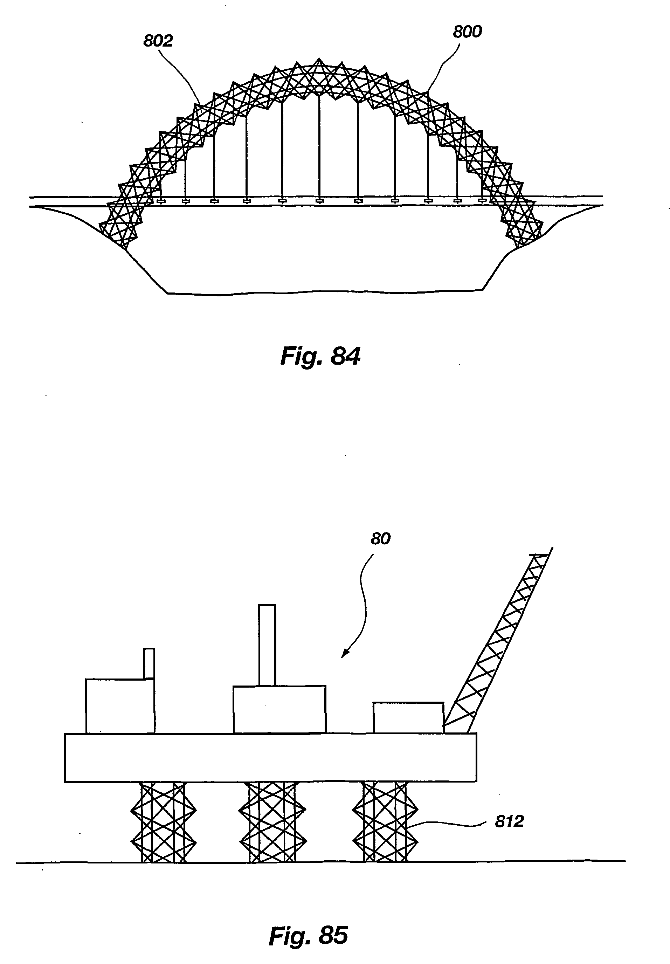

FIG. 84 is a side view of a bridge utilizing an iso-truss structure in accordance with the present invention;
FIG. 85 is a side view of an oil platform utilizing iso-truss structures in accordance with the present invention;

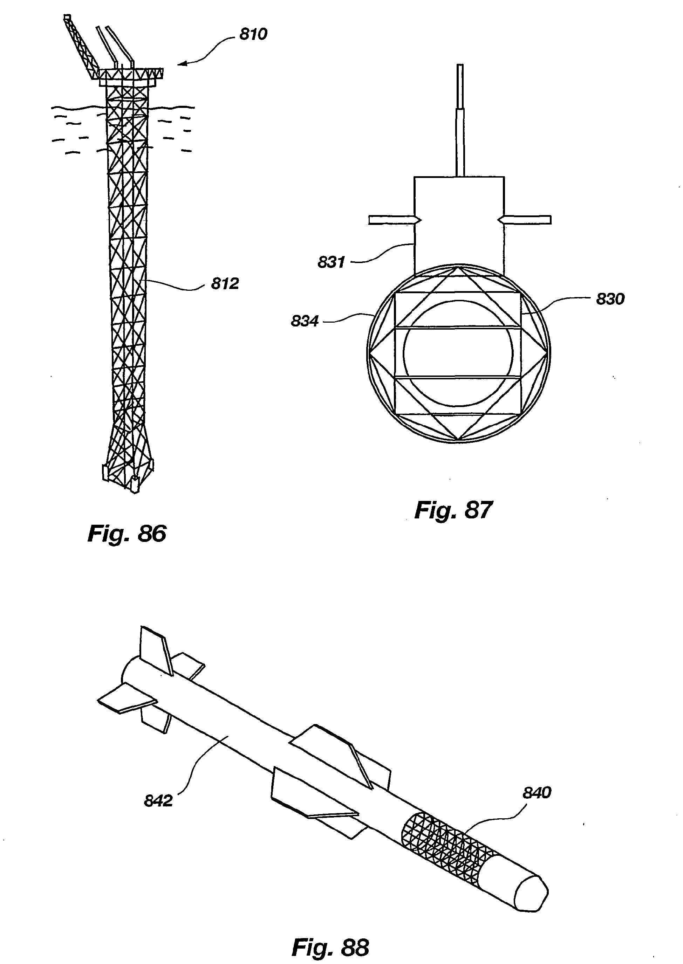

FIG. 86 is a side view of an oil platform utilizing iso-truss structures in accordance with the present invention;
FIG. 87 is a cross-sectional end view of a submarine utilizing an iso-truss structure in accordance with the present invention;
FIG. 88 is a perspective view of a missile or rocket utilizing an iso-truss structure in accordance with the present invention;

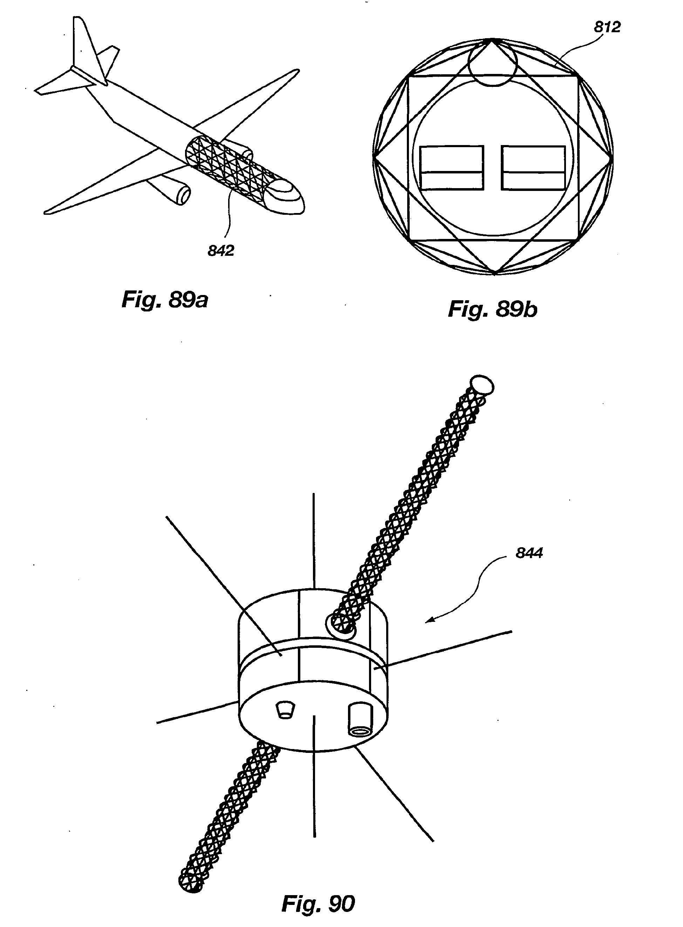

FIG. 89a is a perspective view of an aircraft utilizing an iso-truss structure in accordance with the present invention;
FIG. 89b is a cross-sectional end view of the aircraft of FIG. 89a;
FIG. 90 is a perspective view of a satellite utilizing an iso-truss structure in accordance with the present invention;

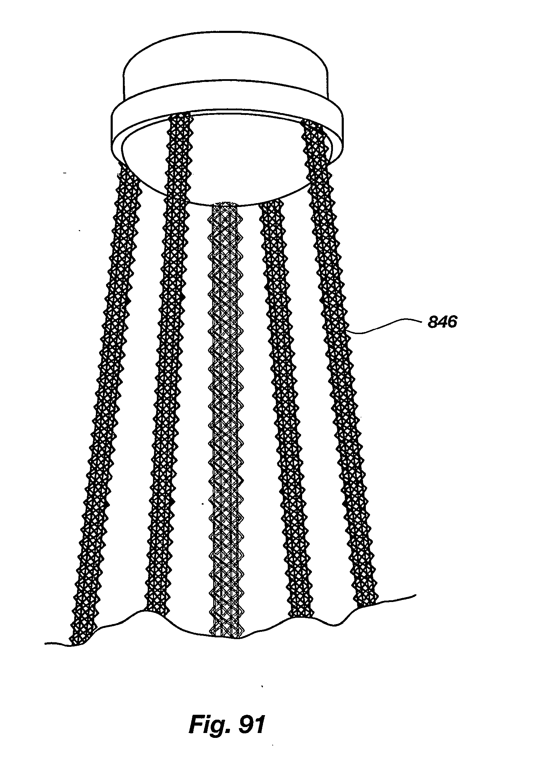

FIG. 91 is a side view of a water tower utilizing iso-truss structures in accordance with the present invention

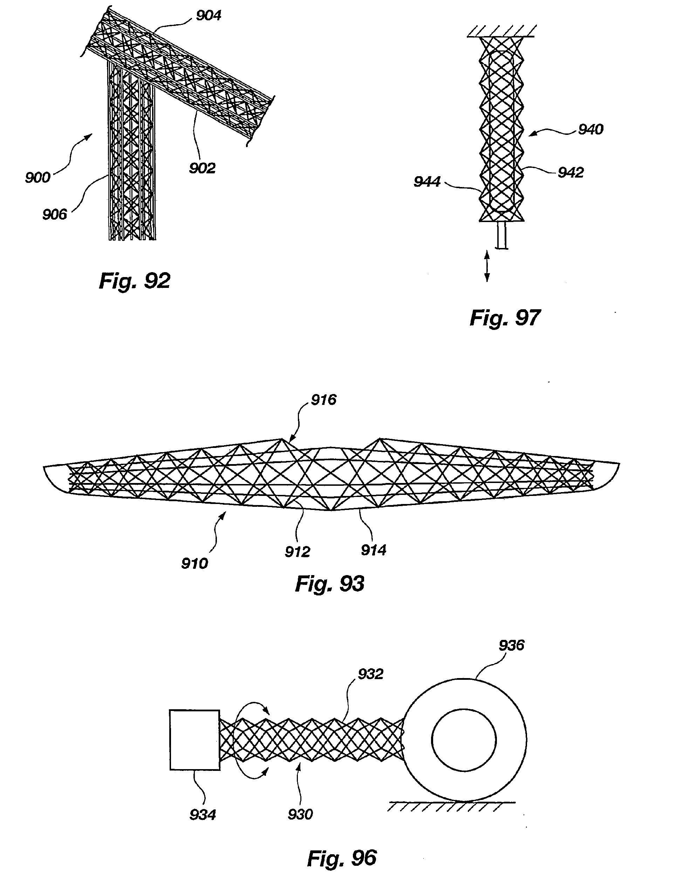

FIG. 92 is a partial side view of a roof system utilizing iso-truss structures in accordance with the present invention;
FIG. 93 is a broken away side view of a kayak utilizing iso-truss structures in accordance with the present invention;

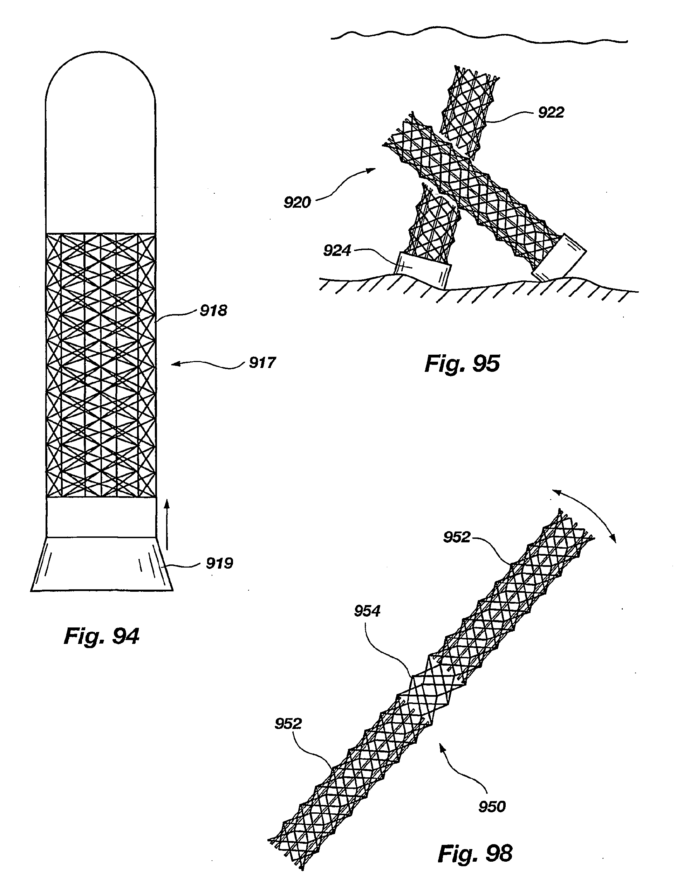

FIG. 94 is a partial broken away side view of a rocket utilizing iso-truss structures in accordance with the present invention;
FIG. 95 is a side view of an artificial reef utilizing iso-truss structures in accordance with the present invention;
FIG. 96 is a partial side view of a drive shaft utilizing iso-truss structures in accordance with the present invention;
FIG. 97 is a side view of a shock absorber utilizing iso-truss structures in accordance with the present invention;
FIG. 98 is a side view of a flexible joint utilizing iso-truss structures in accordance with the present invention;

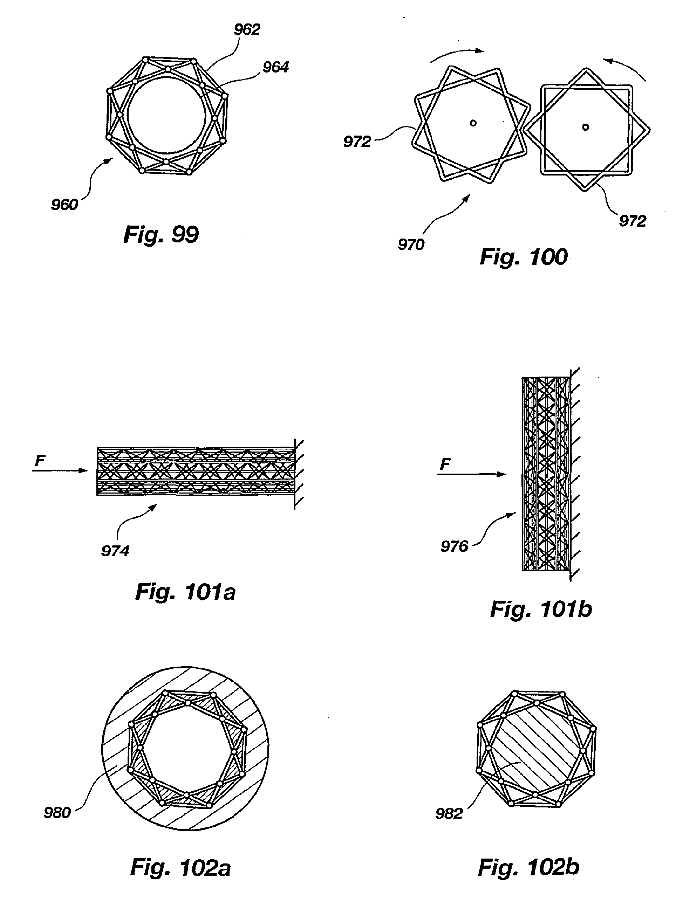

FIG. 99 is a cross-sectional end view of a pressure vessel or tank utilizing iso-truss structures in accordance with the present invention;
FIG. 100 is a side view of a gear system utilizing iso-truss structures in accordance with the present invention;
FIGs. 101 a b are side view of impact barriers utilizing iso-truss structures in accordance with the present invention;
FIGs. 102a and b are cross-sectional end views of impact barriers utilizing iso-truss structures in accordance with the present invention;

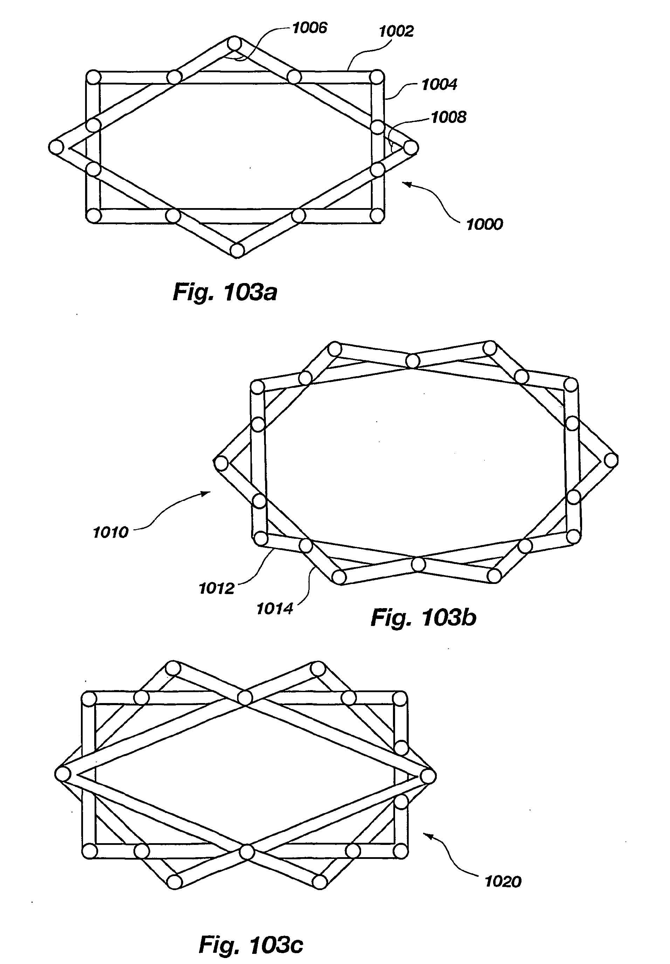

FIGs. 103a-c are end views of iso-truss structures in accordance with the present invention.

### DETAILED DESCRIPTION

For the purposes of promoting an understanding of the principles of the invention, reference will now be made to the exemplary embodiments illustrated in the drawings, and specific language will be used to describe the same. It will nevertheless be understood that no limitation of the scope of the invention is thereby intended. Any alterations and further modifications of the inventive features illustrated herein, and any additional applications of the principles of the invention as illustrated herein, which would occur to one skilled in the relevant art and having possession of this disclosure, are to be considered within the scope of the invention.

### Improved Iso-Truss Structure

Some basic features of an iso-truss structure are described in U.S. Patent 5,921,048, issued July 13, 1999. As illustrated in FIGs. 1-5, an improved iso-truss structure, indicated generally at 10, in accordance with the present invention is shown. The structure and geometry of the preferred embodiment of the iso-truss structure 10 may be described in numerous ways. The iso-truss structure 10 includes a plurality of elements or members 12 arranged in a repeating pattern along the length or longitudinal axis 14 of the structure 10. The structure 10 may be conceptualized and described as a plurality of helical components 20 wrapping about the longitudinal axis 14. Each helical component 20 includes a plurality of straight segments 22 connected end-to-end in a helical configuration.

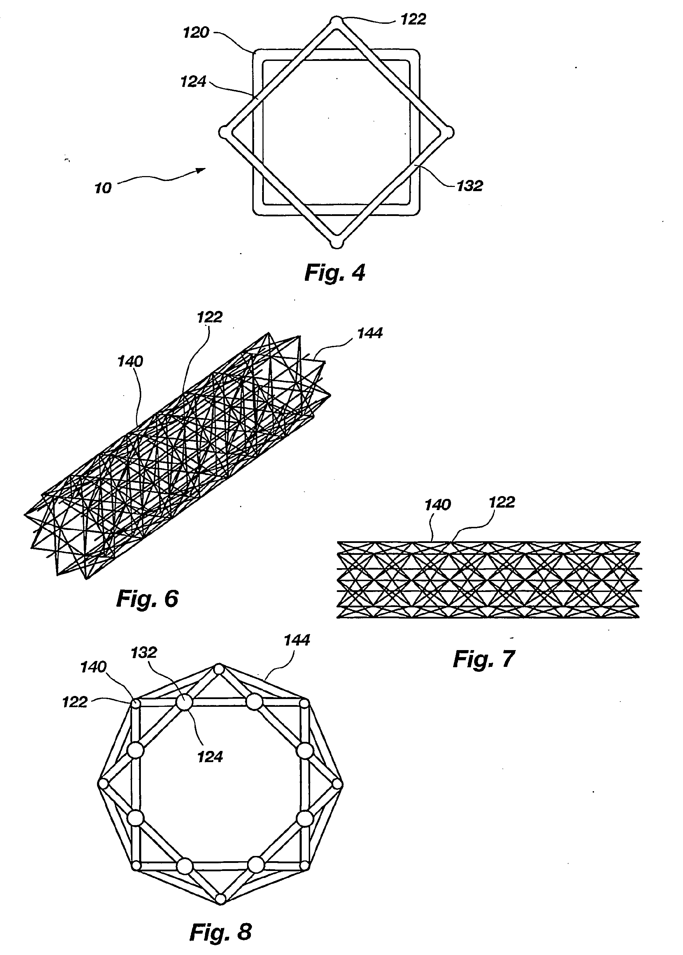

Each helical component 20 includes at least four straight segments 22 which form a single, substantially complete rotation about the axis 14. Thus, when viewed along the axis 14, the four straight segments 22 form a square, or have a square cross-sectional shape, best seen in FIG. 4. The helical components 20 may continue indefinitely forming any number of straight segments 22. The straight segments 22 are oriented at an angle with respect to the axis 14. Preferably, the straight segments 22 are rigidly connected at their ends to adjacent or sequential segments.

The basic structure of the iso-truss structure 10 includes 1) at least two helical components 30 and 32, and 2) at least one reverse helical component 34, all wrapping around the axis 14. In one preferred embodiment, the basic structure 10 includes 1) four helical components 30, 32, 36 and 38, and 2) four reverse helical components 34, 40,42 and 44. The helical components 30 and 32 wrap around the axis 14 in one direction, for example clockwise, while the reverse helical component 34 wraps around the axis 14 in the opposite direction, for example counterclockwise. The helical components 30 and 32, and segments 22 thereof, have a common angular orientation and a common axis 14. The reverse helical component 34, and segments thereof, have a similar helical configuration to the helical components 30 and 32, but an opposing angular orientation. This basic structure 10, when viewed from the end or axis 14 (FIG. 4), appears as an imaginary tubular member of square cross section.

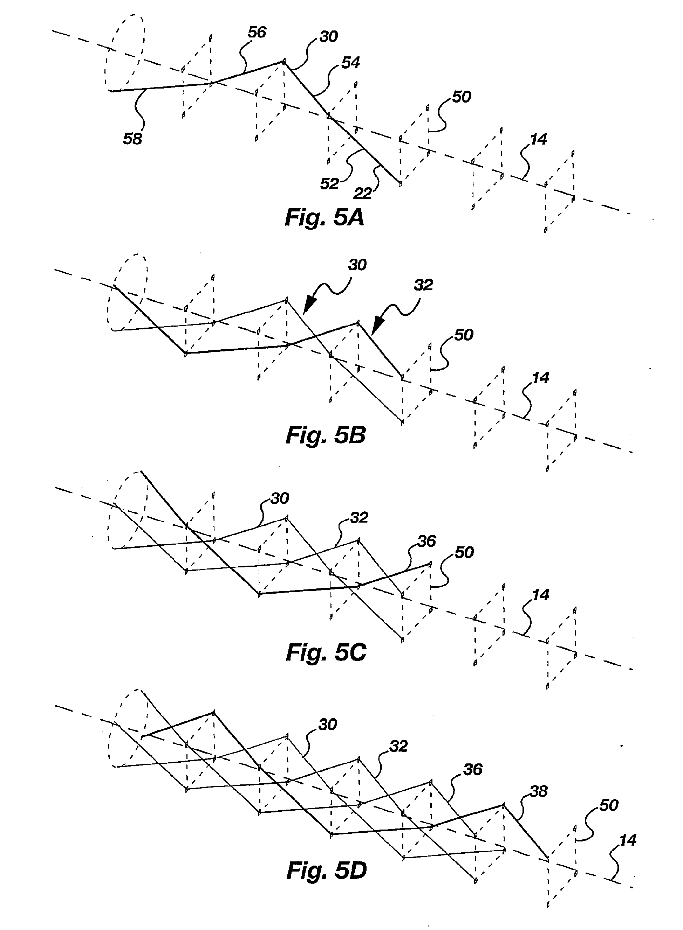

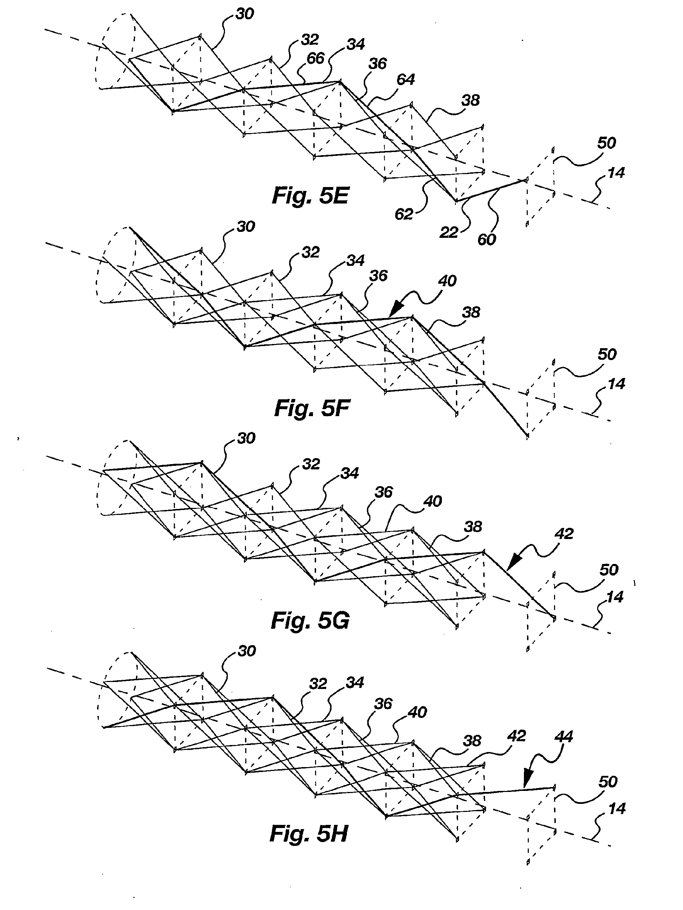

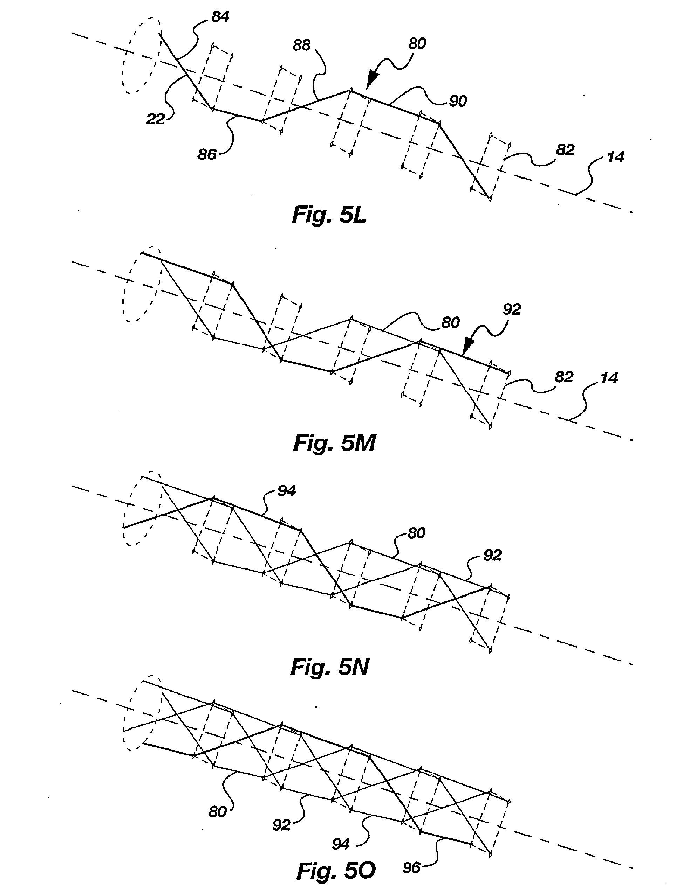

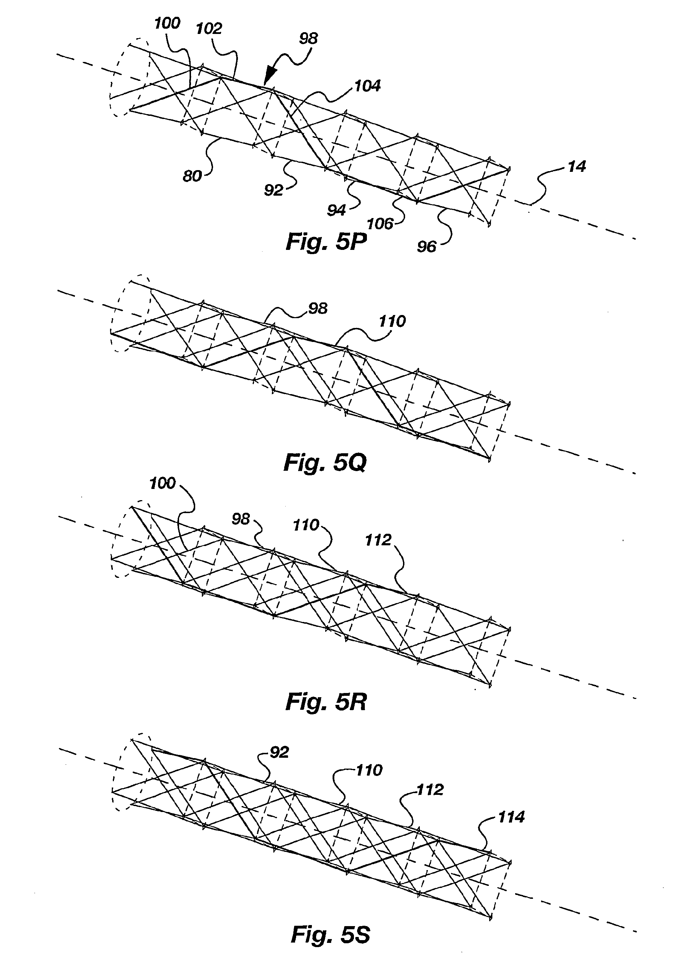

Referring to FIGs. 5a-5v, the various helical components are shown being individually added to the structure 10 for clarity. The first helical component 30 is shown in FIG. 5a. The segments 22 define a square tube 50, shown in phantom lines. For purposes of FIG. 5a, the square tube 50 includes a bottom, top, and left and right sides, or planes. The first helical component 30 includes a first segment 52, in the left plane; a second segment 54 in the top plane; a third segment 56 in the right plane; and a fourth segment 58 in the bottom plane. The helical component 30 may continue with many more segments. The four segments 22 of the helical component 30 form a single, complete rotation about the axis 14. Referring to FIGs. 5b-5d, the second, third and fourth helical segments 32, 36 and 38 are shown in bold respectively.

Referring to FIG. 5e, the first reverse helical segment 34 is shown in bold. The first reverse helical component 34 includes a first segment 60, in the left plane; a second segment 62 in the bottom plane; a third segment 64 in the right plane; and a fourth segment 66 in the top plane. The reverse helical component 34 may continue with many more segments. The four segments 22 of the reverse helical component 34 form a single, complete rotation about the axis 14. Referring to FIGs. 5f-5h, the second, third and fourth reverse helical components 40, 42 and 44 are shown in bold respectively.

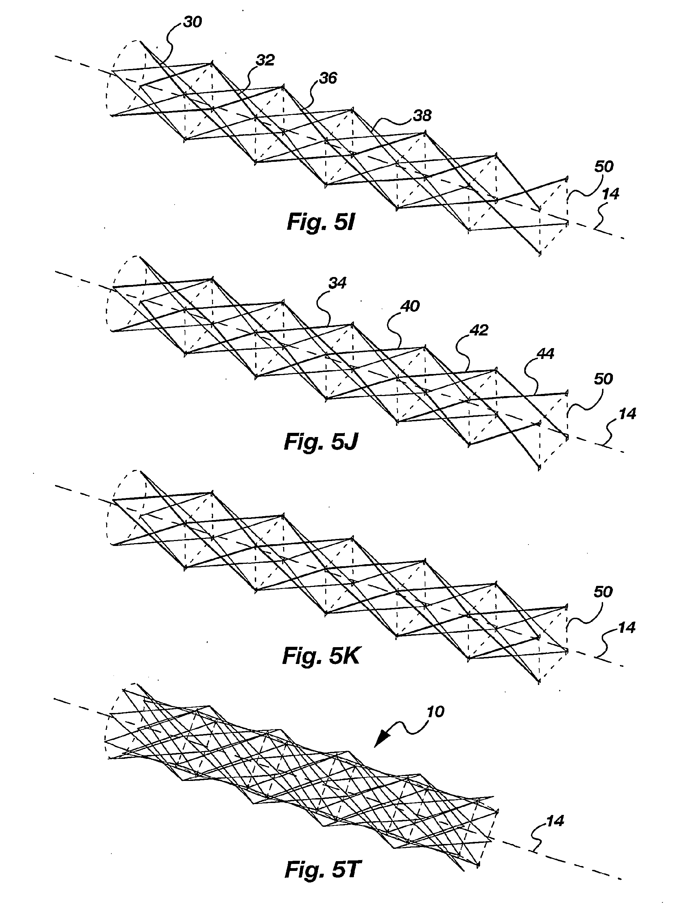

Referring to FIG. 5i, all of the helical components 30, 32, 36 and 38 are shown highlighted. Similarly, referring to FIG. 5j, all of the reverse helical components 34, 40, 42 and 44 are shown highlighted. Referring to FIG. 5k, all of the components in the top and right planes are shown highlighted.

Referring again to FIG. 51, building on the basic structure of the iso-truss structure 10 described above, the iso-truss structure 10 advantageously includes an enhanced basic structure, additionally including 1) rotated helical components, and 2) reverse rotated helical components. The rotated helical components are similar to the helical components, but are rotated with respect to the helical components. Similarly, the reverse rotated helical components are similar to the reverse helical components, but rotated with respect to the reverse helical components. The rotated helical components and the rotated reverse helical components also form a square when viewed along the axis 14 (FIG. 4) which is rotated with respect to the square formed by the helical components 30 and 32 and reverse helical component 34.

Referring to FIGs. 5l-5u, the various rotated helical components are shown being individually added to the structure 10, with the helical and reverse helical components removed, for clarity. The first rotated helical component 80 is shown in FIG. 51. The segments 22 define a square tube 82, shown in phantom lines. For purposes of FIG. 51, the square tube 52 includes a forward facing, rearward facing, and upper and lower facing sides, or planes. The first helical component 80 includes a first segment 84, in the forward facing plane; a second segment 86 in the lower facing plane; a third segment 88 in the rear facing plane; and a fourth segment 90 in the upper facing plane. The rotated helical component 80 may continue with many more segments. The four segments 22 of the rotated helical component 80 form a single, complete rotation about the axis 14. Referring to FIGs. 5m-5o, the second, third and fourth rotated helical segments 92, 94 and 96 are shown in bold respectively.

Referring to FIG. 5p, the first rotated reverse helical segment 98 is shown in bold. The first rotated reverse helical component 98 includes a first segment 100, in the forward facing plane; a second segment 102 in the upper facing plane; a third segment 104 in the rear facing plane; and a fourth segment 106 in the lower facing plane. The rotated reverse helical component 98 may continue with many more segments. The four segments 22 of the rotated reverse helical component 98 form a single, complete rotation about the axis 14. Referring to FIGs. 5q-5s, the second, third and fourth rotated reverse helical components 110, 112 and 114 are shown in bold respectively. All of the components are shown in FIG. 5v.

Referring again to FIGs. 1-5, the iso-truss structure 10 has a plurality of helical components 20, including: 1) four helical components 30, 32, 36 and 38; 2) four reverse helical components 34, 40, 42 and 44; 3) four rotated helical components 80, 92, 94 and 96; and 4) four rotated reverse helical components 98, 110, 112 and 114. Thus, the structure 10 has a total of sixteen helical components 20.

As described above, the straight segments 22 of the helical components 30, 32, 36 and 38 have a common angular orientation, a common axis 14, and are spaced apart from each other at equal distances. Similarly, the segments of the reverse helical components 34, 40, 42 and 44 have a common angular orientation, a common axis 14, and are spaced apart from each other at equal distances. But the straight segments of the reverse helical components 34, 40, 42 and 44 have an opposing angular orientation to the angular orientation of the segments of the helical components 30, 32, 36 an 38. Again, this structure, when viewed from the end or axis 14, appears as an imaginary tubular member of square cross section, as shown in FIG. 4.

The straight segments of the rotated helical components 80, 92, 94 and 96 have a common angular orientation, a common axis 14, and are spaced apart from each other at equal distances, like the helical components 30, 32, 36 and 38. The segments of the rotated reverse helical components 98, 110, 112 and 114 have a common angular orientation, a common axis 14, and are spaced apart from each other at equal distances, like the reverse helical components 34, 40, 42 and 44. But the straight segments of the rotated reverse helical components 98, 110, 112 and 114 have an opposing angular orientation to the angular orientation of the segments of the rotated helical components 80, 92, 94 and 96.

The rotated helical components 80, 92, 94 and 96 and the rotated reverse helical components 98, 110, 112 and 114 are rotated with respect to the helical components 30, 32, 36 and 38 and reverse helical components 34, 40, 42 and 44. In other words, this structure, when viewed from the end or axis 14, appears as an imaginary tubular member of square cross section, but is rotated with respect to the imaginary tubular member created by the helical and reverse helical components, as shown in FIG. 4. Together, the helical, reverse helical, rotated helical, and rotated reverse helical components appear as an imaginary tubular member having an eight-pointed star cross section when viewed from the axis 14, as shown in FIG. 4.

Two or more single elements 12 connect or intersect at joints 120 (FIG. 4). The elements 12 may be rigidly connected, flexibly connected, or merely intersect at the joints 120. A node is formed where intersecting elements 12 are connected. An external node 122 is formed where intersecting elements 12 meet at the perimeter of the structure 10, best seen in FIG. 4. An internal node 124 is formed where intersecting elements 12 meet at the interior of the structure 10, as seen in FIG. 4. The iso-truss structure 10 may be referred to as an eight-node configuration, referring to its eight external nodes 122, best seen in FIG. 4.

A bay 128 (FIGs. 1 and 2) is formed by a repeating unit or pattern measured in the direction of the longitudinal axis 14. A bay 128 contains a single pattern formed by the elements 12. The structure 10 may comprise any number of bays 128. In addition, the length of the bay 128 may be varied.

An internal angle 130 (FIG. 3) is formed by a plane created by two corresponding elements 12 of a tetrahedron and a plane created by opposing elements of the same tetrahedron.

The repeating pattern may be described as a number of triangles or tetrahedrons. The triangles and tetrahedrons are of various sizes with smaller triangles and tetrahedrons being interspersed among larger triangles and tetrahedrons.

The structure 10 may be conceptualized as two, imaginary tubular members of square cross section overlaid to form a single imaginary tube with a cross section like an eight-pointed star, as shown in FIG. 4. Or, when viewed from the end or longitudinal axis 14, the structure 10 has the appearance of a plurality of triangles spaced from the axis 14 and oriented about a perimeter to form an imaginary tubular member of polyhedral cross section in the interior of the structure 10. In the case of the preferred embodiment, eight triangles are spaced about the longitudinal axis to form an imaginary tubular member of octagonal cross section in the interior of the structure 10.

In addition, when viewed from the end or the axis 14, it is possible to define eight planes parallel with the axis 14. The planes extend between specific external nodes 122 in an eight-pointed star configuration. The planes are oriented about the axis 14 at 45 degree intervals.

Furthermore, within a bay 128, a ring of triangular grids is formed which are believed to have strong structural properties. This ring of triangular grids circle the interior of the structure 10 in the center of the bay, as shown in FIG. 4. It is believed that this strength is due to a greater number of connections.

The helical components 30, 32, 36 and 38 intersect with reverse helical components 34, 40, 42 and 44 at external nodes 122. Similarly, rotated helical components 80, 92, 94 and 96 intersect with rotated reverse helical components 98, 110, 112 and 114 at external nodes 122.

The helical components 30, 32, 46 and 38 intersect with rotated reverse helical components 98, 110, 112 and 114 at internal nodes 124. Similarly, the rotated helical components 34, 40, 42 and 44 intersect with reverse helical components 80, 92, 94 and 96 at internal nodes 124.

The helical components 30, 32, 36 and 38 and rotated helical components 80, 92, 94 and 96 do not intersect. Likewise, the reverse helical components 36, 40, 42 and 44 and rotated reverse helical components 98, 110, 112 and 114 do not intersect.

In addition to the plurality of helical members, the structure 10 also may have eight internal axial members 132 (FIGs. 2 and 4) located in the interior of the structure 10 and intersecting the plurality of helical members 20 at internal nodes 120. The axial members 132 are parallel with the longitudinal axis 14.

The external and internal nodes 122 and 124 may form rigid connections, or the components may be rigidly connected together. In addition, the axial members 132 may be rigidly coupled to the components at the internal nodes 124. The components can be made from a composite material. The helical configuration of the structure 10 makes it particularly well suited for composite construction. The components are coupled together as the fibers of the various components overlap each other. The fibers may be wound in a helical pattern about a mandrel following the helical configuration of the member, as described in greater detail below. This provides great strength because the segments of a component are formed by continuous strands of fiber. The elements or components may be a fiber, such as fiber glass, carbon, boron, basalt or Kevlar (aramid), in a matrix, such as a thermoset (epoxy, vinyl ester, etc.), or even a thermoplastic (polyester, polypropylene, PVC, etc.). In addition, an additive may be included in the resin or matrix, such as UV protectors, or chemical repellents.

Alternatively, the structure 10 may be constructed of any suitable material, such as wood, metal, plastic, or ceramic and the like. The elements of the member may consist of prefabricated pieces that are joined together with connecters at the nodes 122. The connector has recesses formed to receive the elements. The recesses are oriented to obtain the desired geometry of member 10.

It is believed that the multiple symmetric and highly redundant nature of the structure 10 provides an attractive, efficient, and damage tolerant structure, with the three-dimensional configuration of the structure 10 providing substantial resistance to local buckling. The structure 10 incorporates stable geometric forms with members that spiral in a piecewise linear fashion in opposing directions around a central cavity. The helical and longitudinal members are repeatedly interwoven, yielding a highly redundant and stable configuration.

In addition, the structure 10 takes advantage of the mechanical properties of continuous fiber in the primary load paths. The load is transferred through beam segments to the intersections, where it disperses through other beam segments. Each member carries primarily axial loads, taking full advantage of the inherent strength and stiffness of continuous fiber-reinforced composites. The helical members primarily carry the torsion and transverse shear loads and stabilize the longitudinal members against buckling when loaded in flexure or axial compression, while the longitudinal members primarily carry the axial and flexural loads and stabilize the helical members against buckling when loaded in torsion or transverse shear. Multiple interweaving of the longitudinal and helical members at the joints or nodes provides a strong interlocking mechanism to enable this type of interdependent three-dimensional stabilization.

Furthermore, the highly redundant nature of the structure 10 makes it very damage tolerant. Removal of a single member results in only fractional degradation of the overall structure. In fact, removal of a complete node reduces the effective properties by approximately 1/N, where N represents the number of nodes in a single cross-section. This damage tolerance capability provides a significant performance advantage over traditional shell structures.

Failure of composite iso-grid structures typically displays a more ductile overall behavior than is generally observed in advanced composite structures. Although the initial response is still linear elastic to the ultimate load, the subsequent behavior after damage initiation is generally nonlinear. In compression, this nonlinearity generally includes a roughly 1/N drop in load each time the members through one of the nodes fail. In flexure, the failure is less ductile, since the load is concentrated in fewer members.

Failure initiation under one load type causes only minimal reduction in strength when loaded in another direction, although the stiffness may be more adversely affected. Furthermore, failure of the principal load carrying members has little or no effect on the ability of the secondary load carrying members to resist simple loading. Failure of one bay in compression has little effect on the torsion capacity of the structure, although the corresponding toughness is reduced. In other words, local failure of the primary members has little effect on the capacity of the secondary members.

From the basic configuration of the structure 10 described above, several alternative configurations are possible with the addition of additional members. Referring to FIGs. 6-8, external axial members 140 may also be located at the perimeter of the structure 10 and intersect the plurality of helical members 20 at the external nodes 122. The axial members 140 are parallel with the longitudinal axis 14. In addition, perimeter members 144 may be located around the perimeter between nodes 122 that lay in a plane perpendicular to the longitudinal axis 14. The perimeter members 144 form a polyhedron when viewed from the axis 14, as shown in FIG. 8.

The perimeter members 144 may be located around the perimeter of the structure 10 between nodes 122 on a diagonal with respect to the longitudinal axis 14. These diagonal perimeter members may be formed by segments of additional helical components wrapped around the perimeter of the plurality of helical components 20. The diagonal perimeter members may extend between adjacent nodes 122, or extend to alternating nodes 122. Such perimeter members may form another iso-truss structure about the first, or a double iso-truss structure. Such a configuration creates a relatively smooth outer surface or supporting structure that simplifies application of an outer skin for cosmetic of structural purposes. The double iso-truss structure also provides enhanced stiffness per unit weight.

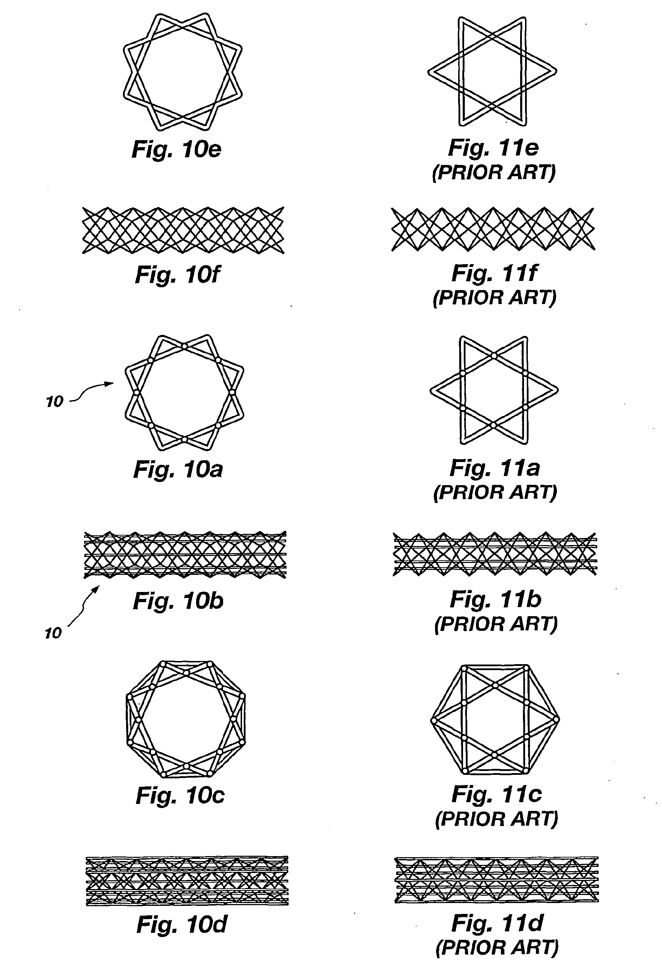

As stated above, the improved iso-truss structure of the present invention preferably includes sixteen helical components which each include four segments forming a full rotation about the axis 14 to form square cross sections, and may be referred to as an eight node structure. A side-by-side comparison of the eight and six node configurations is shown in FIGs. 10a-f and 11 a-11f, respectively. The eight node structure 10 is shown in FIGs. 10a and 10b, while the six node structure is shown in FIGs. 11 a and 11b.

External axial members 140 and perimeter members 144 have been added to the structures shown in FIGs. 10c and 10d for the eight node structure, and FIGs. 11c and 11d for the six node structure. As stated above, the external axial members 140 and perimeter members 144 may form another iso-truss structure about the first, or a double iso-truss structure. The internal axial members have been removed from the structure shown in FIGs. 10e and 10f for the eight node structure, and FIGs. 11e and 11f for the six node structure.

The eight node configuration results in the structure 10 having parallel sides, which makes the structure more square and better suited for applications which prefer square geometries. For example, the eight node configuration fits better in a box, due to its parallel and perpendicular sides, permitting greater suitability for numerous internal stiffening applications where the dimensions of the structure are constrained.

In addition, the increased number of nodes increases the angle between adjacent segments or members of each helical component. It will be appreciated that with a six node configuration, each helical component would have three segments or members forming a complete rotation, or a triangle, with a relatively sharp angle between adjacent segments or members. Such sharp angles act as points of stress concentration, and may be subject to failure. With an eight node configuration, however, each helical component has four segments or members forming a substantially complete rotation, or a square, with relatively wider angles, which may have reduced stress and failure. Furthermore, the nodes may be more rounded to further reduce stress concentration. The eight node configuration, with wider angles, facilitates rounded nodes, and thus reduces stress concentrations.

In addition, the eight node configuration has more unobstructed internal space (free volume) as a percentage of the total cross-sectional area, permitting easier fabrication and yielding more internal volume for non-structural purposes than the six node configuration.

### Performance Characteristics

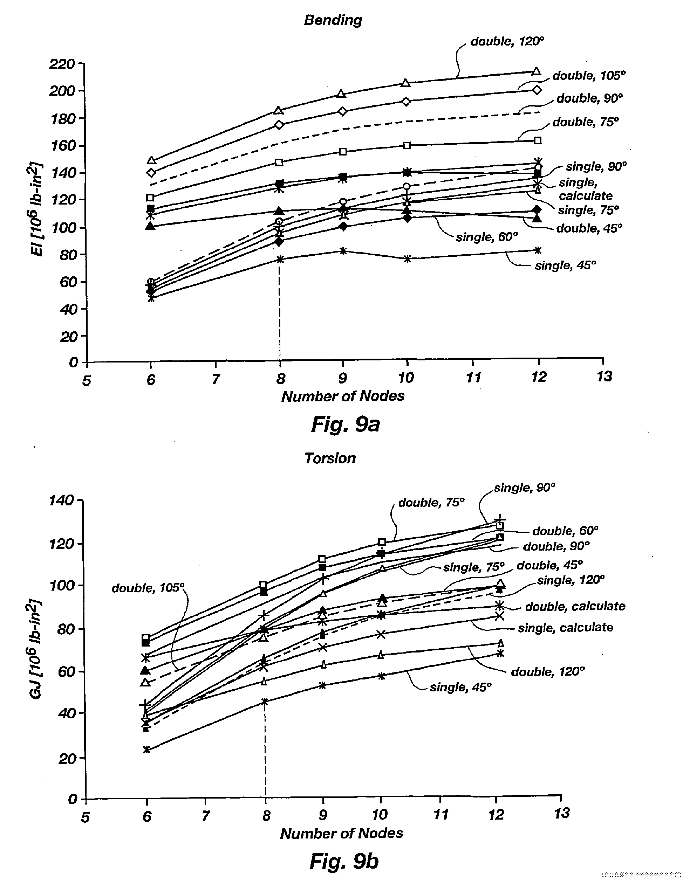

Referring to FIGs. 9a-9f, the performance of the iso-truss structure 10 of the present invention is shown with respect to other configurations. As indicated above, the iso-truss structure 10 of the present invention includes eight external nodes 122, and may be referred to as an eight node structure. In addition, the iso-truss structure 10 of the present invention includes sixteen helical components which each include four segments forming a full rotation about the axis 14 to form square cross sections. A basic structure disclosed in U.S. Patent 5,921,048 includes only twelve helical components, each with only three straight segments forming triangular cross sections, and thus includes only six external nodes. A side-by-side comparison of the eight and six node configurations is shown in FIGs. 10a-f and 11a-11f, respectively.

Referring to FIG. 9a, the bending strength of various configurations of structures are shown. In particular, the bending strength of several structures is shown which have six, eight, nine, ten and twelve nodes. It can be seen from the figure that an eight-noded structure has the surprising and unexpected result of significantly increasing the bending strength. Referring to FIG. 9b, the torsional strength of various configurations of structures with various numbers of nodes is shown. Again, it can be seen from the figure that an eight node structure 10 has the surprising and unexpected result of significantly increasing the torsional strength of the structure 10. While increasing the number of nodes beyond eight causes an increase in both bending and torsional strength, the increase is not nearly as significant as the increase from six to eight nodes.

### Angular Configuration

Referring again to FIGs. 2 and 3, an angle 130 is formed between a helical component 30 and a reverse helical component 34, or the segments thereof. Preferably, this angle 130 is greater than or equal to 45 degrees; more preferably greater than 60 degrees; and most preferably greater than or equal to 75 degrees. Referring again to FIG. 9a, it can be seen that the bending strength surprisingly and unexpectedly increases a significant amount as the angle 130 between the helical and reverse helical components 30 and 34 is increased. Similarly referring to FIG. 9b, the torsional strength of the structure 10 also surprisingly and unexpectedly increases a significant amount when the angle 130 is 75 degrees. The torsional properties appear to be greatest at an angle 130 of approximately 90 degrees.

From the figures, it can be seen that the bending and axial (tension) properties of the structure improve as the angle 130 increases. Other properties, however, such as buckling and torsion appear to be reduced as the angle increases. One problem with tubular composite structures is their poor bending properties, or they bend too easily. The structure of the present invention, however, and the increased angle, demonstrates improved, or stiffer, bending properties.

### End Connections

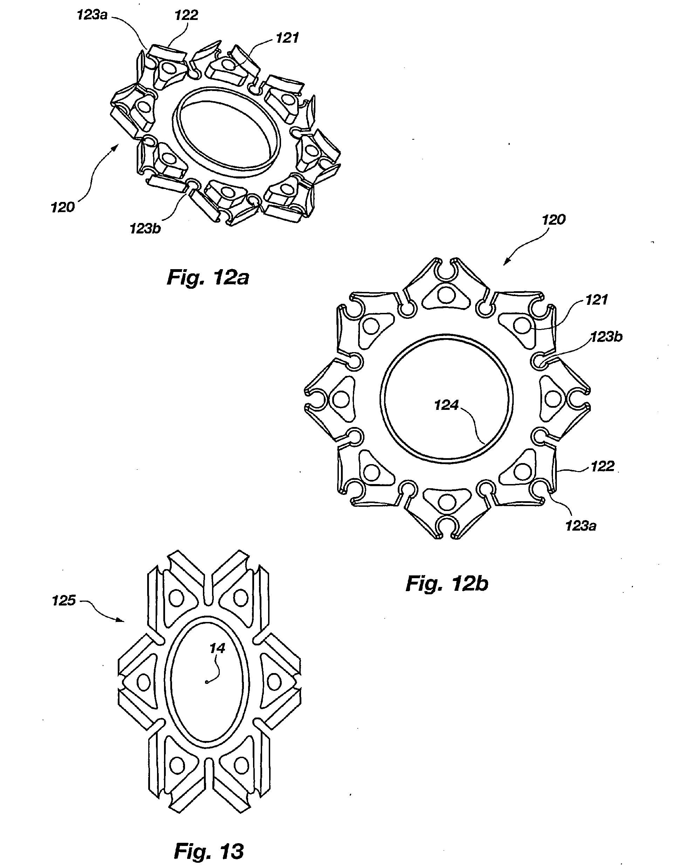

Referring to FIGs. 12a and b, an end plate 120 is shown for attaching the iso-truss structure 10 to other structures and objects, and/or for facilitating manufacture of the iso-truss structure 10. The end plate 120 is attached to an end of the helical components 20 in order to attach the helical components and the structure 10 to another object. The end plate 120 includes a plurality of apertures 121 through which bolts or the like may be used to secure the end plate 120, and thus the iso-truss structure 10, to another object. In addition, the end plate 120 includes a perimeter 122 with a plurality of indentations 123a. The indentations 123a may receive the helical and/or external axial components, or the strands of fiber forming the helical or external axial components. For example, strands of fiber may be wound around the end plate through the indentations 123a, such that the end plate 120 is integrally formed with the iso-truss structure 10, thus providing a strong attachment between the end plate 120 and the iso-truss structure 10. A strand of fiber may pass through one indentation 123a, wrap around the end plate 120, and pass back through another indentation 123a. Furthermore, the end plate 120 may include a center aperture 124 through which a mandrel is received during the manufacturing process, as discussed in greater detail below. Further indentations 123b may also be provided for receiving the internal axial members 132, or the strands of fiber comprising the internal axial members.

Referring to FIG. 13, an angled end plate 125 may be provided for attaching to the iso-truss structure 10 at an angle with respect to the longitudinal axis 14. The angled end plate 125 is similar in many respects to the end plate 120 except that the angled end plate 125 is elongated in one direction to accommodate its attachment at an angle. Such an angled end plate 125 may be used to attach two iso-truss structures together at an angle. For example, the angled end plate 125 may be configured to attach to an iso-truss structure at a 45 degree angle. Thus, two iso-truss structures may be connected by angled end plates 125 to form a 90 degree angle there between.

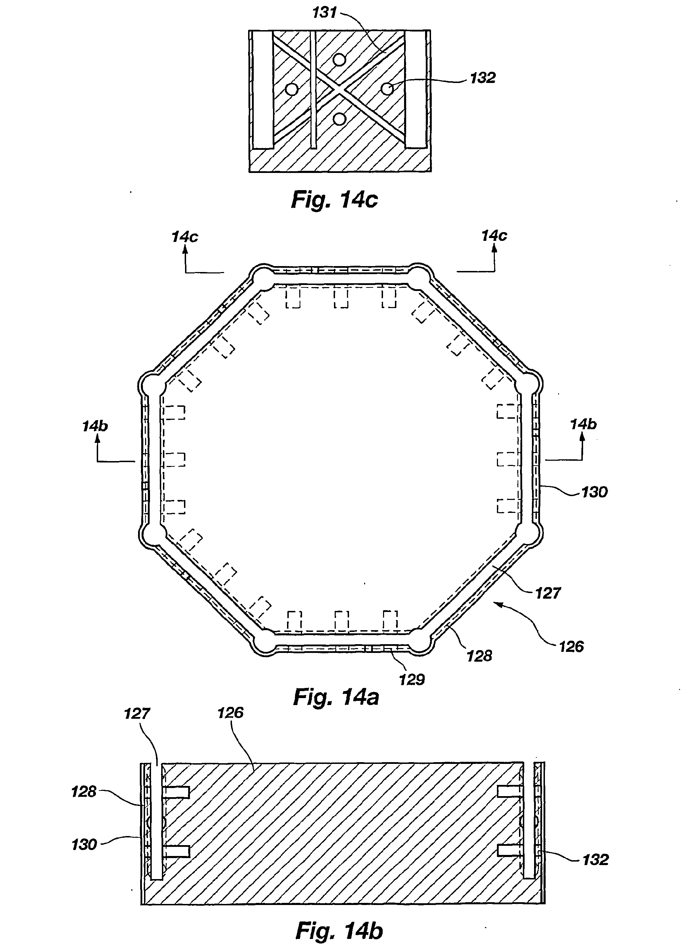

Referring to FIGs. 14a-c, another end plate 126 is shown for attaching to the structure 10 in order to attach the structure to another object. The end plate 126 includes a groove or slot 127 for receiving the structure. Preferably, the groove 127 is octagonal for receiving the inner portion of the structure. The groove or slot 127 can be formed about the plate 126 near the edge or perimeter creating a perimeter wall 128. The perimeter wall 128 can be slotted 129 to form a plurality of flaps or fingers 130, which may be flexible to bend outwardly to receive the structure, and resilient to bend back inwardly once the structure is received, such that the structure "snaps" into the groove 127 between the plate 126 and fingers 130.

Other grooves or indentations 131 may be formed in the plate 126 or fingers 130 and located and oriented to receive the various segments of the structure therein, such that the fingers 130 "snap" around the various segments to hold the structure to the plate 126. Holes 132 can be formed through the fingers 130, the groove 127, and into the plate 126 to receive bolts or screws to further secure the structure in the groove 127. The holes 132 are located such that the bolts or screws pass through the structure around various segments thereof. Such a configuration has the advantage that the structure can be snapped into the plate.

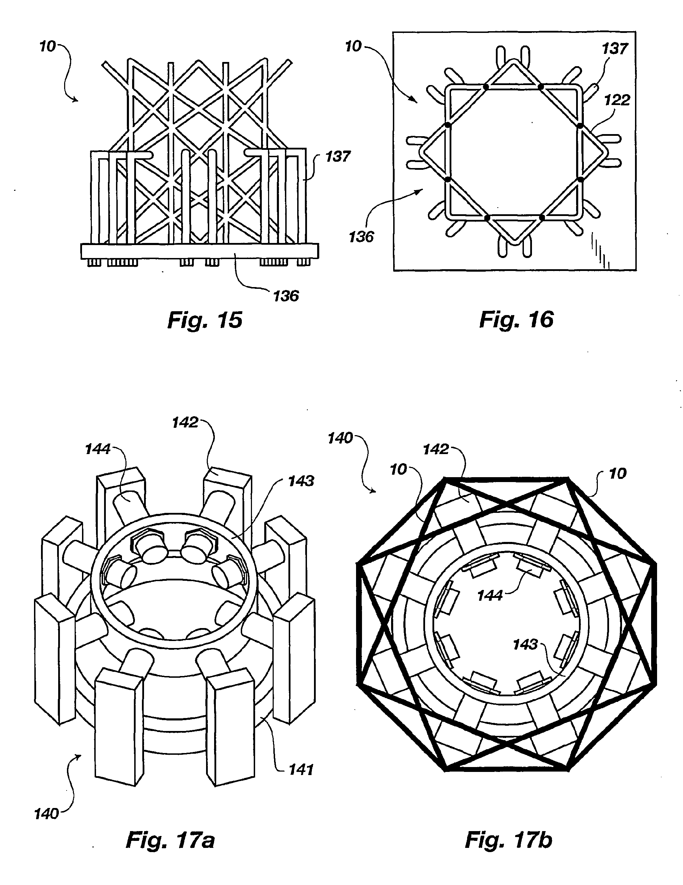

Referring to FIGs. 15 and 16, another end plate 136 is shown for attachment to the structure 10. A plurality of U-shaped bolts or members 137 extend around various segments or nodes of the structure 10 and are secured to the plate 136 to secure the structure to the plate. The U-shaped bolts or members 137 may be angled such that bolts or members 137 extend radially through the structure 10 and then angle longitudinally or axially towards the end plate 136. Holes may be formed in the plate 136 for receiving the bolts or members 137, which may be secured by nuts threaded onto the ends thereof. The bolts or members 137 may be located outside the structure 10, as shown, or may be located inside. In addition, the bolts or members 137 may engage the structure 10 at external nodes 122, and engage both helical members, and external axial member 140. Such a configuration may be less expensive to fabricate.

Referring to FIGs. 17a and b, another end connector 140 is shown which includes a base 141 with a plurality of fingers 142 which extend into the structure 10, and are received within the openings formed between the various segments of the structure 10. The base 141 maybe annular, with the fingers 142 disposed around the annular base 141 and extending longitudinally, or axially. Preferably, the base 141 is sized to fit within the central cavity or space between the segments or helical members. In addition, the connection 140 preferably includes eight fingers 142, to extend into the eight triangular openings or voids formed between the segments of the structure 10. A center ring 143 is disposed in the central cavity or space, and is attached to the fingers 142 by fasteners 144, such as bolts. Thus, the center ring 143 and fasteners 144 secure the fingers 142 and base 141 to the structure 10. Other obj ects may be secured to the base 141 to attach such objects to the structure 10. The configuration of the connection 140 allows the base 141 and fingers 142 to be easily slid into the end of the structure, and attached to the center ring 143 by the fasteners 144. In addition, the connection 140 is entirely disposed within the circumference or perimeter of the structure 10 such that the connection 140 does not protrude therefrom. The fingers may be flexible and resilient to be bent inwardly as the fasteners are tightened, gripping the structure.

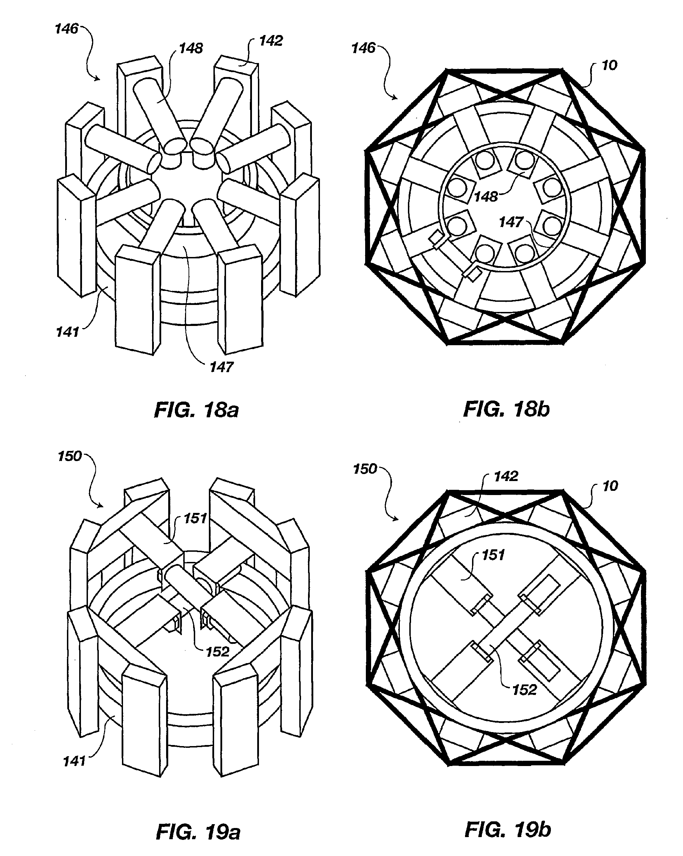

Referring to FIGs. 18a and b, a similar connection 146 is shown in which a C-clamp type fastener 147 is utilized in place of the center ring 143 described above. In addition, L-shaped members 148 are secured to or protrude from the fingers 142 and extend into the central cavity or space. The C-clamp 147 surrounds the angled portion of the L-shaped members 148, securing them together, and thus securing the fingers 142 and base 141 to the structure 10. Such a configuration of the connection 146 allows the fingers 142 to bend inwardly towards the center as the C-clamp 147 is tightened. Thus, the fingers 142 may grip the structure 10.

Referring to FIGs. 19a and b, a similar connection 150 is shown in which the fingers 142 are paired together, or connected in pairs. An L-shaped member 151 is attached to, or extends from, each pair towards the middle of the central cavity or space in the structure 10. Opposing L-shaped members 151 are coupled together by fasteners 152, such as bolts. The fasteners 152 may be tightened, drawing the L-shaped members 151, and thus the fingers 142, inwardly. Thus, the fingers 142 may grip the structure 10.

Referring to FIGs. 20a and b, another end connection has an end plate 154 with a plurality of fingers 155 extending therefrom in the axial or longitudinal direction. Preferably, the fingers 155 are sized, shaped and located to extend into the openings between the segments of the structure 10. Thus, the connection preferably includes eight fingers 155 with triangular cross-sectional shapes to fit snugly or completely in the openings between the segments. In addition, the connection includes a ring member 156 disposed about the exterior of the structure 10, preferably about a narrow portion or the inner nodes. The fingers 155 and ring member 156 are attached, such as by fasteners, to secure the base plate 154 to the structure 10. The fingers 155 may have slots or indentations for receiving the ring member 156. In addition, the ring member 156 may be segmented, or formed of more than one piece, in order to dispose the ring member 156 about the exterior of the structure 10 at a narrow portion.

Referring to FIGs. 21 a and b, a similar connection is shown in which a plurality of retaining members 157 are attached to the fingers 155 to retain the structure 10 on the fingers 155 and base plate 154. The fingers 155 can include slots, holes, or the like, for receiving the retaining members 157 therethrough. The retaining members 157 can extend through the fingers, and the segments of the structure 10. Thus, the fingers 155 and base plate 154 may be slid onto the end of the structure 10, and the retaining members 157 disposed through the fingers 155 and structure 10, to secure the base plate 154 to the structure.

Referring to FIGs. 22a and b, another end connection 160 is shown with a base 161 and a plurality of fingers 162. The base 161 may be annular, and sized to extend around the exterior of the structure 10. The fingers 162 may extend inwardly from the annular base 161 to be received in the spaces between the segments of the structure 10. The base 161 preferably is octagonal to receive the structure therein, and to extend completely around the circumference or perimeter of the structure 10. Other objects may be secured to the exterior of the structure 10 by attaching such objects to the base 161.

Referring to FIGs. 23, a similar end connection 164 is shown 164 with a base 165 which extend only partially about the circumference or perimeter of the structure 10. Again, other obj ects may be secured to the structure 10 by attaching such objects to the base 165.

Referring to FIGs. 24a and b, another type of end connection 170 is shown for attaching two structures 10 and 171 together, preferably in an end-to-end configuration. Such a connection 170 may be useful in assembling multiple structures 10 and 171 together to form a larger structure. The connection 170 includes opposite first and second ends 172 and 173 configured to engage and couple to the first and second structures 10 and 171, respectively. The connection 170 includes an elongated, axial member 174 configured to extend along the axis or longitude of the structures 10 and 171. The axial member 174 preferably is segmented into first and second portions adjustably attached together by an adjustable attachment member 175. The proximal ends of the first and second portions can be threaded, while the attachment member 175 can have opposite threaded openings receiving the proximal ends. Thus, turning the attachment member 175 either draws the first and second portions together, or further separates them.

The ends 172 and 173 are configured to engage and attach to the structures 10 and 171, respectively. Each end 172 and 173 preferably is formed into a hook-like configuration for securing to the segments of the structures. The ends 172 and 173 can include an angled, U-shaped member 176 for engaging the segments of the structures. Thus, members 176 extend from the ends inwardly towards the structures, and then angle longitudinally or axially, to form a hook. In addition, the U-shaped members 176 may extend along either side of an axial member. Thus, the U-shaped members 176 can be hooked to the structures, and the first and second portions of the axial member 174 drawn together by rotating the attachment member 175, in order to draw the first and second structures 10 and 171 together in a secure or attached relationship.

Referring to FIG. 25, a similar attachment 178 is shown in which hoops or loops 179 are formed at the ends 172 and 173 for surrounding segments of the structures 10 and 171. The hoops or loops 179 can be formed by angled U-shaped members with ends received in brackets at the ends 172 and 173 of the axial member 174.

### Intermediate Connections

In addition to connecting the iso-truss structure 10 at its ends, it may be necessary or desirable to attach other objects at an intermediate point of the iso-truss structure. Referring to FIG. 26, an attachment member 180 may be provided for attaching to the iso-truss structure 10 at an intermediate location. The attachment member 180 may have a triangular cross section, or a portion with a triangular-like cross section. Thus, the triangular cross section of the attachment member 180 may be received through a triangular opening in the iso-truss structure 10, as shown in FIG. 27. Preferably, the triangular shape of the attachment member 180 matches the size and triangular shape of the openings through the structure 10, to form a snug, or firm fit. A plurality of grooves 182 may be formed in the attachment member for receiving the helical components. Therefore, other objects may be attached to the attachment member 180 in order to attach the objects to the iso-truss structure 10. For example, a pair of attachment members 180 may extend through the structure 10, to support other objects, such as cross members of utility poles to support utility lines, etc.

Referring to FIG. 27, the ends of the attachment member 180 may have indentations 184 formed in the triangular cross section to receive and facilitate the use of fasteners 185, such as bolts. The indentations 184 create a flat flange 186 for the fasteners 185.

As stated above, various other objects may be attached to the structure 10, or the attachment members 180. Referring to FIGs. 28a and b, an exterior shell 190 may be attached to the structure 10. The shell 190 may be utilized to protect the structure 10 or as a platform for attaching other objects to the shell 190, and thus to the structure 10. The shell 190 can have any appropriate shape. The shell 190 may be octagonal, or have an octagonal cross-section, to match the exterior or perimeter of the structure 10. Attachment members 191, similar to those described above, extend through the structure 10, and can have triangular cross-sections. The shell 190 may be provided in lateral or radial portions, such as first and second halves which each extend longitudinally or axially along the length of the structure 10. Each half of the shell 190 can be attached to the ends of the attachment members 191. For example, apertures may be formed in the shell 190, and bores formed axially in the ends of the attachment members 191, to receive fasteners, such as bolts, which extend through the apertures an bores to secure the shell 190 to the attachment members 191. The shell 190 may prevent climbing on the structure 10, protect the structure 10, or have various other objects attached thereto.

Referring to FIG. 29, it will be noted that the attachment members 180, as described above, may be configured in groups or pairs. In addition, the pairs of attachment members 180 may be oriented to point towards one another, forming an hour-glass profile, or away from one another, forming a diamond shaped profile. Furthermore, the attachment members 180 may be grouped and oriented to extend from opposite sides, and/or radiate outwardly on more than one or two sides, such as four orthogonal sides, as shown.

Brackets 193 can be configured to surround the ends of the pair of attachment members 180. Various objects may be attached to the brackets 193, such as eyes for suspending other objects, as shown.

Referring to FIG. 30, platforms 195 may be attached to the pairs of attachment members 180.

Referring to FIG. 31, multiple attachment members 180 can be configured to extend through the structure 10 in a square configuration, allowing attachment from multiple sides. Each attachment member 180 can include an elongated protrusion 194, and be attached to adjacent members.

The attachment members described above preferably are triangular to match the openings extending through the structure 10. Referring to FIG. 32, flat attachment members 200 may extend through the openings in the structure. The flat attachment members 200 can include indicia and can be utilized as signs, or can be utilized as platforms. U-bolts 201 can be used to attach the flat attachment member 200 to segments, such as the exterior axial members.

Referring to FIG. 33, other flat members 206 can be attached to the exterior of the structure 10. Hooks 207 can be formed on one side of the flat members 206 for engaging or hooking to the segments of the structure 10. Other object can be attached to the other side of the flat member 206, or indicia may be provided on the other side.

Referring to FIGs. 34a and b, flat members 210 can be attached to the exterior of the structure 10 utilizing attachment members 211, similar to those described above. One or more attachment members 211 may extend through the structure 10 near the exterior. Fasteners 212, such as U-bolts, can extend around the attachment members 211 and attach to the flat member 210, such as by extending through apertures therein.

Referring to FIG. 35, attachment members 216 can extend through the structure 10 and attach directly to a flat member 217. The attachment members 216 may be configured in a block U-shaped configuration to engage more of the structure 10. Alternatively, rounded U-shaped attachment members 218 may extend through the structure 10, as shown in FIG. 36.

Many of the attachment members described above have been described as extending through the structure 10. Referring to FIGs. 37a and b, attachment members 220 may extend into the structure 10, and be coupled in the central cavity or space, without extending entirely through the structure 10. The members 220 may be provided with flanges that are attached with a fastener.

In addition, the attachment member may have other cross sectional shapes and be configured to extend through other cross sectional openings in the structure. For example, the attachment member may have a quadrilateral cross sectional shape and extend through a quadrilateral opening in the structure.

One or more nodes may be removed or left out to facilitate attachment of an object to the structure. For example, leaving out one node presents a flatter side. In addition, opposite nodes can be left out for flatter, opposite sides, for an attachment through the structure.

### Tapering Iso-Truss Structure

Referring to FIGs. 38a and 38b, iso-truss structures are shown which are similar to the iso-truss structure 10 described above, but taper in one or more directions. Referring to FIG. 38a, an iso-truss structure 230 tapers from a wider first end 231 to a narrower second end 232. The individual segments 12 which form the helical components of the structure 230 vary in length from being longer at the first end 231 to shorter at the second end 232, such that the entire structure 230 tapers. The helical components may continue to wrap around the longitudinal axis with the same angular orientation. The structure 230 may also include axial members 233 which are not parallel with the longitudinal axis 14 of the structure 230.

Referring to FIG. 38b, another iso-truss structure 234 may have narrow ends 235 and 236 and a wider middle 237. Again, the individual segments 12 forming the helical components may vary in length from longer at the middle 237 to shorter at the ends 235 and 236. It is of course understood that the structure may taper in the middle, and thus have wider ends and a narrower middle.

### Flexible or Bendable Iso-Truss Structure

Referring to FIG. 39, a flexible or bendable iso-truss structure 240 is shown which is similar in many respects to the iso-truss structure 10 described above, but does not include any axial members. Again, the individual components 12 and the helical members may be rigidly interconnected, but the segments 22 can include a degree of flexibility. Thus, the iso-truss structure 240 may bend laterally between a first straight configuration, similar to FIG. 5t, and a second curved configuration as shown in FIG. 39. In the straight position, the structure 240 includes a straight longitudinal axis 14, as in FIG. 5t. Referring to FIG. 39 and the curved position, the segments and helical components bend and flex such that the entire structure 240 bends laterally about an arcuate or curved axis 242.

The lack of the longitudinal components allows the structure 240 to bend or flex in a lateral direction. It has been discovered, however, that although the structure 240 is capable of bending in a lateral direction, the structure 240 continues to maintain its torsional stiffness, or resist rotation about the longitudinal axis 14.

In addition, a similar structure also can compress and/or expand axially or longitudinally. Thus, the structure may expand and/or compress, preferably storing energy, so that the structure can function as a spring member.

### Angled Iso-Truss Structures

Referring to FIG. 40a, a structural member 250 is shown which is similar in many respects to the structural member 10 described above, but includes two sections 252 and 254 which form an angle with respect to one another. For example, the two sections 252 and 254 may form a right angle. In addition, the two sections 252 and 254 can be integrally formed, or the helical components of one section 252 continue to form the helical components of the second section 254. Thus, the structure 250 forms a continuous angled structure which may be stronger than a separate structure formed with some type of connection. Such an arrangement or configuration may be utilized in constructing more complicated structures.

The structure 250 may have exterior axial members 256 attached to the external nodes 122. Alternatively, a structure 258 may be angled, but without exterior axial members, as shown in FIG. 40b.

### Curved Iso-Truss Structures

Referring to FIG. 41, a curved iso-truss structure 270 is shown which is similar to the iso-truss structure 10 described above, but has a curved or arcuate longitudinal axis 272. The helical components forming the arcuate structure 270 have segments of different lengths. For example, the inside segments 274 on the inside of the curve can be shorter than the outside segments 276 on the outside of the curve. In addition, the axial members 278 are also curved and parallel with the curved longitudinal axis 272. Such curved structures 270 may produce less stress than sharp angles.

Referring to FIG. 42, a circular iso-truss structure 280 may be formed. The circular structure 280 may be continuous as shown. The circular structure may have exterior axial members.

The curved or circular configurations of the iso-truss structure are believed to impart the same structural advantages of the straight iso-truss structures to the curved and circular structures.

Referring to FIG. 43, an iso-truss structure 300 may include a curved portion 302 joining to other portions 304 and 306 which may be straight. Such a configuration is similar to the sharp angular configuration shown in FIG. 40b, but provides curvature at the connection of the sections 304 and 306. The curved section 302 is similar to the curved structure 270 described above. Such a configuration can be utilized for more complex structures as described in further detail below. Such curved portions may be stronger and prevent stress concentrations of sharper angles.

The structure may have a broad curved section as shown in FIG. 43, or may have a sharper curved section as shown in FIG. 44. Referring to FIG. 44, a structural member 320 is shown in which the structure 320 forms a right angle bend around a external node 324. Thus, a number of helical components may pass through the node 324. The helical components may be continuously formed through the curve. The structure may include external axial components 326.

Referring to FIG. 45, an iso-truss structure 330 may be formed with multiple bends or curvatures 332, and/or with more complicated or sharp curvatures. For example, a structure may be formed with multiple right angle curvatures. As another example, a structure may be formed with sharp curvatures, broad curves, or with multiple different curvatures, like an S-shape.

### Braided Pre-Form

As stated above, many of the above-described structures may be formed by resin impregnated fibers, to form rigid structures. Many of the above-described structures may also be provided in a braided pre-form configuration. The structures may be formed by winding strands of fiber together. In addition, additional strands of fiber may be wrapped around segments to hold the fibers together. The strands of fiber, however, without their resin, remain flexible, and may be collapsed and expanded as desired. Thus, such a braided pre-form may be collapsed or substantially compacted into a small area for transportation, etc. The braided pre-form may then be expanded and impregnated with resin to form the desired structure.

Referring to FIG. 46, the long fibers forming the segments or helical members, may be sheathed in a braided sock 348 disposed around the fibers. Such a sock 348 maintains the internal long fibers together, to prevent tangling, etc.

In addition, the fibers or segments can be twisted to compact the fibers. Furthermore, the segments, or fibers thereof, can be wrapped, such as in a spiral, with other fibers for compaction.

### Integral Connectors

Referring to FIG. 47, the structure 10 can be provided at its ends with connectors 350. Such connectors 350 can be integrally formed with the structure 10, such as by fiber reinforced resin extending continuously between the structure 10 and the connectors 350. The connectors 350 are configured to attach or couple the structure 10 to mating connectors or structures. Thus, the connectors 350 may be formed as protrusions or indentations, such as male and female connectors, for mating with opposite indentations or protrusions, respectively, or female and male connectors.

The connectors 350 can have a circular cross-sectional shape, similar to cylindrical composite tubes, and be received within a circular opening in a receiving connector, as described below. The connector 350 may be threaded 353, or have external threads, as shown in FIGs. 49, and threadedly mate with internal threads of a receiving connector, described below. The connectors 350 may be protrusions, or male connectors, as shown, or may be indentations, or female connectors. Alternatively, the connectors 350 can have a hexagonal cross-sectional shape 356, or an octagonal cross-sectional shape, for mating with a similar shaped connector 357, as shown in FIGs. 48. It is of course understood that the connectors can have any appropriate shape, including for example, square or triangular.

Various shaped members may be provided for connecting structures. For example, union 360 or 361 can have opposing openings for receiving connectors 352 or 356 from two structures, to couple the structures together in an end-to-end configuration, as shown in FIGs. 50 and 51. An elbow 362 can have an angled configuration, such as a 90 degree angle, to coupled two structures together at an angle, as shown in FIG. 52. It is of course understood that any appropriate angle can be provided. A tee 364 or 357 can have a T-shaped body for coupling a structure at an angle, as shown in FIGs. 53 and 54. A cross 366 can have four openings, as shown in FIG. 55. Other connectors may connect the structures to a base 354, as shown in FIGs. 56.

### Other Attachments

Other attachments also are possible. Referring to FIGs. 57 and 58, for example, a plurality of members 380 or 381 extend through the structure transverse to one another. The members 380 and 381 can include grooves 382 for mating with one another in an overlapping relationship. For example, for a six-node structure, three members 380 can extend through the structure and mate as they overlap one another. Holes 384 may be formed in the members 380 for receiving fasteners, such as bolts, which extend through the members 380 and into a base 386 or 387. Thus, the members 380 extend through the structure, attaching the structure to the plate 386.

### Signs

Referring to FIGs. 59-61, such iso-truss structures as described above may be used to hold signs. Referring to FIG. 59, a straight iso-truss structure 400 may be vertically oriented and have a first end 402 secured to a support surface, such as the ground, and an opposite second end elevated above the first end 402. A sign 406 may be attached to the upper-end 404 of the iso-truss structure 400. The sign 406 may include various indicia.

Referring to FIG. 60, an iso-truss structure 410 may include a vertical component 412, the horizontal component 414, and a curved component 416 joining the vertical and horizontal components 412 and 414. The vertical component 412 may be vertically oriented and secured to a support surface, such as a road side. The horizontal section 414 may be secured to the vertical section 412, such as through a curved or acuate section 416, as described above. A sign member 416 may be secured to the horizontal member 414. Thus, a sign 416 may be suspended or elevated above a road way.

Referring to FIG. 61, an iso-truss structure 420 may include a pair of vertical members 422 and 424 disposed on opposite sides of a roadway. A horizontal component 426 may be suspended between the two vertical sections 422 and 424. A sign member 428 may be secured to the horizontal member.

### Utility Poles

Referring to FIG. 62, an iso-truss structure 440 may be vertically oriented and attached to a support surface, such as the ground. One or more arms 442 may be secured or attached to the iso-truss structure 440 at a location above the ground, and extend generally horizontally outwardly. Such arms 442 may be similar to the attachment member described above. Utilities lines 444, such as phone, cable, or electrical lines, may be suspended from the arms 442.

Referring to FIG. 63, the structural member 440 may include nonconductive attachment members 446 for attaching the utility lines 444 to the structure. The utility lines 444 may extend along a portion of the lengths of the iso-truss structure 440.

Referring to FIG. 64, an iso-truss structure 450 may be vertically oriented and provided at its top end 452 with light structures or light sources 454 for providing illumination. Such light sources 454 may be secured to the top end 452, such as with an end plate as described above.

### Bicycle Frames

Referring to FIGs. 65-74, the iso-truss structures described above may be utilized for bike frames, and thus advantageously provide the advantages of strength and light weight. The bike frame includes a handle bar location 500 attached to a handle bar 502 and/or front fork 504; a seat location 506 for attachment to a seat stem 508; a pedal location 510 attached to a pedal assembly 512; a rear wheel location 514 attached to a rear wheel 516. The frame 520 includes a plurality of members extending to and between the handle bar, seat, pedal and rear wheel locations 500, 506, 510, and 514. For example, the frame 520 includes a vertical member 522 extending between the pedal location 510 and the seat location 506. In addition, the frame 520 includes a horizontal member 524 extending between the handle bar location 500 and the seat location 506. Finally, the frame member 520 includes a diagonal member 526 extending between the handle bar location 500 and the pedal location 510. The various components or sections 522, 524, and 526, are similar to the iso-truss structures described above, and are assembled to form a triangular frame 520. The frame 520 provides strength and reduced weight.

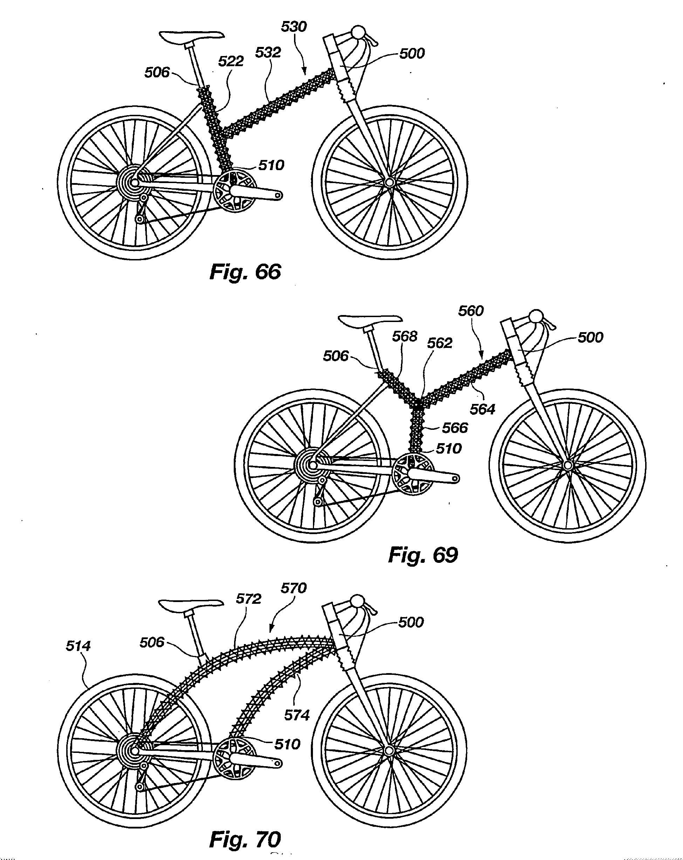

Referring to FIG. 66, only a single diagonal member 532 extends from the handle bar location 500 to the vertical member 522. The frame 530 forms something of a T-shape and eliminates a component for reducing weigh.

Referring to FIG. 67, another bike frame 540 may include an arcuate member 542 extending from the seat location 506 to the pedal location 510, and a diagonal member 532 extending from the handle bar location 500 to the arcuate member 542. The arcuate member 542 may more closely match the curvature of the rear wheel 516 and provide additional bending strength. Referring to FIG. 68, another bike frame 550 may include members 552 extending from the seat location 506 to the rear wheel location 514, and another member 554 extending from the pedal location 510 to the rear wheel location 514, or a triangle formed of the iso-truss structure. Thus, more of the frame may be formed of lighter weight iso-truss structure.

Referring to FIG. 69, another bike frame 560 may include a plurality of members which extend inwardly towards a central location 562. A diagonal member 564 may extend from the handle bar location 500 to the cental location 562. Similarly, a lower member 566 may extend from the pedal location to the central section 562. Finally, an upper member 512 may extend from the seat location 560 to the central location 562. Such a configuration utilizes straight structures which may be easier to manufacture.

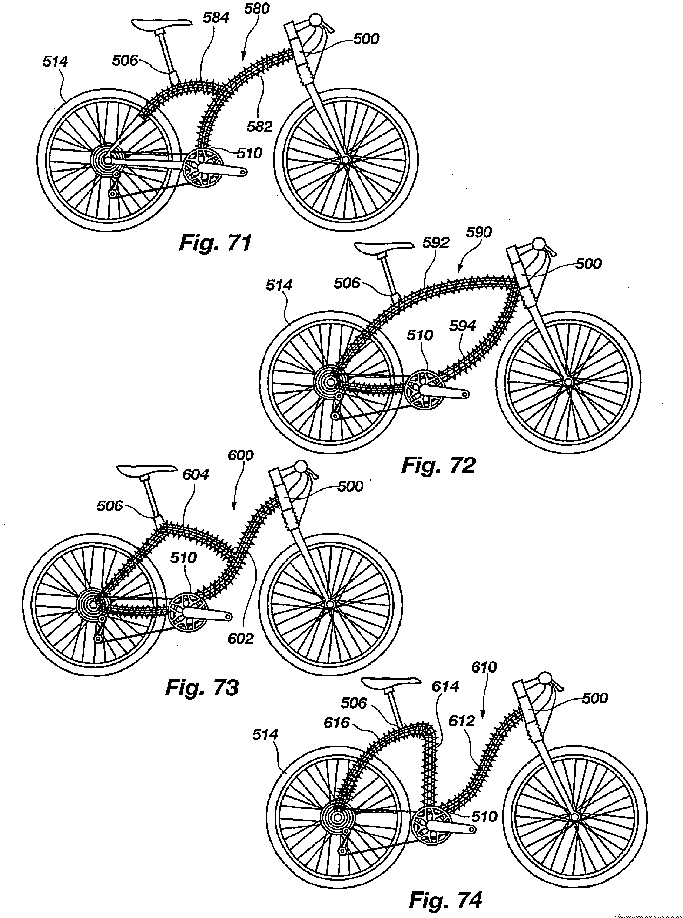

Referring to FIG. 70, another bike frame 570 may utilize curved or arcuate members. For example, an upper member 572 may curve broadly from the handle bar location 500, past the seat location 506, and to the rear wheel location 514. A lower member 574 may extend in a broad arc from the handle bar location 500 to the pedal location 510. The curvature of the member 572 and 574 may provide additional strength. Referring to FIG. 71, another frame 580 may include a broad arcuate member 582 extending from the handle bar location 500 to the pedal location 510, while an additional member 584 extends from the arcuate member 582 past the seat location 506 and towards the rear wheel location 514.

Referring to FIG. 72, another bike frame 590 may include an upwardly curving member 592 extending from the handle bar location 500 pass the seat location to the rear wheel location 514, while a lower member 594 extends from the handle bar location past the pedal location 510 and towards the rear wheel location 514. Thus, the entire frame 590 is formed of the iso-truss structure.

Referring to FIG. 73, another bike frame 600 may have an S-shaped member 602 extending in a first arc from the handle bar location 500 and bending into a second arc extending towards the pedal location 510. An upper member 604 extends from the seat location 506 in an arcuate fashion towards the S-shaped members 602. Referring to FIG. 74, another bike frame 610 forms an S-shape member 612 extending from the handle bar location 500 to the pedal location 510. A vertical member 614 extends upwardly from the pedal location 510 towards the seat location 506. Finally, a rear member 616 extends from the vertical member 614 towards the rear wheel location 514.

Referring to FIGs. 75 and 76, another bike frame 620 is shown in which iso-truss structures are disposed between connectors. A handle bar connector 622 may be disposed at the handle bar location 500 and configured to receive an upper horizontal member 624 and a lower diagonal member 626. An upper horizontal member 624 and a lower diagonal member 626 may be received on extensions of the handle bar connector 622. A seat connector 628 may be disposed at the seat location 506 and have extensions to receive the upper horizontal member 624 and a vertical member 630. A lower member 632 is attached at the pedal location 510 and has extensions to receive the lower diagonal member 626 and the vertical member 630. Thus, relatively straight iso-truss structures 624, 626, and 630 may be utilized and attached to the connectors 622, 628, and 632.

### Method of Manufacturing

As discussed above, the iso-truss structures preferably are formed by fibers impregnated with resin. In addition, the iso-truss structures or helical components preferably are formed by continuous strands of fiber wrapping around the longitudinal axis and along the length of the iso-truss structure. Such a composite iso-truss structure may be formed using a mandrel. It will be appreciated that the complicated geometry of the iso-truss structure presents a manufacturing challenge.

Referring to FIG. 77, a mandrel 700 is shown with fibers 702 disposed thereon forming the iso-truss structures described above. The mandrel 700 can be elongated and shaped to match the desired shape of the iso-truss structure. For example, as shown in FIG. 77, the mandrel 700 is elongated and straight to form an elongated and straight iso-truss structure. It is, of course, understood, that the mandrel 700 may be curved or arcuate, or form other angles in accordance with the desired shape of the iso-truss structure. In addition, the mandrel 700 can be rotationally disposed such that the mandrel 700 may be rotated as the fibers 702 are wrapped thereon.

The mandrel 700 may include an elongated core or body 704, and a plurality of heads 706 disposed thereon. The core or body 704 preferably has a reduced or smaller diameter with respect to the iso-truss structure, such that the core or body 704 may reside within the iso-truss structure without interfering with any of the segments or helical components. The heads 706 preferably are spaced apart from the core or body 704. The heads 706 extend radially from the core or body 704 and towards the exterior nodes 122 of the iso-truss structure. The heads 706 are configured to receive the strands of fiber 702 as they are wrapped about the mandrel 700. Therefore, for an eight node iso-truss structure, eight heads 706 extend radially around the circumference of the core or body 704. In addition, a number of heads 706 extend along the length of the core or body 704 in accordance with the length of the desired iso-truss structure.

Referring to FIG. 78, the heads 706 are shown in greater detail. Each head 706 preferably includes a plurality of indentations 710 for receiving strands of fibers 702. The indentations 710 preferably include two sets of deep indentations 712 and 714 for receiving the strands of fiber 702 forming a pair of opposing helical components. Thus, the set of deep indentations 712 and 714 preferably extend downwardly at an angle to match the angle of the segments. Each set of deep indentations 712 and 714 preferably include two aligned indentations formed at an angle with respect to one another such that each indentation of the set is performing a different segment of the same helical component. The inner section of the indentations 716 is located at the exterior node 122 of the iso-truss structure.

In addition, the indentations 710 preferably include one or more sets of shallow indentations 718 and 720. One set of shallow indentations 718 may be utilized to form longitudinal components of the iso-truss structure, while the other shallow indentations 720 may be utilized to form radial or lateral components of the iso-truss structure.

In order to form an iso-truss structure as described above, strands of fiber can be wrapped around the mandrel in order to create the helical components and segments thereof. The strands of fiber 702 may be wrapped about the mandrel as described above with respect to the helical components, placing the strands of fiber in the indentations of the head. In addition, the strands of fiber may be impregnated with resin as they are wrapped around the mandrel 700. Alternatively, the strands of fiber may be wrapped around the mandrel without impregnating them with resin as discussed above to form a braided pre-form. The resin is then cured and the mandrel may then be removed from the iso-truss structure. Alternatively, the iso-truss structure may be integrally formed with a mandrel and the mandrel may remain therein.

It will be appreciated that the complex geometry of the iso-truss structure, and the extension of the heads from the mandrel, create a challenge in removing the mandrel from the iso-truss structure. Various types of mandrels may be utilized in order to form the iso-truss structure. For example, a dissolvable mandrel may be formed by salt, or sand with a binder, which is dissolved to remove the mandrel from the iso-truss structure. As another example, eutectic metals may be used which can be melted away from the iso-truss structure. As another example, a balloon mandrel may be utilized which includes a sand-filled bladder which is packed with sand and vacuum sealed to form the mandrel, and then the vacuum is released and the bladder emptied of sand to remove the mandrel from the iso-truss structure.

In addition, the iso-truss structure may be formed by wet or dry wrapping fibers around an internal mold, and then enclosed by an external mold, similar to injection molding. Such a molding process can provide good consolidation, good shape definition, and good surface finish.

Referring to FIG. 79, a collapsible mandrel 720 is shown which advantageously may be removed from an iso-truss structure and reused. The collapsible mandrel 720 is similar to the mandrel 700 described above and can include an elongated tubular body 722 and a plurality of heads 724. The hollow tubular body 722 can include a plurality of holes or apertures 726 for receiving a plurality of pins 728 therein. The pins 728 may be inserted through the holes or apertures 726 of the tubular body 722, and the heads 724 disposed on a pin 728. Thus, the heads 724 extend from the tubular body 722 on the pin 728. An elongated core 730 is removably disposed within the tubular body 722. In addition, a plurality of inserts 732 are also removably disposed in a tubular body 722 between the core 730 and the tubular body 722. The insert 732 also includes a plurality of holes or apertures 734 for receiving the pin 728. Thus, the pin 728 extends through the tubular body 722 and the insert 734 to abut the core 730. Thus, the core 730 maintains the heads extending from the tubular body 722 on the pin 728.

After the iso-truss structure has been formed on the mandrel 720, the core 730 may be removed from the tubular body 722 by sliding the core 730 outwardly from the tubular body 722. Removal of the core 730 allows the insert 732 to be removed from the tubular body 722, and the pins 728 to move inwardly into the tubular body 722. Thus, the pins may be removed and the tubular body 722 removed from the iso-truss structure. In addition, the heads 724 may be removed.

Referring again to FIG. 77, an end plate 120 may be disposed on the mandrel 700 at one or both ends thereof. As discussed above with respect to the FIGs. 12a and b, the end plate 120 has a hole or aperture 124 through which the core or body 704 of the mandrel 700 may be received. The strands of fiber 702 may then be wrapped around the indentations 123 through the end plate 120 to integrally form the end plate 120 with the iso-truss structure. The core or body 704 of the mandrel 700 may then be removed through the aperture 124 of the end plate 120.

The mandrel 740 may be assembled by inserting the pins 728 into apertures in the core or tube 722. Collars also may be disposed at the ends of the tube 722 to form the integral connectors, as described above. The heads 724 are disposed on the pins 728. The fibers are wrapped about the heads 724 to form the helical members and axial members. In addition, the fibers are wrapped around the collars to form the integral connectors. The mandrel is removed to leave the structure.

### Additional Applications

Referring to FIG. 80, a support member 750 may utilize an elongated iso-truss structure 752 as discussed above to hold and secure precast concrete forms 754. The support member 750 may include an iso-truss structure 752 with end plates 120 on the ends thereof to receive connection members 754 and 756 for engaging the ground and the concrete form 754. The strength of the iso-truss structure 752 provides strength for holding up the precast concrete form 754, while the light weight of the iso-truss structure 752 allows the support members 750 to be easily manipulated and handled.

Referring to FIG. 81, basketball support 760 is shown for supporting a basketball standard 762. The basketball support 760 may include an iso-truss structure 764 as described above. The basketball support 760 may include a vertical iso-truss section 766 and a horizontal iso-truss structure 768 connected to the vertical section 766 for extending the basketball standard 762 over the court.

Referring to FIG. 82, a backpack 770 may include a frame 772 which utilizes iso-truss structure 774 as described above. The frame 772 may include a perimeter formed of iso-truss structures including a pair of spaced apart vertical members and interconnecting horizontal members. The iso-truss structure 774 provides strength and light weight to the backpack 770. Referring to FIG. 83, iso-truss structure 790 may be utilized to form a mast or other support structures 792 on a boat 794 or other marine structure. The iso-truss structure 790 may be formed with composite material, and thus resist corrosion.

Referring to FIG. 84, a bridge 800 is shown utilizing an iso-truss structure 802. The iso-truss structure 802 may be arcuate and various bridge components may be suspended therefrom.

Referring to FIGs. 85 and 86, an oil platform 810 is shown utilizing iso-truss structures 812 as support columns for supporting the oil platform 810. Again, these iso-truss structures 812 preferably are formed with composite material to resist corrosion. In addition, the open structure of the iso-truss structures 812 provide lower drag forces on a structure.

Referring to FIGs. 87, an iso-truss structure 830 is shown utilized with a submarine 832. The iso-truss structure 830 provides the internal structure supporting the hull 834 of the submarine 832. Thus, the hull 834 is formed around the iso-truss structure 830, while the interior of the iso-truss structure 830 may be utilized for the crew, and interior wall support. In addition, the hollow or open structure between the segments or helical components of the iso-truss structure 830 may also be utilized for equipment, piping, etc. It is, of course, understood that the iso-truss structures may be utilized for other structures, vehicles, and vessels.

Referring to FIGs. 88, an iso-truss structure 840 may be utilized for aircraft or airborne devices such as artillery or missiles 842. Again, the iso-truss structure 840 provides an exterior shell or exoskeleton for supporting an outer skin, and an interior for containing other items. Thus, the iso-truss structure 840 provides strength and light weight, which is particularly useful in aircraft or airborne applications. Referring to FIGs. 89a and b, an iso-truss structure 842 may be included as part of the fuselage of an aircraft. Passenger seats may be located in the central void or space of the structure 842, while other components, such as wiring, hydraulics, fuel lines, etc., may be disposed within the structure 842 itself, or between the segments. Such iso-truss structures also may be utilized for wing structures, and other components of the aircraft.

Referring to FIG. 90, the structures described above also may be utilized in aerospace applications, such as with satellites or other orbiting structures 844. The structures may be collapsible/expandable to optimize limited cargo space. The structures also may be partially formed, such as a braided preform described above, and finally formed in space.

Referring to FIG. 91, iso-truss structures 846 also may be utilized in water tower applications.

The iso-truss structures can be used in buildings and construction. Referring to FIG. 92, a roofing system 900 can utilize iso-truss structures similar to those described above. Inclined or horizontal iso-truss structures 902 can form beams to support a roof 904. Vertical iso-truss structures 906 can be used as columns to support the roof inclined iso-truss structures 902. The iso-truss provides structural strength, and is light weight.

The iso-truss structures can be used in vessels, boats and ships. Referring to FIG. 93, a kayak 910 can utilize tapping iso-truss structures as described above. A frame 912 can be formed by an iso-truss structure that tappers at each end. A skin or shell 914 can be formed over the frame 912. A portion or side 916 of a bay of the iso-truss can be removed to allow access into the kayak 910, and allow the user's body to extend through the frame 912, and into the hollow of the frame. The iso-truss provides structural strength to the kayak, while providing space on the interior for the passenger.

Referring to FIG. 94, a solid fuel rocket 917 is shown with an iso-truss structure 918. The solid rocket fuel can be disposed about the members of the iso-truss. The iso-truss can burn as the rocket fuel burns, thus eliminating falling rocket casings. The nozzle 919 can be configured to travel along the rocket 917 as the fuel and iso-truss burn.

Referring to FIG. 95, an artificial reef 920 can be created using a plurality of iso-truss structures 922. The iso-truss can be weighted so that it sinks to the bottom of the sea floor. For example, a weight 924, such as concrete, can be attached to one end of the iso-truss. The other end can be free to extend upwardly from the sea floor. Thus, the iso-truss can be transported to the desired location, and dropped overboard. Several iso-truss structures can be attached together. The iso-truss structures can be formed with an environmentally friendly epoxy to promote growth on the iso-truss.

The iso-truss structures also can be used to transmit torque or rotational movement. Referring to FIG. 96, a drive shaft 930 can be formed with an iso-truss structure 932 similar to those described above. The drive shaft or iso-truss can be rigid or flexible. One end of the drive shaft 930 can be coupled to an engine or transmission 934, while the other end can be coupled to a transfer case or wheel 936. Such a configuration can be useful for vehicles. It will be appreciated that such a drive shaft can be used in other applications as well. In addition, the iso-truss can be used for drills, such as oil, water and mining drills. In such a configuration, one end can be coupled to a driver, while the other end is coupled to a drill bit or cutter.

Referring to FIG. 97, a shock absorber 940 utilizes an iso-truss structure 942 with no axial members. Thus, the iso-truss structure can compress in a longitudinal or axial direction to absorb shock. In addition, a bladder 944, such as a gas filled bladder, can be disposed in the iso-truss.

Referring to FIG. 98, an iso-truss structure 950 can be configured with both rigid sections 952, and a flexible section 954 to form a joint. The rigid sections 952 can be formed with axial members for stiffness or rigidity, while the flexible section 954 can be formed without the axial members for flexibility.

Referring to FIG. 99, a tank or pressure vessel 960 can include an iso-truss structure 962 in which an continuous interior wall 964 is formed. The tank or pressure vessel 960 can contain fluids, such as liquids or gases.

Referring to FIG. 100, a gear system 970 includes a plurality of gears 972 formed of iso-truss structures which rotate and engage one another. The exterior nodes of the gears 972 or iso-truss structures intermesh.

Referring to FIGs. 101a and 101b, impact barriers 974 and 976 can include iso-truss structures. The iso-truss structure can be oriented to be impacted axially or longitudinally, as shown in FIG. 101a, or laterally, as shown in FIG. 101b. Referring to FIGs. 102a and 102b, the impact barriers can include a compressible material, such as foam, disposed in and/or around the iso-truss structure. In one aspect, the foam material 980 can form a shell around all or some of the iso-truss structure, and between the internal and external nodes. In another aspect, the foam material 982 can be disposed in the interior of the iso-truss structure.

Referring to FIGs. 103a-c, the iso-truss structure can be elongated on one side, or in one direction, to create an elongated cross-section. Such configuration can be better suited or more efficient in applications where one direction has preferential loading, such as a floor joist. The configuration can have different structural properties in different directions, so that the iso-truss can be configured for the loads of a particular application.

The configurations shown in FIGs. 103a-c are similar in many respects to the iso-truss structures described above and illustrated herein. Some of the segments of the helical components have been elongated with respect to the others, or have a greater length, to create the elongated cross section. In addition, the angular orientation between some adjacent or sequential segments is greater.

Referring to FIG. 103a, an eight node iso-truss structure 1000 is shown. Some of the helical components include longer segments 1002 and shorter segments 1004 to create a rectangular cross sectional shape. For example, the helical and reverse helical components can form the rectangular cross sectional shape. Other of the helical components include larger angles 1006 between some adjacent segments, and smaller angles 1008 between other adjacent segments, to create a diamond shaped cross section. For example, the rotated and rotated reverse helical components can form the diamond shaped cross section.

Referring to FIG. 103b, a ten node iso-truss structure 1010 is shown which is elongated to have a more elliptical shape. The helical components can have both 1) segments of different lengths, and 2) different angles between adjacent segments. For example, the helical and reverse helical components can form a first, elongated pentagon 1012, while the rotated and rotated reverse helical components form a second, elongated pentagon 1014, which together form the elliptical shape. In addition, the helical components have five segments forming a single, substantially complete rotation.

Referring to FIG. 103c, another iso-truss structure 1020 is shown which has multiple cross sectional shapes. The structure 1020 can include both rectangular cross sectional shapes, and elongated diamond cross sectional shapes. The helical components have four segments per rotation, but utilizes three helical components for every two helical components in the typical structure.

The iso-truss structures described above can be utilized in other applications as well. For example, the iso-truss structure can be included in the mast of a boat with a sail coupled thereto. The iso-truss structure can be included in a flag post with a flag coupled thereto. The iso-truss structure can be included in a fence post with fence members attached thereto.

In addition, a skin, covering or wrap may be disposed around the structure. Such a skin may strengthen the structure, prevent climbing, and/or be aesthetic.

The iso-truss structures described above also may be utilized to reinforce concrete. For example, concrete may be poured or otherwise formed about the structures, and may fill the interior of the structures.

The iso-truss structures have been described above with particular reference to an eight node structure in which the helical components have four straight segments forming a single, complete rotation about the axis. It is of course understood that other configuration can be useful, including for example, structure with five, six, seven, nine, twelve, etc. nodes.

It is to be understood that the above-described arrangements are only illustrative of the application of the principles of the present invention. Numerous modifications and alternative arrangements may be devised by those skilled in the art without departing from the scope of the present invention as defined by the appended claims, which are intended to cover such modifications and arrangements. Thus, while the present invention has been shown in the drawings and fully described above with particularity and detail in connection with what is presently deemed to be the most practical and preferred embodiment(s) of the invention, it will be apparent to those of ordinary skill in the art that numerous modifications, including, but not limited to, variations in size, materials, shape, form, function and manner of operation, assembly and use may be made, without departing from the invention as set forth in the claims.

## Claims

1. A structural member (10), comprising:
a) at least two, spaced apart, helical components (30,32) each having:
1) a common longitudinal axis (14),
2) a common angular orientation about the axis, and
3) four elongate, straight segments (22) rigidly connected end to end in a helical configuration forming a single, substantially complete rotation about the axis (14); and
b) at least one reverse helical component (34), attached to the at least two helical components (30,32), having:
1) a common longitudinal axis (14) with the at least two helical components (30,32),
2) an opposing angular orientation with respect to the two helical components; (30, 32) and
3) four elongate, straight segments (22) rigidly connected end to end in a helical configuration forming a single, substantially complete rotation about the axis; said at least two helical, components (30,32) and said at least one reverse helical component (34) forming a first square when viewed in cross section along said common longitudinal axis (14);
**characterised in that** said structural member (10) further comprises
c) at least two, spaced apart, rotated helical components (80, 92), attached to and rotated with respect to the at least two helical components (30, 32) and at least one reverse helical component (34), each having:
1) a common longitudinal axis (14) with said at least two helical components (30, 32)
2) A common angular orientation about the longitudinal axis (14), and
3) four elongate, straight segments (22) rigidly connected end to end in a helical configuration forming a single, substantially complete rotation about the axis (14); and
d) at least one rotated reverse helical component (98), attached to and rotated with respect to the at least two helical components (30, 32) and at least one reverse helical component (34), having:
1) a common longitudinal axis (14) with the at least two rotated helical components (80, 92),
2) an opposing angular orientation with respect to the two rotated helical components (80, 92), and
3) four elongate, straight segments (22) rigidly connected end to end in a helical configuration forming a single, substantially complete rotation about the axis, said at least two rotated helical components (80, 92) and said at least one rotated reverse helical component (98) forming a second square when viewed in cross section along said common longitudinal axis (14), said second square being rotated with respect to said first square.

2. A structural member (10) in accordance with claim 1, wherein all of the helical components have continuous strands of fiber; and wherein the helical components are attached to one another at intersecting locations by over-lapping the fibers of the helical components.

3. A structural member (10) in accordance with claim 1, wherein the helical components define a hollow interior substantially void of material.

4. A structural member (10) in accordance with claim 1, wherein the helical components define openings there between.

5. A structural member (10) in accordance with claim 1, wherein helical components define an imaginary tubular member of square cross section.

6. A structural member (10) in accordance with claim 1, wherein the segments (22) of the helical components form an imaginary tubular member having a cross section of an eight-pointed star when viewed along said common longitudinal axis (14).

7. A structural member (10) in accordance with claim 1, further comprising: an end plate (120), attached at an end of the helical components (30, 32, 34, 80, 92, 98), to attach the helical components to another object.

8. A structural member (10) in accordance with claim 7, wherein the helical components have continuous strands of fiber; and wherein the end plate (120) is attached by winding the continuous strands of fiber around the end plate.

9. A structural member (10) in accordance with claim 7, wherein the end plate (120) includes a perimeter (122), a plurality of indentations (123a) formed about the perimeter to receive strands of fiber, and a plurality of holes (121) to attach the end plate to another object.

10. A structural member (10) in accordance with claim 1,
wherein the helical components and segments form a repeating pattern of triangles and tetrahedrons; and further comprising:
a connector (180), attached to the helical components and segments, to attach other objects to the helical components and segments, the connector being elongated and having a substantially triangular, cross sectional shape, the connector extending through at least two of the triangles formed by the helical components and segments.

11. A structural member (10) in accordance with claim 1, wherein the axes are vertically oriented, a lower end is attached to a support surface, and an upper end is located above the lower end; and further including another object attached to the upper end selected from the group consisting of: a sign placard with indicia; a horizontal utility member configured to hold utility lines; a light source.

12. A structural member (10) in accordance with claim 1, wherein the at least one reverse helical component (34) forms an angle with respect to the at least two helical components greater than approximately 60 degrees.

13. A structural member (110) in accordance with claim 12, wherein the at least one reverse helical component (34) forms an angle with respect to the at least two helical components greater than approximately 75 degrees.

14. A structural member (10) in accordance with claim 1, wherein the helical members are laterally flexible, and are bendable between;
1) a first, straight position in Which the axes are substantially straight; and
2) a second, arcuate position in which the axes are substantially arcuate.

15. A structural member (10) in accordance with claim 14, wherein the helical members store energy in one of the positions.

16. A structural member (10) in accordance with claim 14, wherein the helical members are rotationally rigid about the longitudinal axes,

17. A structural member (10) in accordance with claim 1, wherein the least two, spaced apart helical components have a common arcuate axis; and wherein the least one reverse helical component (34) have a common arcuate axis with at least two helical components (30, 32).

18. A structural member (10) in accordance with claim 17, wherein the arcuate axes are circular.

19. A structural member (10) in accordance with claim 17, wherein the arcuate axes include a first curvature, and a different second curvature.

20. A structural member (10) in accordance with claim 1, wherein the segments of each helical component sequentially reduce in length along the axes such that the structural member tapers.

21. A structural member (10) in accordance with claim 1, wherein the helical components include fiber and are flexible and collapsible until impregnated with a resin matrix

22. A structural member (10) in accordance with claim 21, wherein the helical components include a plurality of strands of fiber bound together.

23. A structural member (10) in accordance with claim 1, wherein the structural member is configured as a bicycle frame and includes a plurality of members each extending to and between at least one of:
a) a handlebar location (500) configured to attach to a handlebar (502) and front fork (504);
b) a seat location (506) configured to attach to a seat (508);
c) a peddle location (510) configured to be attached to a peddle assembly (512); and
d) a rear wheel location (514) configured to be attached to a rear wheel (516).

24. A. method for forming a structural member (10) according to one of the preceding claims, comprising the steps of:
a) providing a mandrel (700);
b) wrapping a fiber (702) around the mandrel (700) in order to create at least two helical components, each component having four elongated, straight segments, the at least two helical components having a common longitudinal axis, a common angular orientation about the axis, and forming a single, substantially complete rotation about the axis;
c) wrapping a fiber (702) around a mandrel (700) in order to create at least one reverse helical component having four elongate, straight segments having a common longitudinal axis with the at least two helical components, but in an opposing angular orientation, and forming a single, substantially complete rotation about the axis;
d) wrapping a fiber (702) around the mandrel (700) in order to create at least two rotated helical components, rotated with respect to the at least two helical components and at least one reverse helical component, each component having four elongated, straight segments, the at least two rotated helical components having a common longitudinal axis, a common angular orientation about the axis, and forming a single, substantially complete rotation about the axis;
e) wrapping a fiber (702) around the mandrel (700) in order to create at least one rotated reverse helical component, rotated with respect to the at least two helical components and at least one reverse helical component, the rotated reverse helical component having four elongate, straight segments having a common longitudinal axis with the at least two rotated helical components, but in an opposing angular orientation, and forming a single, substantially complete rotation about the axis;
f) adding a matrix to the fiber; and
g) curing the matrix.

25. A method in accordance with claim 24, wherein the step of providing a mandrel further includes:
providing a mandrel (700) having an elongated core (704), and a plurality of heads (706) disposed longitudinally and radially about the core, each head configured to receive and hold fiber (702) for at least two, opposing helical components, and including four angled indentations (710), two angled indentations for each helical component.

26. A method in accordance with claim 24, further comprising the step of:
wrapping a fiber (702) along a length of the mandrel (700) in order to create at least one longitudinal component parallel with the longitudinal axes; and
wherein the step of providing a mandrel further includes:
providing a mandrel having an elongated core (704), and a plurality of heads (706) disposed longitudinally and radially about the core, each head configured to receive and hold fiber (702) for at least two, opposing helical components and at least one longitudinal component, and including at least six indentations (710), including two angled indentations for each helical component and two indentations for the longitudinal component.

27. A method in accordance with claim 24, wherein the step of providing a mandrel further includes providing a collapsible mandrel (720) having:
a) an elongated, hollow tube (722) including a plurality of holes (726),
b) an elongated core (730), removably disposed within the tube (722),
c) a plurality of inserts (732), removably disposed between the core (730) and the tube (722), having a plurality of holes (734),
d) a plurality of pins (728), removably disposed in the holes (726, 734) of the tube and inserts, and
e) a plurality of heads (724) disposed on the pins (728); and further including the steps of:
a) removing the core from the tube after curing;
b) removing the inserts from the core;
c) displacing the pins through the holes into the tube;
d) removing the tube; and
e) removing the heads.

## Patentansprüche

1. Bauelement (10), Folgendes umfassend:
a) mindestens zwei voneinander beabstandete spiralförmige Komponenten (30, 32), von denen jede Folgendes aufweist:
1) eine gemeinsame Längsachse (14),
2) eine gemeinsame winkelförmige Ausrichtung um die Achse und
3) vier längliche gerade Segmente (22), die an ihren Enden in einer spiralförmigen Gestaltung starr verbunden sind, die eine einzelne, im Wesentlichen vollständige Umdrehung um die Achse (14) bildet, und
b) mindestens eine umgekehrt spiralförmige Komponente (34), die an den mindestens zwei spiralförmigen Komponenten (30, 32) angebracht ist, Folgendes aufweisend:
1) eine gemeinsame Längsachse (14) mit den mindestens zwei spiralförmigen Komponenten (30, 32),
2) eine im Verhältnis zu den zwei spiralförmigen Komponenten (30, 32) entgegengesetzte winkelförmige Ausrichtung und
3) vier längliche gerade Segmente (22), die an ihren Enden in einer spiralförmigen Gestaltung starr verbunden sind, die eine einzelne, im Wesentlichen vollständige Umdrehung um die Achse (14) bildet, wobei die mindestens zwei spiralförmigen Komponenten (30, 32) und die mindestens eine umgekehrt spiralförmige Komponente (34), im Querschnitt entlang der gemeinsamen Längsachse (14) betrachtet, ein erstes Quadrat bildet, **dadurch gekennzeichnet, dass** das Bauelement (10) ferner Folgendes umfasst:
c) mindestens zwei voneinander beabstandete, gedrehte, spiralförmige Komponenten (80, 92), die an den mindestens zwei spiralförmigen Komponenten (30, 32) und der mindestens einen umgekehrt spiralförmigen Komponente (34) angebracht und im Verhältnis zu diesen gedreht sind und die jeweils Folgendes aufweisen:
1) eine gemeinsame Längsachse (14) mit den mindestens zwei spiralförmigen Komponenten (30, 32),
2) eine gemeinsame winkelförmige Ausrichtung um die Längsachse (14) und
3) vier längliche gerade Segmente (22), die an ihren Enden in einer spiralförmigen Gestaltung starr verbunden sind, die eine einzelne, im Wesentlichen vollständige Umdrehung um die Achse (14) bildet, und d) mindestens eine gedrehte, umgekehrt spiralförmige Komponente (98), die an den mindestens zwei spiralförmigen Komponenten (30, 32) und der mindestens einen umgekehrt spiralförmigen Komponente (34) angebracht und im Verhältnis zu diesen gedreht sind, Folgendes aufweisend:
1) eine gemeinsame Längsachse (14) mit den mindestens zwei gedrehten spiralförmigen Komponenten (80, 92),
2) eine im Verhältnis zu den zwei gedrehten spiralförmigen Komponenten (80, 92) entgegengesetzte winkelförmige Ausrichtung und
3) vier längliche gerade Segmente (22), die an ihren Enden in einer spiralförmigen Gestaltung starr verbunden sind, die eine einzelne, im Wesentlichen vollständige Umdrehung um die Achse (14) bildet, wobei die mindestens zwei gedrehten spiralförmigen Komponenten (80, 92) und die mindestens eine gedrehte, umgekehrt spiralförmige Komponente (98), im Querschnitt entlang der gemeinsamen Längsachse (14) betrachtet, ein zweites Quadrat bilden, das im Verhältnis zum ersten Quadrat gedreht ist.

2. Bauelement (10) nach Anspruch 1, wobei alle spiralförmigen Komponenten durchgängige Faserstränge aufweisen und wobei die spiralförmigen Komponenten an Kreuzungspositionen miteinander verbunden sind, indem die Fasern der spiralförmigen Komponenten einander überlappen.

3. Bauelement (10) nach Anspruch 1, wobei die spiralförmigen Komponenten einen hohlen Innenraum definieren, in dem im Wesentlichen kein Material vorhanden ist.

4. Bauelement (10) nach Anspruch 1, wobei die spiralförmigen Komponenten zwischen sich Öffnungen definieren.

5. Bauelement (10) nach Anspruch 1, wobei die spiralförmigen Komponenten ein imaginäres röhrenförmiges Element mit quadratischem Querschnitt definieren.

6. Bauelement (10) nach Anspruch 1, wobei die Segmente (22) der spiralförmigen Komponenten, entlang der gemeinsamen Längsachse (14) betrachtet, ein imaginäres röhrenförmiges Element mit einem Querschnitt in Form eines achteckigen Sterns definieren.

7. Bauelement (10) nach Anspruch 1, ferner eine Endplatte (120) umfassend, die an einem Ende der spiralförmigen Komponenten (30, 32, 34, 80, 92, 98) angebracht ist, um die spiralförmigen Komponenten an einem anderen Gegenstand anzubringen.

8. Bauelement (10) nach Anspruch 7, wobei die spiralförmigen Komponenten durchgängige Faserstränge aufweisen und wobei die Endplatte (120) durch Wickeln der durchgängigen Faserstränge um die Endplatte angebracht ist.

9. Bauelement (10) nach Anspruch 7, wobei die Endplatte (120) einen Außenumfang (122) beinhaltet, mehrere im Außenumfang gebildete Vertiefungen (123a) zur Aufnahme der Faserstränge und mehrere Öffnungen (121), um die Endplatte an einem anderen Gegenstand anzubringen.

10. Bauelement (10) nach Anspruch 1,
wobei die spiralförmigen Komponenten und Segmente ein wiederkehrendes Muster aus Dreiecken und Tetraedern bilden und ferner Folgendes umfassen:
ein Verbindungsstück (180), das an den spiralförmigen Komponenten und Segmenten angebracht ist, um andere Gegenstände an den spiralförmigen Komponenten und Segmenten anzubringen, wobei das Verbindungsstück länglich ist und eine im Wesentlichen dreieckige Querschnittsform aufweist und sich das Verbindungsstück durch mindestens zwei der durch die spiralförmigen Komponenten und Segmente gebildeten Dreiecke erstreckt.

11. Bauelement (10) nach Anspruch 1, wobei die Achsen vertikal ausgerichtet sind, ein unteres Ende an einer Stützfläche angebracht ist und ein oberes Ende über dem unteren Ende angeordnet ist und wobei das Bauelement ferner einen weiteren Gegenstand beinhaltet, der am oberen Ende angebracht ist und aus der Gruppe ausgewählt ist, die aus einem Hinweisschild mit Angaben, einer horizontalen Versorgungseinrichtung, einem Element zum Halten von Versorgungsleitungen, einer Lichtquelle ausgewählt ist.

12. Bauelement (10) nach Anspruch 1, wobei die mindestens eine umgekehrt spiralförmige Komponente (34) im Verhältnis zu den mindestens zwei spiralförmigen Komponenten einen Winkel bildet, der größer als etwa 60 Grad ist.

13. Bauelement (10) nach Anspruch 12, wobei die mindestens eine umgekehrt spiralförmige Komponente (34) im Verhältnis zu den mindestens zwei spiralförmigen Komponenten einen Winkel bildet, der größer als etwa 75 Grad ist.

14. Bauelement (10) nach Anspruch 1, wobei die spiralförmigen Komponenten seitlich flexibel sind und zwischen Folgendem biegsam:
1) einer ersten, geraden Position, in welcher die Achsen im Wesentlichen gerade sind
und
2) einer zweiten gebogenen Position, in der die Achsen im Wesentlichen im Wesentlichen bogenförmig sind.

15. Bauelement (10) nach Anspruch 14, wobei die spiralförmigen Komponenten in einer der Positionen Energie speichern.

16. Bauelement (10) nach Anspruch 14, wobei die spiralförmigen Komponenten um die Längsachsen drehstarr sind.

17. Bauelement (10) nach Anspruch 1, wobei die mindestens zwei voneinander beabstandeten spiralförmigen Komponenten eine gemeinsame bogenförmige Achse aufweisen und wobei die umgekehrt spiralförmige Komponente (34) mit den mindestens zwei spiralförmigen Komponenten (30, 32) eine gemeinsame bogenförmige Achse aufweist.

18. Bauelement (10) nach Anspruch 17, wobei die bogenförmigen Achsen kreisförmig sind.

19. Bauelement (10) nach Anspruch 17, wobei die bogenförmigen Achsen eine erste Krümmung und eine andersartige zweite Krümmung beinhalten.

20. Bauelement (10) nach Anspruch 1, wobei die Segmente jeder spiralförmigen Komponente entlang der Achsen derart schrittweise in der Länge reduziert sind, dass sich das Bauelement verjüngt.

21. Bauelement (10) nach Anspruch 1, wobei die spiralförmigen Komponenten Fasern beinhalten und bis zur Imprägnierung mit einer Harzmatrix flexibel und zusammenklappbar sind.

22. Bauelement (10) nach Anspruch 21, wobei die spiralförmigen Komponenten mehrere miteinander verbundene Faserstränge beinhalten.

23. Bauelement (10) nach Anspruch 1, wobei das Bauelement als Fahrradrahmen gestaltet ist und mehrere Elemente beinhaltet, von denen sich jedes zu und zwischen mindestens einem der Folgenden erstreckt:
a) eine Lenkstangenposition (500), die dafür gestaltet ist, an einer Lenkstange (502) und einer Vordergabel (504) angebracht zu werden,
b) einer Sattelposition (506), die dafür gestaltet ist, an einem Sattel (508) angebracht zu werden,
c) eine Pedalposition (510), die dafür gestaltet ist, an einer Pedalanordnung (512) angebracht zu werden, und
d) eine Hinterradposition (514), die dafür gestaltet ist, an einem Hinterrad (516) angebracht zu werden.

24. Verfahren zum Bilden eines Bauelements (10) nach einem der vorhergehenden Ansprüche, folgende Schritte umfassend:
a) Bereitstellen eines Spanndorns (700),
b) Wickeln einer Faser (702) um den Spanndorn (700), um mindestens zwei spiralförmige Komponenten mit jeweils vier länglichen geraden Elementen zu erzeugen, wobei die mindestens zwei spiralförmigen Komponenten eine gemeinsame Längsachse und eine gemeinsame winkelförmige Ausrichtung um die Achse aufweisen und eine einzelne, im Wesentlichen vollständige Umdrehung um die Achse bilden,
c) Wickeln einer Faser (702) um einen Spanndorn (700), um mindestens eine umgekehrt spiralförmige Komponente mit vier länglichen geraden Segmenten zu erzeugen, die mit den mindestens zwei spiralförmigen Komponenten eine gemeinsame Achse aufweist, sich aber in einer entgegengesetzten winkelförmigen Ausrichtung befindet und eine einzelne, im Wesentlichen vollständige Umdrehung um die Achse bildet,
d) Wickeln einer Faser (702) um den Spanndorn (700), um mindestens zwei gedrehte spiralförmige Komponenten zu erzeugen, die im Verhältnis zu den mindestens zwei spiralförmigen Komponenten und der mindestens einen umgekehrt spiralförmigen Komponente gedreht sind, wobei jede Komponente vier längliche gerade Segmente aufweist, wobei die mindestens zwei gedrehten spiralförmigen Komponenten eine gemeinsame Längsachse und eine gemeinsame winkelförmige Ausrichtung um die Achse aufweisen und eine einzelne, im Wesentlichen vollständige Umdrehung um die Achse bilden,
e) Wickeln einer Faser (702) um den Spanndorn (700), um mindestens eine gedrehte, umgekehrt spiralförmige Komponente zu erzeugen, die im Verhältnis zu den mindestens zwei spiralförmigen Komponenten und der mindestens einen umgekehrt spiralförmigen Komponente gedreht ist, wobei die gedrehte, umgekehrt spiralförmige Komponente vier längliche gerade Segmente aufweist, mit den mindestens zwei gedrehten spiralförmigen Komponenten eine gemeinsame Achse aufweist, sich aber in einer entgegengesetzten winkelförmigen Ausrichtung befindet, und eine einzelne, im Wesentlichen vollständige Umdrehung um die Achse bildet,
f) Hinzufügen einer Matrix zu der Faser und
g) Härten der Matrix.

25. Verfahren nach Anspruch 24, wobei der Schritt des Bereitstellens eines Spanndorns ferner Folgendes beinhaltet:
Bereitstellen eines Spanndorns (700) mit einem länglichen Kern (704) und mehreren Köpfen (706), die längs und radial um den Kern angeordnet sind, wobei jeder Kopf dafür gestaltet ist, Fasern (702) für mindestens zwei entgegengesetzte spiralförmige Komponenten aufzunehmen und zu halten, wobei der Spanndorn vier winklige Vertiefungen (710) beinhaltet, zwei winklige Vertiefungen für jede spiralförmige Komponente.

26. Verfahren nach Anspruch 24, ferner folgenden Schritt umfassend:
Wickeln einer Faser(702) entlang der Länge eines Spanndorns (700), um mindestens eine längs gerichtete Komponente parallel zur Längsachse zu bilden, und wobei der Schritt des Bereitstellens eines Spanndorns ferner Folgendes beinhaltet:
Bereitstellen eines Spanndorns mit einem länglichen Kern (704) und mehreren Köpfen (706), die längs und radial um den Kern angeordnet sind, wobei jeder Kopf dafür gestaltet ist, Fasern (702) für mindestens zwei entgegengesetzte spiralförmige Komponenten und mindestens eine längs gerichtete Komponente aufzunehmen und zu halten, wobei der Spanndorn mindestens sechs Vertiefungen (710) beinhaltet, einschließlich zweier winkliger Vertiefungen für jede spiralförmige Komponente und zwei Vertiefungen für die längs gerichtete Komponente.

27. Verfahren nach Anspruch 24, wobei der Schritt des Bereitstellens eines Spanndoms ferner das Bereitstellen eines zusammenklappbaren Spanndorns (720) beinhaltet, der Folgendes aufweist:
a) eine längliche hohle Röhre (722), die mehrere Öffnungen (726) beinhaltet,
b) einen länglichen Kern (730), der entfernbar in der Röhre (722) angeordnet ist,
c) mehrere Einsätze (732), die entfernbar zwischen dem Kern (730) und der Röhre (722) angeordnet sind und mehrere Öffnungen (734) aufweisen,
d) mehrere Stifte (728), die entfernbar in den Öffnungen (726, 734) der Röhre und der Einsätze angeordnet sind, und
e) mehrere Köpfe (724), die auf den Stiften (728) angeordnet sind, und ferner Folgende Schritte beinhaltend:
a) Entfernen des Kerns aus der Röhre nach dem Härten,
b) Entfernen der Einsätze aus dem Kern,
c) Verschieben der Stifte durch die Öffnungen in die Röhre,
d) Entfernen der Röhre und
e) Entfernen der Köpfe.

## Revendications

1. Un membre structural (10) se composant de ce qui suit :
a) au moins deux éléments hélicoïdaux espacés l'un de l'autre (30, 32) ayant chacun :
1) un axe longitudinal commun (14),
2) une orientation angulaire commune autour de l'axe, et
3) quatre segments rectilignes allongés (22) accouplés de manière rigide bout à bout selon une configuration hélicoïdale, formant une rotation simple et sensiblement complète autour de l'axe (14) ; et
b) au moins un élément hélicoïdal inverse (34) fixé aux au moins deux éléments hélicoïdaux (30, 32), ayant :
1) un axe longitudinal commun (14) avec les au moins deux éléments hélicoïdaux (30, 32),
2) une orientation angulaire opposée par rapport aux deux éléments hélicoïdaux (30, 32) ; et
3) quatre segments rectilignes allongés (22) accouplés de manière rigide bout à bout selon une configuration hélicoïdale, formant une rotation simple et sensiblement complète sur l'axe ; les au moins deux éléments hélicoïdaux (30, 32) et le au moins un élément hélicoïdal inverse (34) formant un premier carré lorsqu'on les observe transversalement le long de l'axe longitudinal commun (14) ; **se caractérisant par le fait que** chaque membre structural (10) comporte également :
c) au moins deux éléments hélicoïdaux tournés espacés l'un de l'autre (80, 92), fixés à et tournés par rapport aux au moins deux éléments hélicoïdaux (30, 32) et au moins un élément hélicoïdal inverse (34), chacun ayant :
1) un axe longitudinal commun (14) avec les au moins deux éléments hélicoïdaux (30, 32),
2) une orientation angulaire commune autour de l'axe longitudinal (14), et
3) quatre segments rectilignes allongés (22) accouplés de manière rigide bout à bout selon une configuration hélicoïdale, formant une rotation simple et sensiblement complète autour de l'axe (14) ; et d) au moins un élément hélicoïdal inverse tourné (98) fixé à et tourné par rapport aux au moins deux éléments hélicoïdaux (30, 32) et au moins un élément hélicoïdal inverse (34), ayant :
1) un axe longitudinal commun (14) avec les au moins deux éléments hélicoïdaux tournés (80, 92),
2) une orientation angulaire opposée par rapport aux deux éléments hélicoïdaux tournés (80, 92), et
3) quatre segments rectilignes allongés (22) accouplés de manière rigide bout à bout selon une configuration hélicoïdale, formant une rotation simple et sensiblement complète autour de l'axe ; les au moins deux éléments hélicoïdaux tournés (30, 92) et le au moins un élément hélicoïdal inverse tourné (98) formant un deuxième carré lorsqu'on les observe transversalement le long de l'axe longitudinal commun (14), le deuxième carré étant tourné par rapport au premier.

2. Un membre structural (10) selon la revendication 1, dans lequel tous les éléments hélicoïdaux ont des fils de fibre continus et dans lequel les éléments hélicoïdaux sont fixés les uns aux autres à des intersections en chevauchant les fibres des éléments hélicoïdaux.

3. Un membre structural (10) selon la revendication 1, dans lequel les éléments hélicoïdaux définissent un intérieur creux sensiblement dépourvu de matière.

4. Un membre structural (10) selon la revendication 1, dans lequel les éléments hélicoïdaux définissent des ouvertures entre eux.

5. Un membre structural (10) selon la revendication 1, dans lequel les éléments hélicoïdaux définissent un membre tubulaire imaginaire de section transversale carrée.

6. Un membre structural (10) selon la revendication 1, dans lequel les segments (22) des éléments hélicoïdaux forment un membre tubulaire imaginaire ayant une section transversale d'une étoile à huit pointes quand on les observe le long de l'axe longitudinal commun (14).

7. Un membre structural (10) selon la revendication 1, comprenant également : une plaque d'extrémité (120) fixée à une extrémité des éléments hélicoïdaux (30, 32, 34, 80, 92, 98) pour fixer les éléments hélicoïdaux à un autre objet.

8. Un membre structural (10) selon la revendication 7, dans lequel les éléments hélicoïdaux ont des fils de fibre continus et dans lequel la plaque d'extrémité (120) est fixée en enveloppant les fils de fibre continus autour de la plaque d'extrémité.

9. Un membre structural (10) selon la revendication 7, dans lequel la plaque d'extrémité (120) inclut un périmètre (122), plusieurs indentations (123a) formées autour du périmètre pour recevoir des fils de fibre et plusieurs trous (121) pour fixer la plaque d'extrémité à un autre objet.

10. Un membre structural (10) selon la revendication 1, dans lequel les éléments hélicoïdaux et les segments forment un motif répété de triangles et de tétrahèdres ; et comprenant également :
un connecteur (180), fixé aux éléments hélicoïdaux et aux segments, pour fixer d'autres objets aux éléments hélicoïdaux et aux segments, le connecteur étant allongé et ayant une forme transversale sensiblement triangulaire, le connecteur passant par au moins deux des triangles formés par les éléments hélicoïdaux et les segments.

11. Un membre structural (10) selon la revendication 1, dans lequel les axes sont verticalement orientés, une extrémité inférieure est fixée à une surface d'appui et une extrémité supérieure se trouve au-dessus de l'extrémité inférieure, et comprenant également un autre objet fixé à l'extrémité supérieure sélectionné parmi les suivants : un panneau de signalisation avec des indices ; un membre d'utilitaire horizontal configuré pour porter des lignes utilitaires ; une source lumineuse.

12. Un membre structural (10) selon la revendication 1, dans lequel le au moins un élément hélicoïdal inverse (34) forme un angle par rapport aux au moins deux éléments hélicoïdaux de plus d'environ 60 degrés.

13. Un membre structural (10) selon la revendication 12, dans lequel le au moins un élément hélicoïdal inverse (34) forme un angle par rapport aux au moins deux éléments hélicoïdaux de plus d'environ 75 degrés.

14. Un membre structural (10) selon la revendication 1, dans lequel les membres hélicoïdaux sont latéralement flexibles et pliables entre :
1) une première position rectiligne dans laquelle les axes sont sensiblement rectilignes ; et
2) une deuxième position arquée dans laquelle les axes sont sensiblement arqués.

15. Un membre structural (10) selon la revendication 14, dans lequel les membres hélicoïdaux stockent l'énergie dans une des positions.

16. Un membre structural (10) selon la revendication 14, dans lequel les membres hélicoïdaux sont rotationnellement rigides autour des axes longitudinaux.

17. Un membre structural (10) selon la revendication 1, dans lequel les au moins deux éléments hélicoïdaux espacés l'un de l'autre possèdent un axe arqué commun et dans lequel le au moins un élément hélicoïdal inverse (34) possède un axe arqué commun avec au moins deux éléments hélicoïdaux (30, 32).

18. Un membre structural (10) selon la revendication 17, dans lequel les axes arqués sont circulaires.

19. Un membre structural (10) selon la revendication 17, dans lequel les axes arqués comprennent une première courbe et une deuxième courbe différente.

20. Un membre structural (10) selon la revendication 1, dans lequel les segments de chaque élément hélicoïdal ont une longueur séquentiellement décroissante le long des axes, de manière telle que le membre structural se termine en pointe.

21. Un membre structural (10) selon la revendication 1, dans lequel les éléments hélicoïdaux comportent de la fibre et sont souples et pliables jusqu'à ce qu'ils soient imprégnés d'une matrice en résine.

22. Un membre structural (10) selon la revendication 21, dans lequel les éléments hélicoïdaux comprennent plusieurs fils de fibre joints ensemble.

23. Un membre structural (10) selon la revendication 1, dans lequel le membre structural est configuré comme un cadre de bicyclette et possède plusieurs membres, qui vont chacun jusqu'à et entre au moins un de ce qui suit :
a) un emplacement de guidon (500) configuré pour être fixé à un guidon (502) et une fourche avant (504) ;
b) un emplacement de siège (506) configuré pour être fixé à un siège (508) ;
c) un emplacement de pédale (510) configuré pour être fixé à un ensemble pédale (512) ; et
d) un emplacement de roue arrière (514) configuré pour être fixé à une roue arrière (516).

24. Un procédé pour former un membre structural (10) selon n'importe laquelle des revendications précédentes, se composant des opérations suivantes :
a) se procurer un mandrin (700) ;
b) envelopper une fibre (702) autour du mandrin (700) afin de créer au moins deux éléments hélicoïdaux, chaque élément comportant quatre segments rectilignes allongés, les au moins deux éléments hélicoïdaux ayant un axe longitudinal commun, une orientation angulaire commune autour de l'axe et formant une seule rotation sensiblement complète autour de l'axe ;
c) envelopper une fibre (702) autour du mandrin (700) afin de créer au moins un élément hélicoïdal inverse ayant quatre segments rectilignes allongés ayant un axe longitudinal commun avec les au moins deux éléments hélicoïdaux, mais dans une orientation angulaire opposée et formant une seule rotation sensiblement complète autour de l'axe ;
d) envelopper une fibre (702) autour du mandrin (700) afin de créer au moins deux éléments hélicoïdaux tournés, tournés par rapport aux au moins deux éléments hélicoïdaux et au moins un élément hélicoïdal inverse, chaque élément comportant quatre segments rectilignes allongés, les au moins deux éléments hélicoïdaux tournés ayant un axe longitudinal commun, une orientation angulaire commune autour de l'axe et formant une seule rotation sensiblement complète autour de l'axe ;
e) envelopper une fibre (702) autour du mandrin (700) afin de créer au moins un élément hélicoïdal inverse tourné, tourné par rapport aux au moins deux éléments hélicoïdaux et au moins un élément hélicoïdal inverse, l'élément hélicoïdal inverse tourné ayant quatre segments rectilignes allongés, ayant un axe longitudinal commun avec les au moins deux éléments hélicoïdaux tournés, mais dans une orientation angulaire opposée et formant une seule rotation sensiblement complète autour de l'axe ;
f) ajouter une matrice à la fibre ; et
g) faire sécher la matrice.

25. Un procédé selon la revendication 24, dans lequel l'opération consistant à se procurer un mandrin suppose également de :
se procurer un mandrin (700) ayant un noyau allongé (704) et plusieurs têtes (706) disposées longitudinalement et radialement autour du noyau, chaque tête étant configurée pour recevoir et conserver des fibres (702) pour au moins deux éléments hélicoïdaux opposés et comportant quatre indentations en diagonale (710), à savoir deux indentations en diagonale par élément hélicoïdal.

26. Un procédé selon la revendication 24, se composant également de l'opération suivante :
envelopper une fibre (702) sur une longueur du mandrin (700) afin de créer au moins un élément longitudinal parallèle aux axes longitudinaux et dans lequel l'opération consistant à se procurer un mandrin suppose également de :
se procurer un mandrin ayant un noyau allongé (704) et plusieurs têtes (706) placées longitudinalement et radialement autour du noyau, chaque tête étant configurée pour recevoir et conserver des fibres (702) pour au moins deux éléments deux hélicoïdaux opposés et au moins un élément longitudinal et comportant au moins six indentations (710), dont deux indentations en diagonale par élément hélicoïdal et deux indentations pour l'élément longitudinal.

27. Un procédé selon la revendication 24, dans lequel l'opération consistant à se procurer un mandrin suppose également de se procurer un mandrin démontable (720) ayant :
a) un tube creux allongé (722) comportant plusieurs trous (726),
b) un noyau allongé (730) amovible à l'intérieur du tube (722),
c) plusieurs inserts (732) amovibles entre le noyau (730) et le tube (722), ayant plusieurs trous (734),
d) plusieurs broches (728) amovibles dans les trous (726, 734) du tube et les inserts, et
e) plusieurs têtes (724) placées sur les broches (728) ; et supposant également les opérations suivantes :
a) retirer le noyau du tube après le séchage ;
b) retirer les inserts du noyau ;
c) déplacer les broches par les trous du tube ;
d) retirer le tube ; et
e) retirer les têtes.
